(19) Europäisches Patentamt
European Patent Office
Office européen des brevets

(11) EP 0 482 207 B1

(12) **EUROPEAN PATENT SPECIFICATION**

(45) Date of publication and mention of the grant of the patent:
**24.07.1996 Bulletin 1996/30**

(21) Application number: **91907508.5**

(22) Date of filing: **12.04.1991**

(51) Int Cl.6: **G02F 1/01**, G02F 1/35

(86) International application number:
**PCT/JP91/00487**

(87) International publication number:
**WO 91/16658 (31.10.1991 Gazette 1991/25)**

# (54) LAMINATED ORGANIC NONLINEAR OPTICAL CRYSTAL AND PRODUCTION THEREOF

ORGANISCHER NICHTLINEAR-OPTISCHER KRISTALL MIT SCHICHTSTRUKTUR UND SEINE HERSTELLUNG

CRISTAL OPTIQUE ORGANIQUE LAMINE NON LINEAIRE ET PROCEDE DE FABRICATION

(84) Designated Contracting States:
**AT BE CH DE DK ES FR GB GR IT LI LU NL SE**

(30) Priority: **13.04.1990 JP 98357/90**
**28.11.1990 JP 327800/90**
**29.11.1990 JP 335455/90**

(43) Date of publication of application:
**29.04.1992 Bulletin 1992/18**

(73) Proprietor: **TORAY INDUSTRIES, INC.**
**Tokyo 103 (JP)**

(72) Inventors:
- **GOTOH, Tetsuya, 40-17, Nango 2-chome Shiga 520 (JP)**
- **FUKUDA, Seiji, 10-A8-32, Sonoyama 2-chome Shiga 520 (JP)**
- **MATAKI, Hiroshi, 5-11, Aoyama 1-chome Shiga 520 (JP)**
- **TSUNEKAWA, Tetsuya, 103-35, Setahashimoto-cho Shiga 520-21 (JP)**
- **YAMASHIKI, Tomoya, 1-1, Ichiriyama 1-chome Shiga 520-21 (JP)**

(74) Representative: **Kador & Partner**
**Corneliusstrasse 15**
**80469 München (DE)**

(56) References cited:
**EP-A- 0 301 411**
**EP-A- 0 415 278**
**EP-A- 0 442 796**
**JP-A- 1 200 235**
**JP-A- 2 160 697**
**JP-A-61 198 136**

- **PATENT ABSTRACTS OF JAPAN vol. 14, no. 269 (P-1059) 11 June 1990 & JP-A-2 077 027**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 482 207 B1

Printed by Jouve, 75001 PARIS (FR)

## Description

### TECHNICAL FIELD

This invention relates to an organic nonlinear optical crystal structure which exhibits second-order nonlinear optical effects such as the frequency conversion effect or linear electro-optic effect (Pockels effect), as well as to the process for producing the same and a second-order nonlinear optical device utilizing the same, which are very useful in the field of optical information processing and optical communications.

More particularly, this invention relates to a multilayer organic nonlinear optical crystal structure which can be used as an optical medium exhibiting second-order nonlinear optical effects, with which the relationships among the refractive indices of the layers in the multilayer crystal and the refractive index profile of an optical waveguide portion can be intentionally and appropriately controlled, which is free from the problems of crystal distortion and breakage (peeling and dropping) encountered in temperature change, and with which a patterned layer with an arbitrary shape suited for the preparation of two-dimensional and three-dimensional nonlinear optical waveguides or other various second-order nonlinear optical devices may be easily provided, as well as to a process for producing the same and to a second-order nonlinear optical device utilizing the same.

### BACKGROUND ART

When a strong electric field (E) such as laser beam is applied to a substance, the substance shows polarization (P) which is expressed by the following general equation:

$$P = \chi^{(1)}E + \chi^{(2)}EE + \chi^{(3)}EEE + \dots \dots$$

(wherein $\chi^{(1)}$ means linear optical susceptibility and $\chi^{(n)}$ (n is an integer of not less than 2) means nonlinear optical susceptibility).
The nonlinear optical effects are those expressed by the high order terms of E, i.e., terms of E of not less than square.

The effects exhibited by the second term are called second-order nonlinear optical effects. Examples of the second-order nonlinear optical effects include frequency conversion effects such as second harmonic generation (SHG) or parametric oscillation, and linear electro-optic effect (Pockels effect). Among the substances which exhibit the second-order nonlinear optical effects, those which can be used for optical uses are called second-order nonlinear optical materials. The second-order nonlinear optical materials are needed to be noncentrosymmetric.

By utilizing the second-order nonlinear optical materials, second-order nonlinear optical devices which are industrially important, such as frequency converters including second harmonic generators (SHG devices) and parametric oscillators, or electro-optic devices such as optical switches and optical modulators can be obtained.

To construct a nonlinear optical device including the second-order and other nonlinear optical devices, it is necessary to give an appropriate structure and relationships among the refractive indices of the elements constituting the structure, which are suitable for controlling the manner of exhibiting the nonlinear optical effects between a light such as laser beam and the nonlinear optical material.

For example, to construct a two-dimensional waveguide (planar nonlinear optical waveguide), three-dimensional optical waveguide (three-dimensional or channel nonlinear optical waveguide), a grating coupler or the like, it is necessary to prepare a desired pattern (e.g., G.I. Stegeman and C.T. Ceaton, "Nonlinear Integrated Optics", J. Appl. Phys., 58, R57-R58 (1985); Hiroshi NISHIHARA eds., "Optical Integrated Circuits", Ohm Publishing Co., (1985)) for inducing a large nonlinear optical effect by propagating a light such as laser beam in the desired direction or by maintaining the high energy density of the light so as to induce an effective interaction between the light and the nonlinear optical material.

It is necessary that a two-dimensional nonlinear optical waveguide has a refractive index higher than its environment and thickness from sub-micrometers to several tens of micrometers. It is necessary that a three-dimensional nonlinear optical waveguide has a refractive index higher than its environment and its dimension of height and width from sub-micrometers to several tens of micrometers and length longer than several hundreds micrometers. Representative three-dimensional waveguides are shown in Figs. 20 - 22.

Because of this necessity, a train of technique for preparing an optical waveguide such as a technique for compiling nonlinear optical materials, a technique for patterning a nonlinear optical material into the desired pattern, a technique for topically changing the refractive index of a nonlinear optical material, or a technique for intentionally and suitably controlling the refractive index profile of the optical waveguide portion (gradient of refractive index in the graded-index type or the difference in the refractive indices in the step-index type) is required for preparing a nonlinear optical waveguide.

The second-order nonlinear optical materials exhibiting frequency conversion effect or linear electro-optic effect include inorganic ferroelectric crystals and organic crystals (e.g., "Research on nonlinear optical materials: an assessment" vol. 26, No. 2, p. 211-234, Applied Optics, 1987). These crystals are noncentrosymmetric.

The method for preparing various nonlinear optical waveguides and grating couplers from the inorganic ferroelectric crystals has been established. For example, as for lithium niobate ($LiNbO_3$), methods for increasing the refractive index of the optical waveguide portion such as thermal diffusion of Ti (titanium) and proton-exchange method are employed (see "Optical Integrated Circuits", supra).

However, since the second-order nonlinear optical effects of the inorganic ferroelectric crystals are small, there is a problem that the performance of the prepared device is poor or the size of the device is large and so integration of the device is difficult.

On the other hand, as for organic crystals which have larger second-order nonlinear optical effects and higher responding speed than the inorganic ferroelectric crystals and so which are expected to be employed for the preparation of second-order nonlinear optical devices with high performance, the methods for the preparation of various nonlinear optical waveguides and grating couplers employed for the inorganic ferroelectric crystals cannot be applied to the organic crystals as they are. Up to now, no effective methods have been found.

The conventional nonlinear optical waveguides made of an organic crystal include those prepared by utilizing crystal growth from solution phase or melt phase employing a mold, such as those represented by the two-dimensional (planar) or three-dimensional (channel) optical waveguides prepared by utilizing the crystal growth from solution phase or melt phase between glass substrates (e.g., T. Kondo et al., Japanese Journal of Appl. Phys., vol. 28, 1622-1628 (1989)) or in a glass capillary (e.g., P. Kerkoc et al., Appl. Phys. Lett., 54, 487 (1989), P.V. Vidakovic et al., J. Opt. Soc. Amer. B., vol. 4, No. 6, 998 (1987)). Further, the conventional method for preparing a grating coupler from an organic crystal include the so called replica method in which an organic crystal is grown on a preliminarily prepared inorganic substrate having a grating pattern, and the method provided by the present inventors in which an organic crystal in the form of a thin film on an inorganic substrate such as a glass plate is etched (Japanese laid-open patent application (Kokai) Nos. 2-233600 and 3-21019).

However, the nonlinear optical devices prepared by these conventional methods have the following essential and fatal drawbacks with respect to the function and stability:

i) Since the absolute values of the refractive indices or the wavelength dependence of the inorganic materials such as glass and of the organic crystal are largely different, the desired relationships among the refractive indices (differences in refractive indices) are difficult to obtain.
ii) Since the difference in the thermal expansion coefficients of the inorganic substrate such as glass and of the organic crystal is large, the problem of the crystal distortion or breakage (peeling and dropping) in the temperature change due to the difference in the thermal expansion coefficients cannot be avoided. The conventional methods have the following essential and fatal drawbacks also with respect to crystal growth (production of crystal):
iii) Crystal growth on an amorphous substrate is not easy, so that it is impossible to prepare a large or long crystal.
iv) The orientation or the location of the crystal growth cannot be controlled.
v) The thickness of the thin film organic crystal grown cannot be precisely controlled.

In order to overcome these problems, the present inventors previously developed a process for producing an organic single crystal by an orientation-controlled heteroepitaxial growth of an organic compound employing polydiacetylene single crystal as the substrate crystal (Japanese laid-open patent application (Kokai) No. 2-160697). Although this method is an excellent method which overcomes the above-mentioned problems ii) to v), this method has a problem that the single crystal in the form of a thin film grown on the polydiacetylene single crystal cannot be used as an optical waveguide as it is since the refractive index of the polydiacetylene single crystal is higher than that of the single crystal of the organic compound in a wide wavelength range.

The present inventors disclosed in Japanese patent application No. 1-199761 and in Japanese laid-open patent application (Kokai) No. 3-31816 the direction of the plane of polarization of the light and the direction of the external electric field, which are necessary for preparing a high performance second-order nonlinear optical device using a crystal of 4'-nitrobenzylidene-3-alkanoylamino-4-methoxyaniline as a high performance second-order nonlinear optical device utilizing an organic crystal. However, the guided-wave device having a nonlinear optical waveguide made of 4'-nitrobenzylidene-3-alkanoylamino-4-methoxyaniline crystal on a substrate such as a glass plate does not overcome all of the above-mentioned problems.

That is, for the organic crystals having larger second-order nonlinear optical effects and higher responding speed than the inorganic ferroelectric crystals, which are expected to be employed for the preparation of high performance various second-order nonlinear optical devices, the nonlinear optical waveguide and process of producing the same, which are suited for the preparation of the second-order nonlinear optical devices, have not been established, so that there is no concrete method for applying the organic crystals to various second-order nonlinear optical devices.

DISCLOSURE OF THE INVENTION

An object of the present invention is to provide an organic nonlinear optical crystal structure and process for producing the same, which organic nonlinear optical crystal overcomes all of the above-mentioned problems (i) - (v), that have the following features:

(1) The orientation of the crystal and the thickness of the waveguide can be precisely controlled and the designing and formation of a waveguide optimized for the given function of the device are easy, so that production yield is high and the reproduction of performance is good;
(2) The operable wavelength range is wide or the tolerance to the fluctuation of light wavelength is large;
(3) There is substantially no problem about the crystal distortion or the breakage (peeling and dropping) in temperature change, so that the reliability is high;
(4) The difference in the refractive indices between an optical waveguide and its environment can be intentionally and suitably adjusted, so that the degree of freedom in the designing of the device is large; and
(5) It is easy to provide the desired pattern such as nonlinear optical waveguide or grating coupler so that the crystal is suited for the preparation of various second-order nonlinear optical devices.

Further, another object of the present invention is to provide a second-order nonlinear optical device such as a frequency converter or electro-optic device from the excellent organic nonlinear optical crystal provided by the present invention, which device has the following features:

(6) The device has high performance; and
(7) It is easy to make the device compact and integrated.

BRIEF DESCRIPTION OF THE DRAWINGS

Fig. 1(a) is a cross-sectional view showing a multilayer organic nonlinear optical crystal having a structure of substrate layer single crystal/single crystal layer grown of an arbitrary one or more compounds/air layer;
Fig. 1(b) is a cross-sectional view showing a multilayer organic nonlinear optical crystal having a multilayer structure in which the layers have different refractive indices;
Figs. 2 - 8 show an example of a production process of a multilayer organic nonlinear optical crystal having a patterned layer prepared by the pattern growth employing a photoresist pattern, wherein

Fig. 2 shows the first step in the process,
Fig. 3 shows the second step in the process,
Fig. 4 shows the third step in the process,
Fig. 5 shows the fourth step in the process,
Fig. 6 shows the fifth step in the process,
Fig. 7 shows the sixth step in the process, and
Fig. 8 shows the seventh step in the process;

Figs. 9 - 15 show an example of a production process of a multilayer organic nonlinear optical crystal having a patterned layer prepared by an etching process utilizing a photoresist pattern, wherein

Fig. 9 shows the first step in the process,
Fig. 10 shows the second step in the process,
Fig. 11 shows the third step in the process,
Fig. 12 shows the fourth step in the process,
Fig. 13 shows the fifth step in the process,
Fig. 14 shows the sixth step in the process, and
Fig. 15 shows the seventh step in the process;

Fig. 16 shows the crystal orientation of the substrate crystal layer and single crystal layer grown constituting a multilayer crystal, which were determined by double-crystal X-ray diffractometry;
Fig. 17 shows the structure of an optical modulator using an electro-optic device made of a multilayer crystal;
Fig. 18 shows the structure of a frequency converter;
Fig. 19 shows the structure of a total internal reflection (TIR) switch; and
Figs. 20 - 22 show representative examples of three-dimensional optical waveguides, wherein

Fig. 20 shows a capillary type waveguide (crystal cored fiber) which is a representative example of a device prepared by crystal growth in a mold,

Fig. 21 shows an example of an X-shaped waveguide which is a ridge optical waveguide prepared by an etching process, and

Fig. 22 shows an example of a Y-shaped waveguide which is a ridge optical waveguide prepared by an etching process.

BEST MODE FOR CARRYING OUT THE INVENTION

The present inventors intensively made an effort to overcome all of the above-described problems associated with organic nonlinear optical crystals to reach a conclusion that the problems concerning the function and stability of the prepared nonlinear optical waveguide, which problems are due to the facts that

i) the refractive indices or the wavelength dependence of the inorganic materials and the organic crystals are largely different, and

ii) the thermal expansion coefficients of the inorganic materials such as glass and the organic crystals are largely different,

would be overcome by

A) combining the organic crystal layer with an organic substrate, preferably with an organic crystal substrate, which has almost the same thermal expansion coefficient as the organic crystal layer, and

B) employing as an organic material having a refractive index and its wavelength dependence similar to the organic crystal a noncentrosymmetric crystal made of an organic molecule having the similar optical characteristics to the organic molecule constituting the organic crystal, that is, by employing a multilayer structure of organic nonlinear optical crystals.

By trials and errors based on the presumption just mentioned above, the present inventors found the following two processes for producing a multilayer organic nonlinear optical crystal:

I) A plurality of noncentrosymmetric organic single crystals preliminarily grown are compiled by an appropriate method such as intimate contact, contact with pressure, welding, solvent welding or adhesion.

II) Utilizing the heteroepitaxial growth among the organic compounds which constitute the noncentrosymmetric organic single crystals, a noncentrosymmetric organic single crystal is grown on a crystal surface of another noncentrosymmetric organic single crystal (this crystal may be another noncentrosymmetric organic single crystal layer previously grown by the heteroepitaxial growth).

The heteroepitaxial crystal growth among the organic compounds forming the noncentrosymmetric organic single crystal layers and the formation of an isomorphous mixed single crystal which will be later described in detail were first found by the present inventors. By combining these, a multilayer organic nonlinear optical crystal with which

iii) the problem of the crystal growth on an inorganic substrate such as glass, that is, the problem encountered in enlarging or lengthening the crystal;

iv) the problem concerning the growth orientation of the crystal or location of growth of the crystal; and

v) the problem concerning the precise control of the thickness of the grown thin film organic crystal, are all overcome.

Thus, for the organic crystals having larger second-order nonlinear optical effects and higher responding speed than the inorganic ferroelectric crystals, which are expected to be employed for the preparation of high performance various second-order nonlinear optical devices, the present invention provides a multilayer organic nonlinear optical crystal which is very effective for the preparation of second-order nonlinear optical devices, a process for producing the same, and a second-order nonlinear optical device employing a multilayer organic nonlinear optical crystal having an intentionally and suitably constructed structure and refractive index relationships.

The present invention will now be described.

The term "noncentrosymmetric organic single crystal" herein means an organic single crystal constituted by one or more organic molecules, which does not have a center of symmetry. To have a crystal structure having no center of symmetry is a necessary condition for the materials having second-order nonlinear optical properties.

The refractive indices and thermal expansion coefficients of noncentrosymmetric organic single crystals have very strong anisotropy. Thus, in the present invention, all of the organic single crystal layers constituting the multilayer crystal must be crystals having noncentrosymmetric crystal structures in order to attain a multilayer structure constituted by

the combination of single crystal layers having similar refractive indices and thermal expansion coefficients.

At least one layer of the single crystal layers must have an optically smooth crystal surface in order that the multilayer crystal can be used for optical purposes. The term "optically smooth crystal surface" herein means a low scattering crystal surface suited for impinging, emitting and propagating light. The optically smooth crystal surface is not necessarily a flat surface, but may be a curved surface such as a part of sphere or cylinder. The optical smooth crystal surface preferably has a surface roughness of not more than twice the wavelength of the light used. The smooth surface includes those obtained by cleavage, cutting and polishing of a single crystal, those obtained by processing such as pattern growth and pattern etching, and naturally grown crystal surfaces which are carefully grown and recovered.

It is necessary that at least two layers of the single crystal layers have an optically contacting constitution. The term "an optically contacting constitution" herein means a structure in which the single crystal layers optically influence each other. More particularly, for example, a structure which attains that when a light is propagated in one of the single crystal layers, the light is propagated while feeling the refractive index of another single crystal layer.

Although the compounds constituting a plurality of noncentrosymmetric organic single crystals to be compiled are not restricted, the single crystal layers may preferably be constituted by organic molecules having the same kind of optical properties. In other words, it is preferred to constitute the multilayer crystal with noncentrosymmetric organic single crystals made of organic molecules having similar degree of polarization (polarity) and similar molecular structures. Any combination of single crystals satisfying this requirement may be employed. It is best preferred to employ the same kind of noncentrosymmetric single crystals of derivative molecules. The term "the same kind of noncentrosymmetric single crystals" herein means that the single crystals have the same symmetry defined in crystallography. By employing the same kind of noncentrosymmetric single crystals, as described later, a multilayer organic nonlinear optical crystal can be produced by the heteroepitaxial growth, the thickness of the layers of the multilayer organic nonlinear optical crystal obtained by this production process can be precisely controlled, and so on, so that the multilayer organic nonlinear optical crystal with best properties and characteristics may be attained.

The 4'-nitrobenzylidene-3-alkanoylamino-4-methoxyaniline, 4'-nitrobenzylidene-3-halogenoalkanoylamino-4-methoxyaniline and the compounds which are the same as these compounds just mentioned above except that at least a part of hydrogen atoms therein is substituted with deuterium (i.e., the compounds disclosed by the present inventors in Japanese laid-open patent application (Kokai) No. 63-113429), which are preferably used in the present invention, include those compounds in which the "R" in the radical "-NHCOR" representing the alkanoylamino group or halogenoalkanoylamino group of the above-mentioned compounds is a $C_1$ or $C_2$ alkyl group or a $C_1$ or $C_2$ haloalkyl group, which compounds include 4'-nitrobenzylidene-3-acetamino-4-methoxyaniline (MNBA), 4'-nitrobenzylidene-3-ethylcarbonylamino-4-methoxyaniline (MNBA-Et), 4'-nitrobenzylidene-3-chloroacetamino-4-methoxyaniline (MNBA-Cl), 4'-nitrobenzylidene-3-bromoacetamino-4-methoxyaniline (MNBA-Br), 4'-nitrobenzylidene-3-(β-chloroethyl)carbonylamino-4-methoxyaniline (MNBA-ClEt) and the like as well as the compounds which are the same compounds just mentioned above except that at least a part of hydrogen atoms therein is substituted with deuterium.

The crystals of the above-mentioned benzylideneaniline-based organic nonlinear optical compounds have monoclinic crystal structures having similar crystal parameters. Further, the properties of the compounds are similar and the compounds constitute crystals with high polarities. By contacting an arbitrary compound belonging to the benzylideneaniline-based organic nonlinear optical compounds with a crystal surface of another arbitrary compound belonging thereto in vapor phase, solution phase or melt phase, good heteroepitaxial growth occurs in any of the vapor phase, solution phase and melt phase methods since the reciprocal affinities among the compounds are very high.

Further, the compounds in the number of "n" (wherein "n" means a natural number not less than 2) selected from these compounds form isomorphous mixed crystals.

The refractive indices of the crystals of the benzylideneaniline-based organic nonlinear optical compounds are not largely different and their wavelength dependencies are also similar. Therefore, these crystals have especially preferred optical characteristics for constituting a nonlinear optical waveguide by compiling the crystals thereof. It is well-known that introduction of a halogen atom raises the refractive index. In this case, the degree of the raising of the refractive index by the halogen atoms is generally in the order of

$$F < H < Cl < Br < I.$$

Introduction of deuterium somewhat lowers the refractive index. Although the introduction of deuterium does not bring about a prominent effect as the introduction of a halogen atom, it may be employed similarly.

The relationships among the refractive indices of the crystals of the representative benzylideneaniline-based organic nonlinear optical compounds, which depend on the wavelength, but are usually

MNBA-Et < MNBA < MNBA-ClEt < MNBA-Cl < MNBA-BrEt < MNBA-Br

In view of the size of optical waveguides, the difference in refractive indices between an optical waveguide and its environmental media is usually preferred to be 0.001 to 0.1. Appropriate combinations of the benzylideneaniline-based organic nonlinear optical compounds satisfy this requirement. For example, the difference in the refractive indices of

MNBA and MNBA-Et at a wavelength of 633 nm is 0.007 ± 0.003. Therefore, by arranging two single crystal layers constituted by these compounds adjacent each other and making the single crystal layer having the higher refractive index have an appropriate thickness, the single crystal layer having the higher refractive index functions as an optical waveguide.

In cases where a single crystal layer is constituted by an isomorphous mixed single crystal of these two compounds, the refractive index of the single crystal layer may be selected within a range, in the maximum, of 0.007 ± 0.003, so that the difference in the refractive indices between the optical waveguide and its environmental media may be appropriately controlled with respect to the size of the optical waveguide.

Thus, the combination and the ratio of arbitrary compounds in the number of n can be intentionally and optimally selected so as to attain a suitable difference in the refractive indices between the optical waveguide and its environment under the wavelength of the laser beam or the light to be used.

In this case, by selecting the components of the isomorphous mixed single crystal grown so that the refractive index thereof is higher than the substrate layer crystal and by appropriately adjusting the thickness thereof, the isomorphous mixed single crystal layer grown functions as a nonlinear optical waveguide. Alternatively, the refractive index of the substrate layer crystal may be intentionally and optimally adjusted by constituting the substrate layer crystal by arbitrary compounds in the number of n so that it is suitably different from the refractive index of the single crystal layer of a single compound of the waveguide.

The term "isomorphous mixed single crystal" herein means a crystal containing a plurality of compounds at a ratio, which is formed by isomorphous substitution. The term "isomorphous substitution" herein means a substitution mode wherein the crystal structure is not drastically changed, or the symmetry of the crystal or the crystal system is not changed even if the compound constituting a crystal is substituted with another compound at a certain ratio.

Other than the benzylideneaniline derivatives, there are combinations of compounds by which a multilayer organic nonlinear optical crystal can be produced by the heteroepitaxial growth. Examples thereof include N-(4-nitrophenyl)-L-prolinol (abbreviation: NPP) and N-[2-(5-nitropyridyl)]-L-prolinol (abbreviation: PNP) as well as stilbazolium derivatives.

In most of the compounds which constitute organic nonlinear optical crystals, the crystal structures of these compounds and their derivatives are different so that the symmetry of the crystals or the crystal systems are different. Between the derivatives having such a large difference in the crystal structures, it is difficult to grow a noncentrosymmetric organic single crystal layer by vapor phase, solution phase or melt phase method on an optically smooth crystal surface of an arbitrary noncentrosymmetric organic single crystal layer, which noncentrosymmetric organic single crystal layer grown is made of a compound different from the compound constituting the substrate layer single crystal and which has a similar crystal structure (crystal parameters) to that of the substrate layer single crystal, that is so called heteroepitaxial growth.

More than one noncentrosymmetric organic single crystal layers preliminarily grown, which may include those grown by the heteroepitaxial growth, may be compiled by a method such as intimate contact, contact with pressure, welding, solvent welding or adhesion. In this case, as will be described in the examples, the compilation can be carried out by employing an appropriate solvent or an appropriate temperature. The crystal surface and the orientation of the compilation may easily be selected so as to attain the desired relationships of refractive indices and thermal expansion coefficients between the layers. Examples of the compounds constituting the noncentrosymmetric organic single crystal layers to be used in this method include 2-methyl-4-nitroaniline (supra, abbreviation: MNA), N-(4-nitrophenyl)-L-prolinol (abbreviation: NPP), N-[2-(5-nitropyridyl)]-L-prolinol (abbreviation: PNP), 2-acetylamino-4-nitro-N,N-dimethylaniline (abbreviation: DAN), 2-(α-methylbenzylamino)-5-nitropyridine (abbreviation: MBANP), 4-aminobenzophenone (abbreviation: ABP), 4-methyl-7-diethylaminocoumarin, stilbazolium derivatives such as 4'-dimethylamino-N-methyl-4-stilbazolium-methosulfate (abbreviation: DMSM), 4'-nitrobenzylidene-4-methylaniline, MNBA derivatives such as 4'-nitrobenzylidene-3-acetamino-4-methoxyaniline (abbreviation: MNBA), 4-methoxy-3-methyl-4'-nitrostilbene (abbreviation: MMNS or MMONS), 4-bromo-4'-nitrostilbene, and benzoxazinobenzoxazine derivatives such as 3,9-dinitro-5a,6,11a,12-tetrahydro[1,4]benzoxyazino[3,2-b][1,4]benzoxazine (abbreviation: DNBB). Other small number of examples are detailed in "Nonlinear Optical Properties of Organic Molecules and Crystals", ed. by D.S. Chemla and J. Zyss, Academic Press, 1987, vol. 1, Chapter II-3, p. 227-296. However, noncentrosymmetric organic single crystals of the compounds other than mentioned above may also be employed.

Even if the multilayer organic nonlinear optical crystal prepared as mentioned above contains an adhesive layer between the single crystal layers, if a light propagated in one of the single crystal layers can be propagated with feeling the refractive index of another single crystal layer, the layers have an optically contacting constitution as defined in the present invention. Thus, in cases where the multilayer organic nonlinear optical crystal has an adhesive layer, it is preferred that the adhesive layer be made of an organic material having a thermal expansion coefficient similar to those of the single crystal layers and that the thickness thereof be thin enough to attain the optical contact between the single crystal layers.

The present inventors established a process for producing the multilayer organic nonlinear optical crystal or the

second-order nonlinear optical device utilizing the heteroepitaxial growth as hereinbelow described (Figs. 1(a) and 1 (b)). The process will now be described taking the benzylideneaniline derivative as an example.

Compounds in the number of n (wherein n means a natural number of not less than 2) are chosen from the group consisting of benzylideneaniline-based organic nonlinear optical compounds and a crystal of one or more of these compounds is grown on an optically smooth crystal surface of the substrate layer which is a noncentrosymmetric single crystal of one or more of these compounds by vapor phase, solution phase or melt phase method. The compounds constituting the noncentrosymmetric single crystal layer grown is so selected that the refractive index of the grown layer is different from that of the substrate single crystal layer.

By this method, a multilayer organic nonlinear optical crystal having a structure of (substrate layer single crystal/ grown single crystal layer of arbitrary one or more compounds/air layer) as shown in Fig. 1(a) is obtained.

In this case, by selecting the component compounds of the single crystal layer grown so that the refractive index thereof is larger than that of the substrate single crystal layer and by making the single crystal layer grown have an appropriate thickness, the single crystal layer grown functions as a two-dimensional nonlinear optical waveguide as it is. Here, the difference in the refractive indices is defined for all principal axes of refractive index which influence the propagating light. In this case, it is preferred to employ a substrate layer single crystal having a principal axis of refractive index substantially perpendicular to the optically smooth crystal surface. The single crystal layer is grown in such a manner that the direction of a principal axis of refractive index of the grown layer is substantially coincident with that of the substrate layer single crystal. Thus, it is preferred to employ the above-described substrate single crystal layer with which a single crystal layer suitable as an optical waveguide for a light propagating in the $T_E$ mode or $T_M$ mode can be grown.

By repeating the deposition and crystal growth of the compounds selected from the compounds in the number of n in such a manner that the refractive index of the (m + 1)th (wherein m means an arbitrary natural number) single crystal layer which is deposited and grown in the (m + 1)th order is different from that of the mth layer, an organic single crystal having a multilayer structure in which the layers have different refractive indices, as shown in Fig. 1(b), may be produced.

The single crystal layer having the higher refractive index and appropriate thickness, which is adjacent to the single crystal layer having the lower refractive index, can be used as a nonlinear optical waveguide. More particularly, if the outermost layer is a single crystal layer having a refractive index higher than that of the adjacent layer and has an appropriate thickness, the outermost layer can be used as a nonlinear optical waveguide. If an intermediate layer other than the substrate layer and other than the outermost layer is a single crystal layer having a refractive index higher than those of the adjacent layers and has an appropriate thickness, the intermediate layer can be used as a nonlinear optical waveguide. On the uppermost layer, an inorganic dielectric, glass, polymer or the like may be provided for the purpose of protection and the like.

The single crystal of an arbitrarily selected compound to be used as the substrate layer may be any single crystal obtained by the known melt methods, solution methods or vapor phase methods. That is, known melt methods include Bridgeman method, cooling methods in crucible such as Stockberger method, rotation pulling methods such as Czochralski method, floating zone method, Bernoulli method and laser-heating crystallization method, and the known heating methods for melting the compound include ordinary heating by using a heater, high frequency heating as well as laser heating which is a topical heating method.

The above-described methods for producing the substrate layer single crystal may be applied for the formation of the grown single crystal layer of the second or higher layer.

The production of the substrate layer single crystal may be carried out on a base which controls the crystal growth orientation, such as an inorganic crystal, semiconductor, metal, ceramics, glass, polydiacetylene single crystal or plastics, or on a base which does not control the crystal growth orientation. Pretreatments such as surface treatment may be performed on the base as required.

In the description below, the substrate layer single crystal and the multilayer crystal in which the layers up to the mth layer have been grown are collectively referred to as "crystal growth substrate" for the purpose of simplicity.

The most important controlling factor in the heteroepitaxial growth is the reciprocal affinity (polarity relationship) between the crystal growth substrate and the molecules contacting the same. As mentioned above, the compounds belonging to the group of benzylideneaniline-based organic nonlinear optical compounds have very strong reciprocal affinities. Thus, any crystal growth method which utilizes the very strong reciprocal affinities of the compounds belonging to the group of benzylideneaniline-based organic nonlinear optical compounds may be employed in the present invention.

A multilayer structure having the desired thickness may be obtained by controlling the crystal growth of each layer so that the crystal layer is grown to the desired thickness. For example, by employing a method for the crystal growth, in which the thickness of the growing crystal can be monitored during the growth or a method in which a membrane thickness monitor is used, a grown crystal layer having the desired thickness can be obtained. This is because that if the thickness of the single crystal layer grown can be known during the crystal growth by using a membrane thickness

monitor, the desired thickness may be attained by stopping the growth when the layer is grown to the desired thickness. As the crystal growth method used here, any of the vapor phase methods, solution methods and melt methods may be employed. Each of these methods has the following features and may be selected depending on the purpose.

In the vapor phase methods, quartz oscillator type vapor deposition monitors and optical membrane thickness monitors may be employed. By using such membrane thickness monitors, the thickness of the layer may be precisely controlled within the range of several nanometers.

The vapor phase methods include gas carrying method, sublimation method, vacuum vapor deposition method, sputtering method, cluster beam method and molecular beam method, and any of these methods may be employed.

In the vapor phase methods, the gas concentration is controlled so as to attain an appropriate growth rate, and the crystal growth substrate is controlled to have a temperature below the melting point thereof, at which no problem is caused by the sublimation of the crystal growth substrate.

Although the gas concentration may be controlled so as to attain an appropriate growth rate by precisely controlling the temperature of the evaporation source, the gas concentration may also be controlled by a method in which the distance between the evaporation source and the crystal growth substrate is controlled or by a method in which the reaching of the organic compound gas to the crystal growth substrate is controlled by providing a shutter or a diaphragm between the evaporation source and the crystal growth substrate.

The arbitrary at least two compounds subjected to the simultaneous crystal growth by the vapor phase methods may be evaporated from the same evaporation source or may be individually evaporated from individual evaporation sources. For the growth of an isomorphous mixed single crystal of step-index type, a plurality of compounds may be evaporated from one evaporation source. For the growth of an isomorphous mixed single crystal of the graded-index type, it is preferred to individually evaporate the compounds from individual evaporation sources because the growth ratio (i.e., the component ratio in the isomorphous mixed single crystal grown) can be individually controlled. Needless to say, an isomorphous mixed single crystal of the step-index type may be obtained by individually evaporating the compounds from individual evaporation sources.

To eliminate the contamination by impurities and to stabilize the growth rate, the vapor phase growth is carried out in a high vacuum (the pressure is preferably not higher than $10^{-2}$ Torr, more preferably not higher than $10^{-4}$). In the vapor phase method in which an inert gas is used as a carrier gas, a gas with high purity (higher than 99.99%) is used for eliminating the contamination by the impurities. The lower the growth rate, the better the quality of the crystal grown, while from the view point of productivity, a high growth rate is preferred. Thus, as a practical growth rate, the growth rate may preferably be not higher than 1 mm/hr.

As the membrane thickness monitor used in the solution methods, optical membrane thickness monitors may be employed. By using such membrane thickness monitors, the thickness of the layer may be precisely controlled within the range of several nanometers. The thickness of the layer may be simply controlled by controlling the time for contacting the substrate with the solution.

Any solution methods such as slow evaporation method, slow cooling method, poor solvent addition method or the like may be employed, and any solvent may be employed. In view of the control of the thickness, a method in which the crystal growth substrate is cooled and is contacted with a saturated solution is preferred.

In cases where arbitrary at least two compounds are simultaneously grown to an isomorphous mixed crystal, a solution containing these compounds is used. This method is preferred since the refractive index of the grown crystal may be easily controlled by controlling the ratio of the compounds dissolved in the solution.

To control the concentration of the solution so as to attain the desired growth rate or depending on whether a multilayer crystal with a stepwise refractive index profile (step-index type) or a multilayer crystal with a distributed refractive index profile (graded-index type) is desired to be produced, it is necessary to select an appropriate solvent system. The solvent system may be a single solvent or a combination of more than one solvents. The solvent system may be basically selected based on the difference in the solubilities of the crystal growth substrate and the compound to be grown to a crystal layer. The temperature is selected from the range in which the dissolving of the crystal growth substrate is not prominent. Slow evaporation method is preferred since the crystal growth can be carried out at a constant temperature satisfying the above-mentioned requirement. It is preferred to use the arbitrary at least two compounds subjected to the simultaneous crystal growth after intentionally precipitating microcrystals by preliminarily making the solution supersaturated and after settling the solution. The crystal growth rate may preferably be not higher than 10 mm/hr.

As the membrane thickness monitor used in the melt methods, optical membrane thickness monitors may be employed. The thickness of the layer may be simply controlled by controlling the time for contacting the substrate with the melt.

In cases where the arbitrary at least two compounds are simultaneously grown by a melt methods to an isomorphous mixed crystal, a melt containing these compounds fused is employed.

By the melt methods, multilayer structures of graded-index type are likely to be formed. In cases where the crystal growth substrate has a melting point higher than that of the compound subjected to the crystal growth, a multilayer

structure of step-index type can be obtained by dipping. In cases where the melting point of the crystal growth substrate is close to or lower than that of the compound subjected to the crystal growth, the substrate is contacted with the melt for a short time or temperature gradient may be given by providing means for cooling the crystal growth substrate. Since the thickness of the crystal layer grown per a unit time can be made large by the melt methods, the melt methods are preferably employed in cases where it is required to make the thickness of the crystal layer grown per a unit time large. To inhibit the degradation and decomposition of the organic material in the fused condition, it is preferred to carry out the crystal growth in an atmosphere of an inert gas. The rate of crystal growth may preferably be not higher than 100 mm/hr.

Even by the solution methods or melt methods, a multilayer structure of graded-index type can be obtained by the following method.

That is, by the solution methods, a multilayer structure of step-index type may be obtained by carrying out the crystal growth in a solution employing a solvent which does not dissolve the crystal growth substrate, and a multilayer structure of graded-index type may be obtained by carrying out the crystal growth in a solution employing a solvent which dissolves the crystal growth substrate.

In the melt methods, the refractive index profile may be intentionally and suitably controlled by adding a specific compound during the crystal growth so as to change the composition of the melt.

Each of the single crystal layers in the multilayer organic nonlinear optical crystal produced as mentioned above is grown in such a manner that its principal axis of refractive index is substantially completely coincident with that of the crystal growth substrate. This can be proved by the existence of an axis of extinction as in the independent single crystal when the light passed through the multilayer crystal is observed with a polarizing microscope under crossed nicol. This is because that, in general, two single crystals are stacked in such a manner that their principal axes of refractive index are not completely coincident, extinction state can never be observed (e.g., Seitaro TSUBOI, "Polarizing Microscope", 1983, published by Iwanami Shoten; F.D. Bloss, "An Introduction to the Methods of Optical Crystallography", Halt, Rinehent and Wilson, New York, 1961).

According to the process of producing the multilayer organic nonlinear optical crystal of the present invention, the single crystal layer is grown in such a manner that its principal axis of refractive index is substantially completely coincident with that of the substrate layer single crystal. In other words, by selecting a crystal surface with the desired orientation as a substrate layer single crystal, since the polar axis (axis of second-order nonlinearity) of the single crystal layer grown is determined by the orientation, propagation in the $T_E$ mode or $T_M$ mode can be attained. Thus, the process of the present invention has an excellent feature that a multilayer organic nonlinear optical crystal which is extremely suited for the preparation of second-order nonlinear optical devices can be produced.

As stated in the item "BACKGROUND ART", in order to propagate a light such as laser beam in the desired direction, to divide or join waves, and to induce a large nonlinear optical effects by maintaining the high energy density of the light so as to cause effective interactions between the light and the nonlinear optical material, it is necessary to form, for example, a three-dimensional (channel) nonlinear optical waveguide. Therefore, it is necessary that the above-described multilayer organic nonlinear optical crystal have the desired shape, that is, that the multilayer organic nonlinear optical crystal contain a patterned layer such as three-dimensional nonlinear optical waveguide or grating coupler.

In the present invention, as a method for forming a patterned layer, pattern growth or pattern etching may preferably be employed.

When a noncentrosymmetric organic crystal is to be compiled on a patterned layer or on an underlayer exposed by etching, the so called heteroepitaxial crystal growth is employed. Since good heteroepitaxial growth can be attained by the group of benzylideneaniline-based organic nonlinear optical compounds (Japanese laid-open patent application (Kokai) No. 63-113429 previously disclosed by the present inventors) which form high performance organic nonlinear optical crystals, these compounds may especially preferably be employed.

As the method for the heteroepitaxial growth, any of the vapor phase methods, solution methods and melt methods may be employed. Details of these methods were described above.

By selecting the compound constituting the patterned layer so that the refractive index of the patterned layer is higher than that of at least one adjacent single crystal layer and by forming the patterned layer so as to have an appropriate thickness, the patterned layer can function as a three-dimensional optical waveguide or a grating coupler. Here, the difference in the refractive indices are defined for all principal axes of refractive index which influence the propagating light. However, it is preferred to employ a substrate layer single crystal having a principal axis of refractive index perpendicular to an optically smooth crystal surface. The single crystal layer is grown in such a manner that its principal axis of refractive index is coincident with that of the substrate layer single crystal.

Thus, in forming a patterned layer by the pattern growth or by the etching of the single crystal layer grown, it is preferred to employ the above-mentioned substrate layer single crystal with which a patterned layer single crystal which is suited as an optical waveguide in which a light can be propagated in the $T_E$ mode or $T_M$ mode can be grown.

The patterned layer which has a high refractive index which is adjacent to at least one low refractive index layer (the special cases where one layer adjacent to the patterned layer is the air layer or a layer such as inorganic dielectric,

glass or polymer provided for the purpose of protection are included), and which has an appropriate thickness can be used as a three-dimensional optical waveguide or as a grating coupler.

In the method utilizing the pattern growth, in the process for producing a multilayer organic nonlinear optical crystal comprising the step of forming a noncentrosymmetric organic single crystal layer on an optically smooth crystal surface of an arbitrary noncentrosymmetric organic single crystal layer in such a manner that the layers optically contact each other; and sequentially forming noncentrosymmetric organic single crystal layers up to the (m + 1)th layer (wherein m represents an arbitrary natural number) in such a manner that the refractive index of the (m + 1)th layer is different from that of the mth layer, the formation of at least one arbitrary single crystal layer is carried out after forming a pattern mask on the surface on which the single crystal layer is to be grown and the single crystal layer is pattern-grown by the so called heteroepitaxial growth. Thereafter, the deposition of layers may be continued.

Needless to say, the patterned layer may be the last layer. Also, the pattern growth may be employed for growing more than one layers. Further, a multilayer organic nonlinear optical crystal having more than one patterned layers by carrying out the pattern growth again after continuing the deposition of layers on a patterned layer. Thus, according to the present invention, not only the two-dimensional integration such as three-dimensional nonlinear optical waveguide or grating coupler, but also three-dimensional integration can be attained.

The pattern mask employed in the pattern growth utilizing the heteroepitaxial crystal growth according to the present invention may be any mask which can prevent the organic compound from contacting the crystal surface on which the crystal growth is performed and thus prevent the deposition of the compound and the crystal growth may be employed. Representative examples thereof include hard masks and photoresist patterns.

These pattern masks and the patterned layer grown have the positive/negative relationship.

In cases where a fine and precise patterning is required as in the case of forming a three-dimensional waveguide or a grating, a resist sensitive to an active electromagnetic wave such as light, electron beam or X-ray is employed and the patterning may be performed by direct drawing or by using a pattern mask formed by lithography. In this case, any pattern mask which is made of a material and has a thickness so that it can retain its function as a mask during the pattern growth process can be employed.

The most convenient pattern masks include resist patterns. However, pattern masks made of a metal such as aluminum or gold, an oxide such as $SiO_2$, or a polymer such as polymethylmethacrylate (PMMA) may be employed too. These pattern masks made of the metal, oxide or the polymer may be formed by the combination of a resist pattern with a dry etching such as reactive ion etching or plasma etching, or with a wet etching.

Examples of the resists which may be suitably employed in the pattern growth according to the present invention are detailed in "Recording Materials and Photosensitive Resins", Gakkai Publishing Center eds., 1979; and in "Photosensitive Polymers", Kodansha eds., 1977.

An example in which a resist pattern is employed will now be described. First, a resist layer is formed by an appropriate method such as spin coating on the crystal surface on which the single crystal layer is to be pattern-grown, and the resist layer is then exposed and developed so as to form the desired resist pattern. Thereafter, the pattern growth is carried out.

The methods which may be employed for the pattern growth are as mentioned above and any of the vapor phase methods, solution methods and melt methods may be employed.

In the vapor phase methods, by appropriately selecting the temperature of the multilayer organic nonlinear optical crystal having the crystal surface on which the patterned single crystal layer is to be grown, the difference between the affinity of the compound to the crystal face and the affinity of the compound to the pattern mask can be emphasized, so that the organic compound is selectively deposited to crystallize only on the portions where the pattern mask is not formed. However, it is necessary to select the temperature from the temperature range in which heteroepitaxial growth well occurs.

In cases where it is necessary to remove the resist pattern after the pattern growth, the resist pattern may be removed by the following method:

i) The resist pattern is exposed to, for example, light or electron beam to make the resist soluble, the soluble resist alone is dissolved and the resist pattern is then removed by using a solvent which does not substantially dissolve the crystal layer; or

ii) The resist pattern is ashed by an appropriate method and removed.

By the method described above, a multilayer organic nonlinear optical crystal having the desired pattern may be obtained.

The methods just mentioned above may also be applied to the cases where a pattern mask made of a metal, oxide or a polymer is needed to be removed after the pattern growth.

In the method utilizing the pattern etching, in the process for producing a multilayer organic nonlinear optical crystal comprising the step of forming a noncentrosymmetric organic single crystal layer on an optically smooth crystal surface

of an arbitrary noncentrosymmetric organic single crystal layer in such a manner that the layers optically contact each other; and sequentially forming noncentrosymmetric organic single crystal layers up to the (m + 1)th layer (wherein m represents an arbitrary natural number) in such a manner that the refractive index of the (m + 1)th layer is different from that of the mth layer, after at least one arbitrary single crystal layer is formed, the single crystal layer is etched to form a patterned layer, and then a noncentrosymmetric organic crystal is formed by the heteroepitaxial growth on the patterned layer (or on the underlayer exposed by the etching). Thereafter, the deposition of layers may be continued.

Needless to say, the patterned layer may be the last layer. Also, the etching may be performed on more than one layers. Further, a multilayer organic nonlinear optical crystal having more than one patterned layers may be produced by carrying out the etching again after continuing the deposition of layers on a patterned layer. Thus, according to the present invention, not only the two-dimensional integration such as three-dimensional nonlinear optical waveguide or grating coupler, but also three-dimensional integration can be attained.

In the present invention, any etching process including the wet etching and dry etching may be employed as long as the etching of the single crystal layer and patterning thereof can be carried out. The patterning may also be carried out by directly exposing a part of the single crystal layer to an etching atmosphere.

However, in cases where a fine and precise patterning is required as in the case of forming a three-dimensional waveguide or grating, the etching is performed by the wet etching or dry etching using a pattern mask. Any pattern mask made of a material and having a thickness, which enables the pattern mask to retain its function as a pattern mask during the wet etching process or dry etching process can be employed. Even if the mask is etched by the solvent or the reactive gas, if the etching rate of the mask is lower than that of the single crystal layer to be patterned under the conditions employed in the etching process, the mask can be employed as the pattern mask.

Usually, in cases where fine and precise pattern formation is required, the pattern mask is preferably formed by lithography.

The most convenient pattern masks include resist patterns. However, pattern masks made of a metal such as aluminum or gold, an oxide such as $SiO_2$, or a polymer such as polymethylmethacrylate (PMMA) may also be preferably employed.

As the methods for patterning organic crystals, the present inventors previously disclosed wet etching process (Japanese laid-open patent application (Kokai) No. 2-233600) and dry etching (Japanese laid-open patent application (Kokai) No. 3-21019) using a resist pattern. These etching methods may suitably be employed in the present invention.

Examples of the resists which may be suitably employed in the pattern etching according to the present invention are detailed in "Recording Materials and Photosensitive Resins", Gakkai Publishing Center eds., 1979; and in "Photosensitive Polymers", Kodansha eds., 1977.

First, a resist layer is formed by an appropriate method such as spin coating on the crystal surface on which the patterned single crystal layer is to be formed, and the resist layer is then exposed and developed so as to form the desired resist pattern. Thereafter, the wet etching or the dry etching is performed.

In the case of wet etching process employing a solvent which dissolves the single crystal layer, since any solvent other than water, aliphatic hydrocarbons and alicyclic hydrocarbons can dissolve the benzylideneaniline-based nonlinear optical crystals, a single or mixed solvent may be selected as the etching liquid so that an appropriate etching rate is attained and the resist is not dissolved.

For example, in cases where a quinone diazide-based photoresist is used, good solvents of the single crystal layer, such as benzene, toluene, chlorobenzene, methylene chloride and chloroform may be employed individually or mixed solvents containing such a good solvent and a non-solvent to both the single crystal layer and the resist pattern, such as aliphatic hydrocarbons and alicyclic hydrocarbons, may preferably be employed. Further, for example, in cases where a cyclic rubber-based negative photoresist is employed, any good solvents of the single crystal layer such as alcohol, tetrahydrofuran, benzene, chloroform and N,N-dimethylformamide, as well as mixtures containing these solvents and water, aliphatic hydrocarbons or alicyclic hydrocarbons may be employed.

The dry etching methods in which the single crystal layer is removed as a volatile gas include the laser heating drawing method in which the nonlinear optical compound is evaporated, and reactive ion etching method in which a mixed gas containing, for example, a halogenated hydrocarbon and/or halogenated carbon and oxygen is used so as to decompose and react the nonlinear optical compounds to convert the same to a volatile gas.

As described in the Examples, good etching can be attained by the reactive ion etching at a low temperature employing a mixed gas containing tetrafluoromethane and oxygen.

The methods for removing the resist pattern were described earlier in the description of the pattern growth.

A characteristic feature of the above-described wet etching process is that an etching shape reflecting the facts that the wet etching is intrinsically isotropic and that the solubility of the crystal layer is anisotropic, is obtained. Typically, in many cases, etching patterns with trapezium cross section (the side of the surface is etched so that the angles of the right and left edges are different) are formed.

The etching patterns having cross sections of trapezium or inequilateral triangle obtained by this method are advantageously used for the preparation of grating and the like.

The resist layer may be formed after forming a crystal protection layer made of aluminum or a polymer on the outermost single crystal layer for the purpose of protecting the optically smooth crystal surface during the process as required. In this case, the crystal protection layer is first etched and the etched layer is used as a pattern mask. The materials which can be removed by an appropriate method that does not break the single crystal layer are selected as the material for constituting the crystal protection layer.

It is one of the outstanding features of the present invention that the single crystal layer per se can be used as the crystal protection layer. That is, by arranging the single crystal layer with high refractive index to be used for the propagation of the light not as the outermost layer but as an inner layer such as the second or third layer, the single crystal layer which is arranged outer than the high refractive index single crystal layer serves as the crystal protection layer. Thus, even the photoresist of which solutions dissolve the single crystal layer may be employed. Therefore, not only the positive resists which do not substantially dissolve the single crystal layers, but also the negative resists which dissolve the single crystal layers may be employed.

A characteristic feature of the dry etching process is that an etching pattern with a rectangular cross section may be obtained under suitable conditions utilizing the anisotropy of the dry etching. The etching pattern having the rectangular cross section is suitable as an optical waveguide. As in the wet etching process, the resist layer may be formed after forming a crystal protection layer made of aluminum or a polymer on the outermost single crystal layer, and the single crystal layer arranged outer than the high refractive index single crystal layer to be used for the propagation of light serves as the crystal protection layer by arranging the single crystal layer with high refractive index not as the outermost layer but as an inner layer such as the second or third layer. Thus, even the photoresist of which solutions dissolve the single crystal layer may be employed. Therefore, not only the positive resists which do not substantially dissolve the single crystal layers, but also the negative resists which dissolve the single crystal layer may be employed.

An example of a process for producing a multilayer organic nonlinear optical crystal having a patterned layer by the pattern growth utilizing a resist pattern is shown Figs. 2 - 8. Fig. 2 shows the first step in the process and the reference numeral 21 denotes a substrate layer single crystal. Fig. 3 shows the second step in the process, which shows the state that a single crystal layer 22 of the compound for constituting the first layer was grown on the substrate single crystal 21. Fig. 4 shows the third step in the process, which shows the state that a single crystal layer 23 of a compound constituting the mth (wherein m represents a natural number) layer (underlayer) was grown on the first single crystal layer grown 22. Fig. 5 shows the fourth step in the process, which shows the state that a pattern mask 26 was formed on the mth single crystal layer grown 23. Fig. 6 shows the fifth step in the process, which shows the state that a (m + 1)th single crystal layer 24 (which is patterned by the pattern growth) was formed on the pattern mask 26. Fig. 7 shows the sixth step in the process, which shows the state that the pattern mask 26 and the deposited layer formed thereon were removed from the state in the fifth step. Fig. 8 shows the seventh step in the process, which shows the state that a single crystal layer 25 of a compound constituting the (m + 2)th layer was grown on the exposed portions of the mth single crystal layer grown 23 and on the (m + 1)th single crystal layer grown (patterned layer) 24.

An example of a process for producing a multilayer organic nonlinear optical crystal having a patterned layer by the etching process utilizing a resist pattern is shown Figs. 9 - 15. Fig. 9 shows the first step in the process and the reference numeral 91 denotes a substrate layer single crystal. Fig. 10 shows the second step in the process, which shows the state that a single crystal layer 92 of a compound for constituting the first layer was grown on the substrate single crystal 91. Fig. 11 shows the third step in the process, which shows the state that a single crystal layer 93 (underlayer) of a compound constituting the mth layer was grown on the single crystal layer grown 92 and a single crystal layer (to be patterned by etching) of a compound constituting the (m + 1)th layer was grown thereon. Fig. 12 shows the fourth step in the process, which shows the state that a pattern mask 96 was formed on the (m + 1)th single crystal layer grown 94. Fig. 13 shows the fifth step in the process, which shows the state that a (m + 1)th single crystal layer 94 was etched. Fig. 14 shows the sixth step in the process, which shows the state that the pattern mask 96 was removed from the state in the fifth step. Fig. 15 shows the seventh step in the process, which shows the state that a single crystal layer 95 of a compound constituting the (m + 2)th layer was grown on the (m + 1)th single crystal layer grown 94 and on the exposed portions of the underlayer 93.

The second-order nonlinear optical device containing the multilayer organic nonlinear optical crystal as a constituting element will now be described.

To constitute various second-order nonlinear optical devices with high performance utilizing a second-order nonlinear optical material, the anisotropy of the nonlinear optical effects must be taken into consideration. To prepare a frequency converter which converts the wavelength of the impinging laser beam, it is necessary to select the direction of the plane of polarization of the light to be impinged or propagated. In addition, to prepare an electro-optic device which utilizes the phenomenon that the refractive index is changed by an externally applied electric field, the direction of the external electric field, that is, the arrangement of the electrodes must be selected.

For attaining the promotion of the performance and integration of the second-order nonlinear optical devices, it is effective to constitute waveguide type devices. In this case, it is necessary to form an optical waveguide (nonlinear optical waveguide) made of a nonlinear optical material. As described in the item BACKGROUND ART, the nonlinear

optical waveguide serves to propagate the light such as laser beam in the desired direction and to retain the high energy density of the light so as to induce an effective interaction between the light and the nonlinear optical material, thereby obtaining a large nonlinear optical effects.

The multilayer organic nonlinear optical crystal of the present invention very well satisfies the demands for the second-order nonlinear optical materials from the above-described view point of the formation of the devices.

The ac plane of the multilayer organic nonlinear optical crystal means the ac plane of the crystal used as the substrate layer single crystal, that is, the plane including the a axis unit cell vector and the c axis unit cell vector, which is equivalent to the {0 1 0} face indicated by Miller indices. When a MNBA-Et single crystal is used as the substrate layer single crystal, the crystal structure (Table 1) is a monoclinic crystal (space group: Cc, point group: #9), which has lattice parameters at 23 ± 1°C of the following:

| | |
|---|---|
| a = 0.8276(2) nm<br>b = 2.8057(3) nm<br>c = 0.7651(a) nm | β = 115.27(1)°<br>z = 4 |

It should be noted that the above-described lattice parameters may fluctuate depending on the measurement conditions within the range of several percent.

For example, as for the structure of MNA single crystal well-known as an organic nonlinear optical crystal, a little bit different lattice parameters have been reported by different measurers as follows, although both measurers reported that the crystal belongs to monoclinic crystal system (space group: Cc, point group: #9):

B.F. Levine et al (J. Appl. Phys., 50(4), 2523 (1979)): a = 1.117 nm, b = 1.160 nm, c = 0.790 nm, β = 137°
G.F. Lipscomb et al (J. Chem. Phys., 75(3), 1509 (1981)): a = 1.157 ± 0.001 nm, b = 1.162 ± 0.001 nm, c = 0.822 ± 0.001 nm, β = 139.18 ± 0.02°

Table 1

| MNBA-Et Crystal with Specific Structure | |
|---|---|
| Crystal System | Monoclinic |
| Space Group | Cc*,(point group #9)** |
| Lattice Parameters (23±1°C) | a = 0.8276(2) nm***<br>b = 2.8057(3) nm***<br>c = 0.7651(1) nm***<br>β = 115.27(1)° |
| z value | z = 4 |

*: Abbreviation according to Hermann-Mauguin

**: The number of space group according to International Tables for Crystallography, vol. A., "Space Group Symmetry", Ed. by Theo Hahn, The International Union of Crystallography (1983)

***: Lattice parameters may vary by ± several percents depending on the measuring conditions (see the main body of the specification). Although the figures in parentheses are the precision limits of the measurements, the figures are presented for reference.

The direction of the axis of absorbing in the longest wavelength in the ac plane of the multilayer crystal of benzylideneaniline-based organic nonlinear optical compounds which may preferably be employed in the present invention is the direction of the light electric field in which the absorption edge wavelength is the longest when the visual absorption edge spectrum is measured when a linearly polarized light is impinged in the direction perpendicular to the ac plane of the multilayer crystal, which direction is one of the axes of extinction observed with a polarizing microscope under crossed nicol. This direction is substantially coincident with the direction of the polar axis of the benzylideneaniline molecule in the crystal.

MNBA-Et crystal will now be taken as a representative example. Taking the crystallographic b axis of the crystal as y axis, taking the axis of absorbing in the longest wavelength in the ac plane as x axis and taking the axis perpendicular to these axes as z axis, the second-order nonlinear optical susceptibility matrix ($\chi^{(2)}ij$, i = 1, 2, 3, j = 1, 2, 3, 4, 5, 6) expressing the anisotropy of the nonlinear effects is expressed by the following formula 1 from the symmetry (point group m) of the crystal:

$$\begin{pmatrix} \chi^{(2)}_{11} & \chi^{(2)}_{12} & \chi^{(2)}_{13} & 0 & \chi^{(2)}_{15} & 0 \\ 0 & 0 & 0 & \chi^{(2)}_{24} & 0 & \chi^{(2)}_{26} \\ \chi^{(2)}_{31} & \chi^{(2)}_{32} & \chi^{(2)}_{33} & 0 & \chi^{(2)}_{35} & 0 \end{pmatrix}$$

... Formula 1

Judging from the crystal structure, $\chi^{(2)}_{11}$ is the maximum susceptibility. Thus, the anisotropy of the nonlinear optical effects is determined by the symmetry of the crystal.

As described in Example 35, the multilayer crystal was analyzed by X-ray analysis. As a result, it was found that the MNBA single crystal layer grown has substantially the same symmetry as the substrate layer single crystal employed. The second-order nonlinear optical susceptibility matrix for the entire multilayer crystal containing MNBA-Et crystal as the substrate layer single crystal and MNBA as the single crystal layer grown is also expressed by the formula 1 and the maximum susceptibility is also $\chi^{(2)}_{11}$ (multilayer crystal). Further, the second-order nonlinear optical susceptibility matrix of the MNBA single crystal layer which is a single crystal layer grown is also expressed by the formula 1, the maximum susceptibility is also $\chi^{(2)}_{11}$ (single crystal layer grown).

As described in the Examples, multilayer crystals having isomorphous mixed single crystals were subjected to the observation with a polarizing microscope, to the measurement of second-order nonlinear susceptibility ($\chi^{(2)}$) by Maker fringe method, and to the measurement of linear electro-optic effect. As a result, it was found that the isomorphous mixed single crystal layer has substantially the same symmetry as the substrate layer single crystal used. Thus, for example, a second-order nonlinear optical susceptibility matrix for the entire multilayer crystal containing the MNBA-Et crystal as the substrate layer single crystal and a grown isomorphous mixed single crystal layer of MNBA and MNBA-ClEt, for example, is also expressed by the formula 1 and the maximum susceptibility is also $\chi^{(2)}_{11}$ (multilayer crystal). Similarly, the second-order nonlinear optical susceptibility matrix of the MNBA·MNBA-ClEt single crystal layer (isomorphous mixed single crystals are expressed like this indicating the component molecules when the ratio of the compounds is constant throughout the crystal growth) is also expressed by the formula 1 and $\chi^{(2)}_{11}$ (isomorphous mixed single crystal layer grown) is the maximum.

Since the x axis is the direction of axis of absorbing in the longest wavelength in the ac plane, it is preferred that the light to be impinged or propagated have a main component of the optical wave with polarization in the ac plane since a large nonlinear optical effects may be obtained. Thus, it is preferred that the optically smooth crystal surface of the at least one noncentrosymmetric organic single crystal layer in the noncentrosymmetric organic single crystal layers constituting the multilayer organic nonlinear optical crystal be a surface for impinging or propagating a light having a main component of the optical wave with polarization in an ac plane of at least one single crystal layer.

It is further preferred to impinge or propagate a light having an optical wave with polarization in the direction of the axis of absorbing in the longest wavelength. Therefore, it is further preferred that the optically smooth crystal surface of the at least one noncentrosymmetric organic single crystal layer in the noncentrosymmetric organic single crystal layers constituting the multilayer organic nonlinear optical crystal be a surface for impinging or propagating a light having a main component of the optical wave with polarization along the axis of absorbing in the longest wavelength (x axis) in an ac plane of at least one single crystal layer.

It is also preferred to impinge or propagate a light having the optical wave with polarization along the direction shifted from the x axis in the ac plane by 45° since the birefringence of the crystal can be utilized. Thus, it is preferred that the optically smooth crystal surface of the at least one noncentrosymmetric organic single crystal layer in the noncentrosymmetric organic single crystal layers constituting the multilayer organic nonlinear optical crystal be a surface for impinging or propagating a light having a main component of the optical wave with polarization along the direction shifted by 45° from the axis of absorbing in the longest wavelength in an ac plane of at least one single crystal layer.

As for the electric field applied to the multilayer crystal when the light is impinged or propagated, it is preferred to apply an electric field having a large component in the ac plane of the multilayer crystal since a large linear electro-optic effect (Pockels effect) is obtained. Thus, it is preferred that the device have at least one pair of electrodes for applying an electric field having a large component in an ac plane of at least one noncentrosymmetric organic single crystal layer constituting said crystal.

Further, as for the direction of the electric field to be applied, it was found that it is best preferred to apply an electric field having a large component along the axis of absorbing in the longest wavelength (x axis) in the ac plane. Thus, it

is best preferred that the device have at least one pair of electrodes for applying an electric field having a large component along the axis of absorbing in the longest wavelength in an ac plane of at least one single crystal layer.

The term "one pair of electrodes" herein used means a set of electrode including more than one electrodes for applying an electric field having a large component in the ac plane of the multilayer crystal or an electric field having a large component along the direction of the axis of absorbing in the longest wavelength (x axis) in the ac plane. The electrodes may be planar electrodes mounted on the multilayer crystal or may be embedded in the multilayer crystal. Two or more pairs of electrodes may be integrated on the same surface. The electrodes may also be provided on the two surfaces opposing each other. The electrodes may be made of any materials which can apply the electric field, which include metals such as aluminum and gold, alloys and the like. For the purpose of avoiding the attenuation of the light by the electrodes and protecting the crystal, an inorganic dielectric layer, semiconductor layer, glass layer or a polymer layer may be provided between the multilayer organic nonlinear optical crystal and the electrodes.

Such a constitution having the electrodes is very useful as an electro-optic device.

The electrodes may be formed on the ac plane. In this case, a large effect is obtained in the TE mode. Thus, it is preferred that the device have at least one pair of electrodes formed on a crystal surface substantially parallel to an ac plane of at least one noncentrosymmetric organic single crystal layer constituting the multilayer organic nonlinear optical crystal.

The electrodes may also be formed on the surface perpendicular to the axis of absorbing in the longest wavelength. In this case, a large effect is obtained in the TM mode. Thus, it is preferred that the device have at least one pair of electrodes formed on a crystal surface substantially perpendicular to the axis of absorbing in the longest wavelength in an ac plane of at least one single crystal layer constituting the multilayer organic nonlinear optical crystal, or that the device have at least one pair of electrodes formed on two crystal surfaces substantially perpendicular to the axis of absorbing in the longest wavelength in an ac plane of at least one single crystal layer constituting the multilayer organic nonlinear optical crystal.

The multilayer crystal may be used as a bulk type second-order nonlinear optical device in the same manner as a bulk single crystal. The multilayer crystal may also be used as a planar waveguide type second-order nonlinear optical device employing the single crystal layer grown as a planar (two-dimensional) waveguide.

By forming a multilayer crystal having a patterned layer by further processing the multilayer crystal which exhibits a large effect in the TE mode or in the TM mode or by growing a single crystal layer to a preliminarily designed shape, channel waveguide type second-order nonlinear optical device may be obtained in which the patterned layer is used as the channel (three-dimensional) waveguide. Such a device is especially preferred since precise control of the light and integration of the device can be simultaneously attained.

The second-order nonlinear optical devices employing the multilayer organic nonlinear optical crystal according to the present invention have the following extremely excellent features:

In the case of a waveguide type second-order nonlinear optical device in which the grown single crystal layer in the multilayer crystal is used as a waveguide, since the single crystal layer of which thickness is precisely controlled can be used as the waveguide, a waveguide type device having an optimized structure can be realized. That is, a waveguide type nonlinear optical device having excellent production yield and reproduction of performance can be realized.

In the device employing the multilayer crystal, since the wavelength dependencies of the single crystal layer used as a waveguide layer and of the single crystal layer adjacent thereto (including the substrate layer) are almost the same and so the difference in the refractive indices are not so changed when the wavelength of the light is changed, it is expected that the wavelength range of the operable light is wide or the tolerance to the fluctuation of light wavelength is large when compared with devices in which an inorganic material such as glass is used as the substrate.

As mentioned above, by employing an isomorphous mixed single crystal, the difference in the refractive indices between the waveguide layer and the single crystal layer adjacent thereto can be intentionally and optimally controlled.

Since all of the substrate single crystal layer, the waveguide single crystal layer and the single crystal layer adjacent to the waveguide single crystal layer in the multilayer crystal are organic crystals having similar structures, the difference in the thermal expansion coefficients is very small, so that a reliable device which has substantially no problem of the crystal distortion or breakage (peeling and dropping) in the temperature change due to the difference in the thermal expansion coefficients may be obtained. In the case of a bulk type device utilizing the multilayer crystal in which the thickness of the single crystal layer is large and so it is not used as a waveguide, the device also has a feature that the problems caused by the crystal distortion during the temperature change are small.

The multilayer organic nonlinear optical crystal, process for producing the same, and the features and utility of the second-order nonlinear optical device utilizing the multilayer organic nonlinear optical crystal as a constituting element were described above.

The present invention will now be described by way of examples thereof. It should be noted that the scope of the present invention is not limited by the examples by any means.

[EXAMPLES]

(Example 1)

Production of MNBA-Et/MNBA Multilayer Organic Nonlinear Optical Crystal

A crystal of MNBA-Et (size: 15 mm x 7 mm x 5.5 mm) was grown from a solution in dimethylacetamide by slow cooling method.

By observing the crystal with a polarizing microscope, it was confirmed that this crystal was a single crystal. Further, X-ray diffraction analysis revealed that the largest crystal face was ac plane ({0 1 0} face). To provide a smooth surface, the crystal was cleaved parallel to {0 1 0} face.

Using the thus obtained y-cut MNBA-Et single crystal having {0 1 0} smooth cleaved face as a substrate layer, MNBA layer was grown by the vapor phase heteroepitaxial growth.

The substrate layer was adhered to a slide glass by Canada balsam in such a manner that the surface opposite to the cleaved face contacts the slide glass. The thus prepared sample was set above a vacuum vapor deposition boat in a vacuum vapor deposition apparatus in such a manner that the cleaved face faces downward, and the half of the substrate layer was intimately covered with aluminum foil. After evacuation of the chamber to $10^{-6}$ Torr, MNBA was vapor-deposited. The degree of vacuum during the vapor deposition was about 4 x $10^{-4}$ Torr. The rate of deposition was controlled to about 1.39 nm/sec. by controlling the temperature of the vacuum vapor deposition boat by adjusting the boat voltage. The thickness of the deposited layer was monitored by a quartz oscillator type membrane thickness monitor, and the deposition was continued until the thickness of the deposited layer reached about 5.0 μm.

Thereafter, the substrate layer on the slide glass was removed from the vacuum vapor deposition apparatus, and the aluminum foil was removed. Although the surface of the slide glass turned cloudy due to the MNBA microcrystals, the entire MNBA-Et substrate layer including the region covered with the aluminum foil and the exposed region remained transparent. By observing the resulting sample with a reflector microscope, it was found that a step was formed at the boundary between the exposed region and the region covered with the aluminum foil due to the thickness of the deposited layer. The polarization characteristics of the region of the MNBA-Et single crystal substrate layer covered with the aluminum foil and the exposed region of the MNBA-Et single crystal substrate layer were examined by using a polarizing microscope. As a result, in both regions, no change was observed in the light-transmitting property and extinction property before and after the vapor deposition. Thus, it was confirmed that the entire vapor-deposited MNBA layer was a single crystal of which principal axis of refractive index was coincident with that of the MNBA-Et single crystal substrate.

By using a prism made of rutile, a light with a wavelength of 633 nm from He-Ne laser was guided into MNBA single crystal layer in $T_E$ mode or $T_M$ mode in the direction parallel to a principal axis of refractive index of the MNBA-Et single crystal substrate layer. As a result, in both modes, the light was well guided.

The above-described MNBA-Et/MNBA multilayer organic nonlinear optical crystal was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 2)

Production of MNBA-Et/MNBA/MNBA-ClEt and MNBA-Et/MNBA-ClEt Multilayer Organic Nonlinear Optical Crystals

The MNBA-Et/MNBA multilayer organic nonlinear optical crystal prepared in Example 1 was again set above the vacuum vapor deposition boat in such a manner that the MNBA single crystal layer faces downward. After evacuation to $10^{-6}$ Torr, the substrate layer optical crystal was heated to about 120°C and then the vapor phase heteroepitaxial growth of MNBA-ClEt was carried out.

The degree of vacuum during the vapor deposition was about 2 x $10^{-4}$ Torr. The rate of vapor deposition was about 0.70 nm/sec., and the vapor deposition was continued until the thickness of the deposited layer reached about 4.0 μm.

Thereafter, the sample was removed from the vacuum vapor deposition apparatus. Both the MNBA-Et single crystal region (i.e., the region which was covered with the aluminum foil in Example 1) and the MNBA single crystal layer were entirely transparent. The polarization characteristics were examined with a polarizing microscope. As a result, in both regions, no change was observed before and after the vapor deposition in the light-transmitting property and extinction property. Thus, it was confirmed that both the MNBA-Et single crystal region and the MNBA single crystal region had the MNBA-ClEt single crystal layer as an overlayer which was crystallized with the principal axis of refractive index coincident with those of MNBA-Et and MNBA single crystals in the entire surface.

By prism coupling, a light with a wavelength of 633 nm from He-Ne laser was guided into MNBA-ClEt single crystal

layer in $T_E$ mode or $T_M$ mode in the direction parallel to a principal axis of refractive index of the MNBA-Et single crystal layer or the MNBA single crystal layer. As a result, in both modes, the light was well guided in both regions.

The above-described MNBA-Et/MNBA/MNBA-ClEt and MNBA-Et/MNBA-ClEt multilayer organic nonlinear optical crystals were heated to 120ºC in an oven and then allowed to cool. No breaking (generation of cracks, peeling and dropping) was observed. Further, by repeating the above-described waveguiding experiment, it was confirmed that changes such as crystal distortion which clearly adversely affect the optical characteristics did not occur.

(Example 3)

Production of MNBA-Et/MNBA/MNBA-ClEt/MNBA-Et and MNBA-Et/MNBA-ClEt/MNBA-Et Multilayer Organic Nonlinear Optical Crystals

The MNBA-Et/MNBA/MNBA-ClEt and MNBA-Et/MNBA-ClEt multilayer organic nonlinear optical crystals prepared in Example 2 were set, for the third time, above the vacuum vapor deposition boat in such a manner that the MNBA-ClEt single crystal layer faces downward. After evacuation to $10^{-6}$ Torr, the vapor phase heteroepitaxial growth of MNBA-Et was carried out.

The degree of vacuum during the vapor deposition was about 4 x $10^{-4}$ Torr. The rate of vapor deposition was about 1.70 nm/sec., and the vapor deposition was continued until the thickness of the deposited layer reached about 12.0 µm.

Thereafter, the sample was removed from the vacuum vapor deposition apparatus. Both the MNBA-Et/MNBA/MNBA-ClEt single crystal region and the MNBA-Et/MNBA-ClEt single crystal region were transparent in their entirety. The polarization characteristics were examined with a polarizing microscope. As a result, in both regions, no change was observed before and after the vapor deposition in the light-transmitting property and extinction property. Thus, it was confirmed that on both entire regions, the MNBA-Et single crystal layer was overlaid with the principal axis of refractive index coincident with the both regions.

The above-described MNBA-Et/MNBA/MNBA-ClEt/MNBA-Et and MNBA-Et/MNBA-ClEt/MNBA-Et multilayer organic nonlinear optical crystals were heated to 120ºC in an oven and then allowed to cool. No breaking (generation of cracks, peeling and dropping) was observed.

(Example 4)

Production of MNBA/MNBA-ClEt Multilayer Organic Nonlinear Optical Crystal

A crystal of MNBA (size: 55 mm x 7 mm x 2.5 mm) was grown by the slow evaporation method from chloroform solution at room temperature.

By observing this crystal with a polarizing microscope, it was confirmed that this crystal was a single crystal. By polishing the crystal with diamond powder, {0 1 0} face (the plane including the direction of the maximum second-order optical nonlinearity) and {1 0 0} face (a plane almost perpendicular to the direction of the maximum second-order optical nonlinearity, shifted by about 3º from this direction) were made optically smooth.

Using the thus obtained MNBA single crystal layer as a substrate layer, MNBA-ClEt was grown by the vapor phase heteroepitaxial growth as in Example 2. The rate of vapor deposition was about 1.00 nm/sec. and the vapor deposition was continued until the thickness of the deposited layer reached about 5.0 µm.

Although the surface of the slide glass after the vapor deposition turned cloudy due to the MNBA-ClEt microcrystals, both {0 1 0} face and {1 0 0} face remained transparent in their entirety. The polarization characteristics of the {0 1 0} face and {1 0 0} face were examined with a polarizing microscope. As a result, in both regions, no change was observed in the light-transmitting property and extinction property before and after the vapor deposition. Thus, it was confirmed that the vapor-deposited MNBA-ClEt layer on the entire {0 1 0} face and {1 0 0} face was a single crystal of which principal axis of refractive index was coincident with that of the MNBA single crystal substrate layer.

By prism coupling, a light with a wavelength of 633 nm from He-Ne laser was guided in the MNBA-ClEt single crystal layers on the {0 1 0} face and on the {1 0 0} face in $T_E$ mode or $T_M$ mode in the direction parallel to a principal axis of refractive index of the MNBA single crystal layer. As a result, in both modes, the light was well guided in both layers.

The above-described MNBA/MNBA-ClEt multilayer organic nonlinear optical crystal was heated to 120ºC in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 5)

Production of MNBA/MNBA-Cl Multilayer Organic Nonlinear Optical Crystal

On the {0 1 0} face and {1 0 0} face of a single crystal of MNBA (size: 45 mm x 6 mm x 1.7 mm), whose faces were made optically smooth, MNBA-Cl was grown by the vapor phase heteroepitaxial growth. After heating the MNBA single crystal substrate layer to about 80°C, vapor deposition was carried out at a rate of about 0.50 nm/sec. until the thickness of the deposited layer reached about 4.5 μm.

After the vapor deposition, both of the {0 1 0} face and {1 0 0} face remained transparent in their entirety. The polarization characteristics of the {0 1 0} face and {1 0 0} face were checked. As a result, in both regions, no change was observed before and after the vapor deposition in the light-transmitting property and extinction property. Thus, it was confirmed that on the entire surfaces of both the {0 1 0} face and {1 0 0} face, the deposited MNBA-Cl formed a single crystal with its principal axis of refractive index coincident with that of the MNBA single crystal substrate layer.

The waveguiding of a light with a wavelength of 633 nm from the He-Ne laser through the MNBA-Cl single crystal layer on the {0 1 0} face and on the {1 0 0} face in $T_E$ mode or $T_M$ mode was good.

No breaking (generation of cracks, peeling and dropping) of the crystal was observed after heating the crystal. Further, by repeating the above-described waveguiding experiment, it was confirmed that changes such as crystal distortion which prominently adversely affect the optical characteristics of the crystal did not occur.

(Example 6)

Production of MNBA-Et/MNBA/MNBA-Et Multilayer Organic Nonlinear Optical Crystal

A MNBA-Et/MNBA multilayer organic nonlinear optical crystal (thickness of MNBA single crystal layer: about 5.0 μm) was prepared by using a single crystal of MNBA-Et (size: 33 mm x 4 mm x 1.2 mm) having optically smooth {0 1 0} face and {1 0 0} face by the vapor phase method as in Example 1.

On the MNBA single crystal layer on the {0 1 0} face and {1 0 0} face of this MNBA-Et/MNBA multilayer organic nonlinear optical crystal, solution phase heteroepitaxial growth of MNBA-Et was performed as follows:

In an about one liter cylindrical glass vessel having three openings with caps, a solution prepared by completely dissolving about 28.0 g of MNBA-Et powder crystals under heat in about 500 ml of chloroform was placed. Of the three openings, two were used as an inlet and an outlet of dry nitrogen gas, and the other one was stopped with a silicone rubber stopper. A platinum line was penetrated through the silicone rubber stopper and the above-described MNBA-Et/MNBA multilayer organic nonlinear optical crystal was hung on the tip of the platinum line in such a manner that the crystal does not contact the solution. The openings were capped so that the atmosphere in the vessel was converted to chloroform atmosphere. Dry nitrogen gas was introduced at a rate of about 2 ml/min. and the system was left to stand under these conditions for two days at room temperature (about 25°C), so that a small amount of MNBA-Et crystal was precipitated by slow evaporation and the solution was settled.

Thereafter, the platinum line was lowered in such a manner that half of the MNBA-Et/MNBA multilayer organic nonlinear optical crystal is immersed in the solution, and the slow evaporation was continued. About one hour later, the MNBA-Et/MNBA multilayer organic nonlinear optical crystal was drawn up from the MNBA-Et/chloroform solution and was rinsed with cyclohexane/isopropanol mixed solvent (1:1) and then with cyclohexane, followed by drying.

All of the regions immersed in the solution and not immersed in the solution in the {0 1 0} face and on the {1 0 0} face remained transparent in their entirety. By observing the resulting sample with a reflector microscope, it was found that steps were formed at the boundaries between the immersed regions and non-immersed regions due to the deposited layer. The height of the steps was measured by the pin-touch method. The height of the step on the {0 1 0} face was about 16.0 μm and that on the {1 0 0} face was about 82.0 μm. The polarization characteristics of the {0 1 0} face and {1 0 0} face were examined with a polarizing microscope. As a result, the thickness-increased regions (i.e., the regions immersed in the MNBA-Et/chloroform solution) and the other regions (i.e., the regions not immersed in the solution) on both the {0 1 0} face and {1 0 0} face did not change in their light-transmitting properties and extinction properties. Thus, it was confirmed that the MNBA-Et single crystal layer was formed on the entire surface of the region immersed in the solution with its principal axis of refractive index coincident with that of the multilayer crystal.

The above-described MNBA-Et/MNBA/MNBA-Et multilayer organic nonlinear optical crystal was heated to 120°C in an oven and then allowed to cool after taking the sample out of the oven, but no breaking (generation of cracks, peeling and dropping) was observed.

(Example 7)

Production of MNBA-Et/MNBA/MNBA-Cl Multilayer Organic Nonlinear Optical Crystal

Using a MNBA-Et/MNBA multilayer organic nonlinear optical crystal layer (thickness of the MNBA single crystal: about 5.0 μm; entire size: 45 mm x 7.5 mm x 2.1 mm) having optically smooth {0 1 0} face and {1 0 0} face, solution phase heteroepitaxial growth was performed as in Example 6 except that MNBA-Cl was used in place of MNBA-Et. A solution prepared by completely dissolving about 6.6 g of MNBA-Cl powder crystals in about 500 ml of chloroform under heat was used.

About 6 hours later, the increase in the thickness of the layers was about 11.0 μm on the {0 1 0} face and about 66.0 μm on the {1 0 0} face. By the observation using a polarizing microscope, it was confirmed that MNBA-Cl single crystal layer was formed on the entire surfaces of the regions of the {0 1 0} face and {1 0 0} face, which were immersed in the solution, in such a manner that their principal axes of refractive index are coincident with that of the multilayer crystal.

The above-described MNBA-Et/MNBA/MNBA-Cl multilayer organic nonlinear optical crystal was heated to 120°C in an oven and then allowed to cool after taking the sample out of the oven, but no breaking (generation of cracks, peeling and dropping) was observed.

(Example 8)

Production of MNBA-Et/MNBA/MNBA-Cl/MNBA-Et Multilayer Organic Nonlinear Optical Crystal

Using the MNBA-Et/MNBA/MNBA-Cl multilayer organic nonlinear optical crystal having optically smooth {0 1 0} face and {1 0 0} face, which was obtained in Example 7, solution phase heteroepitaxial growth of MNBA-Et was performed as in Example 6.

About 1 hour later, the increase in the thickness of the layer on the {0 1 0} face was about 19.0 μm, and that on the {1 0 0} face was about 95.0 μm. By the observation using a polarizing microscope, it was confirmed that MNBA-Et single crystal layer was formed on the entire surfaces of the regions of the {0 1 0} face and {1 0 0} face, which were immersed in the solution, in such a manner that its principal axis of refractive index is coincident with that of the multilayer crystal.

The above-described MNBA-Et/MNBA/MNBA-Cl/MNBA-Et multilayer organic nonlinear optical crystal was heated to 120°C in an oven and then allowed to cool after taking the sample out of the oven, but no breaking (generation of cracks, peeling and dropping) was observed.

(Example 9)

Production of MNBA/MNBA-ClEt/MNBA-Et Multilayer Organic Nonlinear Optical Crystal

Using the MNBA/MNBA-ClEt multilayer organic nonlinear optical crystal having optically smooth {0 1 0} face and {1 0 0} face, which was obtained by the vapor phase heteroepitaxial growth in Example 4, the melt phase heteroepitaxial growth of MNBA-Et was observed.

In the visual field of a polarizing microscope equipped with a hot plate, a slide glass carrying MNBA-Et powder crystals thereon was placed, and the MNBA-Et powder crystals (m.p. 169.5 - 170°C) were heated to 172°C so as to melt the crystals. A MNBA/MNBA-ClEt multilayer organic nonlinear optical crystal (m.p. of MNBA: about 194°C; m.p. of MNBA-ClEt: 194 - 196°C) placed on a different portion of the slide glass and so having almost the same temperature as the MNBA-Et melt was moved to the MNBA-Et melt in such a manner that the optically smooth {0 1 0} face and {1 0 0} face contact the MNBA-Et melt. The temperature of the hot plate was lowered at a rate of 0.5°C/min. As a result, crystal growth was observed on the optically smooth {0 1 0} face and {1 0 0} face and on the other surfaces of the MNBA/MNBA-ClEt multilayer organic nonlinear optical crystal from the temperature range immediately below the melting point, in which supercooling occurs if the MNBA-Et melt alone is cooled (the phase emerging next may be the nematic liquid crystal phase depending on the cooling rate). It was also confirmed from the polarization characteristics that the grown crystals were single crystals having the same direction of the principal axes of refractive index as those of the respective surfaces of the multilayer crystal, on which the respective crystals were grown.

By keeping the temperature at about 168°C, MNBA-Et single crystal layers were grown. About 5 minutes later, the increase in the thickness of the layers was about 170 μm on the {0 1 0} face and about 770 μm on the {1 0 0} face.

(Example 10)

Production of MNBA/MNBA-Cl/MNBA-Et Multilayer Organic Nonlinear Optical Crystal

Using the MNBA/MNBA-Cl multilayer organic nonlinear optical crystal having optically smooth {0 1 0} face and {1 0 0} face, which was obtained by the vapor phase heteroepitaxial growth in Example 5, the melt phase heteroepitaxial growth of MNBA-Et was observed.

As in Example 9, the optically smooth {0 1 0} face and {1 0 0} face of the multilayer crystal were made to contact the MNBA-Et melt.

The temperature of the melt and the multilayer crystal was lowered at a rate of about 0.5°C/min. to 168°C which is immediately below the melting point of the MNBA-Et melt. As a result, heteroepitaxial growth of MNBA-Et was observed. It was also confirmed from the polarization characteristics that the grown crystals were single crystals having the same direction of the principal axes of refractive index as those of the respective surfaces of the multilayer crystal, on which the respective crystals were grown.

About 5 minutes later, the increase in the thickness of the layers was about 145 μm on the {0 1 0} face and about 640 μm on the {1 0 0} face.

(Example 11)

Production of MNBA-Et/MNBA-ClEt/MNBA Multilayer Organic Nonlinear Optical Crystal

Using the MNBA-Et/MNBA-ClEt multilayer organic nonlinear optical crystal having {0 1 0} face obtained as in Example 2, the melt phase heteroepitaxial growth of MNBA was observed.

In the visual field of a polarizing microscope equipped with a hot plate, a slide glass carrying MNBA powder crystals thereon was placed, and the MNBA powder crystals were heated to 196°C so as to melt the crystals. The temperature of the hot plate was lowered at a rate of about 0.5°C/min. to about 175°C which is within the temperature range (m.p. to 142°C) in which the MNBA melt shows supercooling if the MNBA melt alone is cooled (although depending on the cooling rate, the phase emerging next is nematic liquid crystal phase). The optically smooth {0 1 0} face of the MNBA-Et/MNBA-ClEt multilayer organic nonlinear optical crystal preliminarily heated to about 100°C was made to contact the MNBA melt and the resultant was observed. The other face of the multilayer crystal was cooled by the air.

Upon contacting with MNBA melt, the {0 1 0} face of MNBA-Et was slightly melted, so that the boundary of the crystal went back and a melt layer having a refractive index apparently different from that of the MNBA melt was temporarily formed. This temporarily formed melt layer diffused with time from the original crystal boundary, and the boundary between the temporary melt layer and the MNBA melt became unclear with time. Thereafter, the temporarily formed melt layer was absorbed by the crystal region due to the crystal growth and disappeared. On the other hand, although a similar phenomenon was observed on the {0 1 0} face of MNBA-ClEt, the thickness of the temporarily formed melt layer was very small and the temporary melt layer was absorbed in the crystal region due to the crystal growth and disappeared.

It was confirmed from the analysis of the polarization (extinction) characteristics that the crystal growth of MNBA on the {0 1 0} face of MNBA-Et and on the {0 1 0} face of MNBA-ClEt was the growth in which the direction of the principal axis of refractive index was the same as that of the surface on which the growth occurred. Further, the crystal growth occurred beyond the diffused mixed melt layer temporarily formed. Thus, the grown crystal layers formed by the diffused mixed melt layers were single crystal layers of isomorphous mixed crystals of MNBA-Et and MNBA, and MNBA-ClEt and MNBA, respectively, which have refractive index distributions of graded index type originating from the refractive index distributions of the diffused mixed melt layers.

Fifteen minutes later, the increase in the thickness of the layers was about 470 μm on the {0 1 0} face of MNBA-Et and about 1120 μm on the {1 0 0} face of MNBA-ClEt.

(Example 12)

Production of DNBB/MNA Multilayer Organic Nonlinear Optical Crystal

In this example, how to obtain a multilayer organic nonlinear optical crystal by intimately contacting two noncentrosymmetric organic single crystals having optically smooth surfaces by using an organic solvent is described.

By slow evaporation of about 1 wt% DNBB solution in acetone at room temperature, a DNBB plate-like crystal (size: 25 mm x 4.5 mm x 0.8 mm) having a large optically smooth surface was prepared. Observation with a polarizing microscope of this crystal revealed that this crystal was a single crystal. By X-ray diffraction analysis, it was found that the largest crystal face was {0 1 0} face.

By the slow evaporation of about 20 wt% MNA solution in dimethylacetamide at room temperature, a MNA plate-like single crystal (size: 15 x 3.5 x 4.5 μm) was grown between a pair of glass substrates preliminarily rinsed with an alkali. The MNA plate-like single crystal sandwiched between the glass substrates was removed from the glass substrates by immersing the crystal in about 5 wt% aqueous tetramethylammonium hydroxide solution. The MNA plate-like crystal suspended in the solution was scooped up and was washed with water. It was found that this crystal was a single crystal by observation with a polarizing microscope and that the largest crystal surface was {0 1 0} face by X-ray diffraction analysis.

On the thus obtained DNBB plate-like single crystal, one drop of cyclohexane/isopropanol mixed solvent (about 5/1 v/v) was placed and the MNA plate-like single crystal was mounted thereon under crossed nicol of a polarizing microscope in such a manner that the mixed solvent is sandwiched between the plate-like crystals. The positions of the crystals was adjusted so that the extinction axis can be observed (i.e., so that the principal axes of the DNBB plate-like single crystal and MNA plate-like single crystal are coincident). Under these positions, the solvent was evaporated to obtain a DNBB/MNA multilayer organic nonlinear optical crystal. The principal axes of refractive index were made coincident by making the directions of the axes of the maximum absorption (the directions of the maximum second-order nonlinearity) were made coincident.

By using a prism made of rutile, a light with a wavelength of 633 nm from He-Ne laser was guided in the MNA single crystal layer in $T_E$ mode or $T_M$ mode in the direction parallel to a principal axis of refractive index of the MNA single crystal. As a result, in both modes, the light was well guided.

The above-described DNBB/MNA multilayer organic nonlinear optical crystal was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 13)

Production of MNBA-Et/MNBA·MNBA-ClEt Multilayer Organic Nonlinear Optical Crystal

(Isomorphous mixed crystals are hereinafter indicated as, for example, "MNBA·MNBA-ClEt" using the component molecules. In cases where the ratio of the components do not change with the growth, the crystal is indicated as described above. In cases where the ratio of the components are monotonously changed, the symbol "↑" or "↓" is attached to each component. If the ratio of the components are not changed monotonously, a plurality of the symbols for indicating the monotonous change are used).

A crystal of MNBA-Et (size: 13 mm x 6 mm x 4.5 mm) was grown from a solution in dimethylformamide by slow cooling method.

It was found that this crystal was a single crystal by observation with a polarizing microscope and that the largest crystal surface was {0 1 0} face by X-ray diffraction analysis.

The MNBA-Et crystal is a monoclinic crystal (space group: Cc, point group: #9) and has the following lattice parameters at 23 ± 1°C:

| | |
|---|---|
| a = 0.8276(2) nm | β = 115.27(1)° |
| b = 2.8057(3) nm | z = 4 |
| c = 0.7651(1) nm | |

Taking the b axis of MNBA-Et crystal as y axis, taking the axis of the maximum absorption (the axis having an absorption edge at the longest wavelength) in the ac plane ({0 1 0} plane) as x axis, and taking the axis perpendicular to these axes as z axis, the relationships among the principal refractive indices along the respective axes are $n_x > n_y > n_z$, and the nonlinear susceptibility ($\chi^{(2)}_{11}$) along x axis is the maximum.

The crystal was cut with a wire saw along the plane perpendicular to the x axis so as to divide the crystal into two portions.

To provide optically smooth surfaces, the {0 1 0} face perpendicular to the y axis (y-cut face) of one of the crystals and the cut face perpendicular to the x axis (x-cut face) of another crystal were polished with diamond paste.

Observation with an interferometer microscope revealed that the thus provided optically smooth surfaces had a maximum surface roughness of ± 0.1 μm.

Using the MNBA-Et single crystal having the thus provided y-cut polished face or x-cut polished face as a substrate layer, simultaneous vapor phase heteroepitaxial growth of MNBA and MNBA-ClEt was carried out as follows:

Each of the substrate layer was adhered on a slide glass by Canada balsam in such a manner that the surface opposite to the polished surface contacts the slide glass. The thus prepared sample was set above a vacuum vapor

deposition boat in a vacuum vapor deposition apparatus in such a manner that the polished surface faces downward, and the half of the substrate layer was intimately covered with aluminum foil. After evacuation of the chamber to $10^{-6}$ Torr, the substrate layer was heated to about 120°C, and then MNBA and MNBA-ClEt were vapor-deposited from individual vapor deposition boats. The degree of vacuum during the vapor deposition was about 4 x $10^{-4}$ Torr. The rates of deposition were individually controlled to about 0.5 nm/sec. by controlling the temperatures of the vacuum vapor deposition boats by adjusting the boat voltages. The shutter shielding the sample was then opened. The thickness of the deposited layer was monitored with a quartz oscillator type membrane thickness monitor, and the deposition was continued until the thickness of the deposited layer reached about 5.0 µm.

Thereafter, the substrate layer on the slide glass was removed from the vacuum vapor deposition apparatus, and the aluminum foil was removed. Although the surface of the slide glass turned cloudy due to the microcrystals, the entire y-cut and x-cut MNBA-Et single crystal substrate layers including the regions covered with the aluminum foil and the exposed regions remained transparent. By observing each of the resulting samples with a reflector microscope, it was found that a step was formed at the boundary between the exposed region and the region covered with the aluminum foil due to the thickness of the deposited layer. The polarization characteristics of the region of the MNBA-Et single crystal substrate layer covered with the aluminum foil and the exposed region of the MNBA-Et single crystal substrate layer were examined by using a polarizing microscope. As a result, in both regions, no change was observed in the light-transmitting property and extinction property before and after the vapor deposition. Thus, it was confirmed that the entire vapor-deposited MNBA and MNBA-ClEt layers were isomorphous mixed single crystals of which principal axes of refractive index were coincident with that of the MNBA-Et single crystal substrate.

By using a prism made of rutile, a light with a wavelength of 633 nm from He-Ne laser was guided in the MNBA·MNBA-ClEt isomorphous mixed single crystal layer in $T_E$ mode or $T_M$ mode in the direction parallel to a principal axis of refractive index of the MNBA-Et single crystal substrate layer. As a result, in both modes, the light was well guided.

The above-described MNBA-Et/MNBA·MNBA-ClEt multilayer organic nonlinear optical crystal was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 14)

Production of MNBA/MNBA-ClEt↓·MNBA-Et↑/MNBA-Et Multilayer Organic Nonlinear Optical Crystal

A crystal of MNBA (size: 18 mm x 15 mm x 4.5 mm) was grown from dimethylacetamide solution by slow cooling method.

It was found that this crystal was a single crystal by observation with a polarizing microscope and that the largest crystal surface was {0 1 0} face by X-ray diffraction analysis.

The MNBA crystal is also a monoclinic crystal (space group: Cc, point group: #9) and has the following lattice parameters at 23 ± 1°C:

| | |
|---|---|
| a = 0.83814(9) nm | β = 115.336(5)° |
| b = 2.6838(4) nm | z = 4 |
| c = 0.74871(5) nm | |

Taking the b axis of MNBA crystal as y axis, taking the axis of the maximum absorption (the axis having an absorption edge at the longest wavelength) in the ac plane as x axis, and taking the axis perpendicular to these axes as z axis, the relationships among the principal refractive indices along the respective axes are $n_x > n_y > n_z$, and the nonlinear susceptibility ($\chi^{(2)}{}_{11}$) along x axis is the maximum.

As in Example 13, a crystal having optically smooth {0 1 0} face (y-cut face) and a crystal having optically smooth cut face perpendicular to the x axis (x-cut face) were prepared.

Observation with an interferometer microscope revealed that the thus provided optically smooth surfaces had a maximum surface roughness of ± 0.1 µm.

Using the MNBA single crystal having the thus provided y-cut polished face or x-cut polished face as a substrate layer, simultaneous vapor phase heteroepitaxial growth of MNBA and MNBA-ClEt was carried out as follows while changing the component ratio with time:

As in Example 13, each of the crystals was set above a vacuum vapor deposition boat in a vacuum vapor deposition apparatus in such a manner that the polished surface faces downward.

After evacuation of the chamber to $10^{-6}$ Torr, the substrate layers were heated to about 120°C, and then MNBA-ClEt and MNBA-Et were vapor-deposited from individual vapor deposition boats. The degree of vacuum during the vapor deposition was about 4 x $10^{-4}$ Torr. The rates of deposition were controlled to about 0.5 nm/sec. by controlling the temperatures of the vacuum vapor deposition boats by adjusting the boat voltages. The shutter shielding the sample was then opened. The thickness of the deposited layer was monitored with a quartz oscillator type membrane thickness monitor. The shutter of the vapor deposition boat containing MNBA-ClEt was gradually closed with time and was completely closed when the thickness of the deposited layer monitored with the quartz oscillator type membrane thickness monitor reached about 5.0 μm. The vapor deposition was further continued until the thickness of the deposited layer was increased by another about 5.0 μm.

Thereafter, the substrate layers on the slide glass were removed from the vacuum vapor deposition apparatus. Although the surface of the slide glass turned cloudy due to the microcrystals, the entire y-cut and x-cut MNBA single crystal substrate layers remained transparent.

The polarization characteristics of the MNBA single crystal substrate layer were examined by using a polarizing microscope. As a result, no change was observed in the light-transmitting property and extinction property before and after the vapor deposition. Thus, it was confirmed that the entire vapor-deposited MNBA-ClEt and MNBA-Et layer and the entire vapor-deposited MNBA-Et layer were isomorphous mixed single crystals of which principal axes of refractive index were coincident with that of the MNBA single crystal substrate layer.

After polishing the end faces, a light with a wavelength of 633 nm from He-Ne laser was collected by a lens and was guided in the MNBA-ClEt↓·MNBA-Et↑ isomorphous mixed single crystal layer in $T_E$ mode or $T_M$ mode in the direction parallel to a principal axis of refractive index of the MNBA single crystal substrate layer. As a result, in both modes, the light was well guided.

The above-described MNBA/MNBA-ClEt ↓·MNBA-Et ↑/MNBA-Et multilayer organic nonlinear optical crystal was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 15)

Production of MNBA-Et/MNBA·MNBA-ClEt Multilayer Organic Nonlinear Optical Crystal Having Patterned Layer

Using a MNBA-Et single crystal having optically smooth y-cut face prepared as in Example 13 as a substrate layer for crystal growth, the pattern growth by the simultaneous vapor phase heteroepitaxial growth of MNBA and MNBA-ClEt was carried out as follows:

On the y-cut MNBA-Et single crystal substrate layer, a quinone diazide-based positive photoresist was coated to a thickness of about 5 μm by using a spinner. After drying the photoresist, the substrate was exposed through a photomask having a line portion of 40 μm and a space portion of 10 μm. The photoresist was then developed by a developer only for positive photoresist, and the substrate was then dried under heat again.

The MNBA-Et single crystal substrate layer having the above-described photoresist patterned mask on the y-cut face was fixed on a heating substrate made of copper. This sample was set above a vacuum deposition boat in a vacuum deposition apparatus and the temperature of the copper heating substrate was raised to about 95°C. After evacuation of the chamber to $10^{-6}$ Torr, MNBA and MNBA-ClEt were vapor deposited as in Example 1 at individual deposition rates of about 0.5 nm/sec. The degree of vacuum during the vapor deposition was about 4.5 x $10^{-4}$ Torr. The vapor deposition was continued until the thickness of the deposited layer reached about 3.5 μm.

Thereafter, the sample was taken out of the vacuum vapor deposition apparatus. The sample was removed from the copper heating substrate and was observed with a microscope. Microcrystals were attached on the photoresist pattern.

The entire surface of the multilayer crystal was exposed and the photoresist pattern which became soluble in the developer only for positive photoresist was dissolved and removed. The resultant was then rinsed with water and dried. The polarization characteristics were examined by using a polarizing microscope. As a result, no change was observed in the light-transmitting property and extinction property before and after the vapor deposition. Thus, it was confirmed that the entire co-vapor-deposited MNBA and MNBA-ClEt layer was an isomorphous mixed single crystal of which principal axis of refractive index was coincident with that of the MNBA-Et single crystal substrate layer. By the observation with a reflector interferometer microscope, it was confirmed that the surface of the grown MNBA·MNBA-ClEt isomorphous mixed single crystal layer was optically smooth.

The end faces of the sample having a ridge three-dimensional waveguide of 10 μm width and 3.5 μm thickness which is a pattern-grown MNBA·MNBA-ClEt isomorphous mixed single crystal patterned layer were polished, and a light with a wavelength of 633 nm from He-Ne layer was guided through the end face of the patterned layer in $T_E$ mode or $T_M$ mode in the direction parallel to a principal axis of refractive. As a result, in both modes, the light was well guided.

The above-described MNBA-Et/MNBA·MNBA-ClEt multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

On the MNBA-Et/MNBA·MNBA-ClEt multilayer organic nonlinear optical crystal having the patterned layer, vapor phase heteroepitaxial growth of MNBA-Et was performed as follows:

The above-described MNBA-Et/MNBA·MNBA-ClEt multilayer organic nonlinear optical crystal was again fixed on the copper heating substrate in such a manner that the surface opposite to the patterned layer contacts the heating substrate. This sample was set above a vacuum deposition boat in a vacuum deposition apparatus and the temperature of the copper heating substrate was raised to about 100°C. After evacuation of the chamber to $10^{-6}$ Torr, MNBA-Et was vapor deposited. The degree of vacuum during the vapor deposition was about 5 x $10^{-4}$ Torr. The rate of vapor deposition was about 1 nm/sec. until the thickness of the vapor-deposited layer reached about 10 µm.

Thereafter, the sample was taken out of the vacuum vapor deposition apparatus. The entire MNBA-Et/MNBA·MNBA-ClEt multilayer organic nonlinear optical crystal having the MNBA·MNBA-ClEt patterned layer on which MNBA-Et was vapor-deposited was transparent. The sample was removed from the copper heating substrate and was observed with a polarizing microscope. The polarization characteristics were examined by using a polarizing microscope. As a result, no change was observed in the light-transmitting property and extinction property before and after the vapor deposition. Thus, it was confirmed that the entire vapor-deposited MNBA-Et layer was a single crystal of which principal axis of refractive index was coincident with those of the MNBA-Et single crystal substrate layer and MNBA·MNBA-ClEt patterned layer.

After polishing the end faces again, a light with a wavelength of 633 nm from He-Ne laser was guided through the embedded three-dimensional waveguide of line/space pattern, which was a patterned layer of MNBA·MNBA-ClEt isomorphous mixed single crystal, in $T_E$ mode or $T_M$ mode in the direction parallel to a principal axis of refractive index. As a result, in both modes, the light was well guided.

The above-described MNBA-Et/MNBA·MNBA-ClEt/MNBA-Et multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 16)

Production of MNBA-Et/MNBA·MNBA-ClEt Multilayer Organic Nonlinear Optical Crystal Having X·Y Branched Waveguide by the Use of Aluminum Mask

On the polished y-cut face of MNBA-Et single crystal sizing 30 mm x 12 mm x 9.5 mm, aluminum was vapor-deposited until the thickness reached about 900 nm.

Thereafter, on the surface of the aluminum layer, X-shaped and Y-shaped window patterns with a width of 5 µm made of a quinone diazide-based positive photoresist were formed.

The aluminum layer was selectively etched off by aqueous potassium ferricyanide/potassium hydroxide (4 wt% and 1 wt%, respectively) solution.

The photoresist pattern was exposed and removed by a developer.

On the thus prepared MNBA-Et single crystal layer having the aluminum pattern mask of X-shaped and Y-shaped windows, a MNBA·MNBA-ClEt isomorphous mixed crystal layer was grown by the vapor phase heteroepitaxial process to a thickness of about 3.0 µm in the same manner as in Example 13 except that the copper heating substrate was heated to about 125°C.

The sample was removed from the copper heating substrate and was observed with a microscope. Almost no microcrystals were attached to the aluminum pattern mask.

The aluminum layer was again etched by aqueous potassium ferricyanide/potassium hydroxide (2 wt% and 2wt%, respectively) solution and was completely removed. The resultant was rinsed with water and dried.

The polarization characteristics of the sample were examined by using a polarizing microscope. As a result, no change was observed in the light-transmitting property and extinction property before and after the vapor deposition. Thus, it was confirmed that the entire co-vapor-deposited MNBA and MNBA-ClEt layer was an isomorphous mixed single crystal of which principal axis of refractive index was coincident with that of the MNBA-Et single crystal layer. By the observation with a reflector interferometer microscope, it was confirmed that the surface of the grown MNBA·MNBA-ClEt isomorphous mixed single crystal layer was optically smooth.

After polishing the end faces, a light with a wavelength of 633 nm from He-Ne laser was guided through the X-shaped and Y-shaped ridge three-dimensional waveguide, which is the MNBA·MNBA-ClEt isomorphous mixed single crystal layer, was guided in $T_E$ mode or $T_M$ mode in the direction parallel to a principal axis of refractive index of the MNBA-Et single crystal. As a result, in both modes, the light was well guided.

The above-described MNBA-Et/MNBA·MNBA-ClEt multilayer organic nonlinear optical crystal having the X·Y-branched waveguide was heated to 120°C in an oven and then allowed to cool. No breaking (generation of cracks, peeling and dropping) was observed. Further, by repeating the above-described waveguiding experiment, it was confirmed that changes such as crystal distortion which clearly adversely affect the optical characteristics did not occur.

(Example 17)

Production of MNBA-Et/MNBA·MNBA-ClEt Multilayer Organic Nonlinear Optical Crystal Having Patterned Layer by Wet Etching

As in Example 13, a MNBA-Et (y-cut)/MNBA·MNBA-ClEt multilayer organic nonlinear optical crystal (size: 24 mm x 10 mm x 6.5 mm) having MNBA·MNBA-ClEt isomorphous mixed single crystal layer grown by the vapor phase heteroepitaxial process to a thickness of about 5.0 µm was prepared.

On the MNBA·MNBA-ClEt isomorphous mixed single crystal layer, a quinone diazide-based positive photoresist was coated to a thickness of about 1 µm by using a spinner. After drying the photoresist by heating, the sample was exposed through a photomask having a line portion of 10 µm and a space portion of 40 µm. The photoresist was then developed by a developer only for positive photoresist, and the sample was again dried by heating.

The thus obtained MNBA-Et/MNBA·MNBA-ClEt multilayer organic nonlinear optical crystal having the photoresist pattern on the MNBA·MNBA-ClEt isomorphous mixed single crystal layer was immersed in 1,2-dichloroethane/cyclohexane (1/1 v/v) mixed etching solution under stirring at room temperature (about 25°C) so as to carry out the pattern etching. About 2.5 minutes later, the multilayer crystal was drawn up and was rinsed with cyclohexane, followed by drying. The entire surface of the sample was exposed. The photoresist pattern which became soluble in the developer only for positive photoresist was dissolved by the developer and removed. The resultant was rinsed with water and dried. By observing the resulting sample with a polarizing microscope, it was confirmed that good line/space pattern was formed.

The end faces of the sample having a ridge three-dimensional waveguide of 10 µm width and 5 µm thickness made of MNBA·MNBA-ClEt isomorphous mixed single crystal layer were polished, and a light with a wavelength of 633 nm from He-Ne laser was guided through the end face of the layer in $T_E$ mode or $T_M$ mode in the direction parallel to the principal axis of refractive index. As a result, in both modes, the light was well guided.

The above-described MNBA-Et/MNBA·MNBA-ClEt multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

A part of the MNBA-Et/MNBA·MNBA-ClEt multilayer organic nonlinear optical crystal having the patterned layer of the MNBA·MNBA-ClEt isomorphous mixed single crystal layer was cut out and etching shape and etching depth were observed with an electron microscope. The observation of the cross section revealed that the patterned layer had a trapezium shape and the etching depth was about 5 µm which was almost the same as the thickness of the isomorphous mixed single crystal layer.

(Example 18)

A MNBA/MNBA-ClEt ↓ ·MNBA-Et ↑/MNBA-Et multilayer organic nonlinear optical crystal sizing 20 mm x 10 mm x 7 mm was prepared as in Example 14. The thickness of the MNBA-ClEt↓·MNBA-Et↑ isomorphous mixed single crystal layer grown by the vapor phase heteroepitaxial process was about 5.0 µm and the thickness of the MNBA-Et single crystal layer thereon was about 5.0 µm.

On the MNBA-Et grown single crystal layer, X-shaped and Y-shaped patterns with a width of 5 µm and a thickness of about 1.5 µm made of quinone diazide-based positive photoresist was formed.

The resulting multilayer crystal was subjected to reactive ion etching from the side of the photoresist pattern. As for the etching conditions, tetrafluoromethane/oxygen mixed gas (80/30, v/v) was used, the degree of vacuum in the vacuum chamber was 0.075 Torr, the power between electrodes was 0.64 W/cm$^2$, and the etching was performed at a constant temperature (30°C) by cooling the electrode at the side of the multilayer crystal with water.

After the etching, the entire surface of the multilayer crystal was exposed. The photoresist pattern which became soluble in the developer only for positive photoresist was dissolved by the developer and removed. The resultant was rinsed with water and dried. By observing the resulting sample with a polarizing microscope, it was confirmed that a

good X-shaped and Y-shaped patterns were formed.

After polishing the end faces, a light with a wavelength of 633 nm from He-Ne laser was guided through X-shaped and Y-shaped ridge three-dimensional waveguide which was the MNBA-ClEt ↓·MNBA-Et↑ isomorphous mixed single crystal layer, was guided in $T_E$ mode or $T_M$ mode in the direction parallel to the principal axis of refractive index. As a result, in both modes, the light was well guided.

The above-described MNBA/MNBA-ClEt ↓·MNBA-Et ↑/MNBA-Et multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

The etching shape and etching depth of the X-shaped and Y-shaped ridge three-dimensional waveguide (patterned layer) was observed with an electron microscope. The observation of the cross section revealed that the cross section of the MNBA three-dimensional waveguide was rectangular and the etching depth was about 10 μm which was almost the same as the total of the thickness of the MNBA-Et grown single crystal and the MNBA-ClEt↓·MNBA-Et↑ isomorphous mixed single crystal layer.

(Example 19)

Production of MNBA-Et/MNBA·MNBA-ClEt Multilayer Organic Nonlinear Optical Crystal by Solution Method

On an optically smooth y-cut ({0 1 0}, ac plane) MNBA-Et single crystal (size: 22 mm x 8 mm x 0.8 mm), a MNBA·MNBA-ClEt single crystal layer was grown by solution phase heteroepitaxial growth as follows:

In an about one liter cylindrical glass vessel having three openings with caps, a solution prepared by completely dissolving about 14.0 g of MNBA powder crystals and about 19.0 g of MNBA-ClEt powder crystals under heat in about 500 ml of chloroform was placed. Of the three openings, two were used as an inlet and an outlet of dry nitrogen gas, and the other one was stopped with a silicone rubber stopper. A platinum line was penetrated through the silicone rubber stopper and the above-described y-cut MNBA-Et single crystal was hung on the tip of the platinum line in such a manner that the crystal does not contact the solution. The openings were capped so that the atmosphere in the vessel was converted to chloroform atmosphere. Dry nitrogen gas was introduced at a rate of about 2 ml/min. and the system was left to stand under these conditions for two days at room temperature (about 25°C), so that a small amount of MNBA-MNBA-ClEt isomorphous mixed crystal was precipitated by slow evaporation and the solution was settled.

Thereafter, the platinum line was lowered in such a manner that half of the {0 1 0} face of the MNBA-Et single crystal was immersed in the MNBA·MNBA-ClEt solution in chloroform, and the slow evaporation was continued. About one hour later, the MNBA-Et single crystal was drawn up from the MNBA·MNBA-ClEt solution in chloroform and was rinsed with cyclohexane/isopropanol mixed solvent (1:1) and then with cyclohexane, followed by drying.

All of the regions immersed in the MNBA·MNBA-ClEt solution in chloroform and not immersed in the solution on the {0 1 0} face remained transparent in their entirety. By observing the resulting sample with a reflector microscope, it was found that a step was formed at the boundary between the immersed region and non-immersed region due to the deposited layer. The height of the step was measured by the pin-touch method. The height of the step on the {1 0 1} face was about 6.0 μm. The polarization characteristics of the {0 1 0} face were examined with a polarizing microscope. As a result, the thickness-increased regions (i.e., the region immersed in the MNBA·MNBA-ClEt solution in chloroform) and the other regions (i.e., the region not immersed in the solution) did not change in their light-transmitting properties and extinction properties. Thus, it was confirmed that the MNBA·MNBA-ClEt single crystal layer was formed on the entire surface of the region immersed in the solution with its principal axis of refractive index coincident with that of the MNBA-Et single crystal substrate layer.

The above-described MNBA-Et/MNBA·MNBA-ClEt multilayer organic nonlinear optical crystal was heated to 120°C in an oven and then allowed to cool after taking the sample out of the oven, but no breaking (generation of cracks, peeling and dropping) was observed. (Example 20) Production of MNBA/MNBA·MNBA-ClEt Multilayer Organic Nonlinear Optical Crystal by Solution Method

On an optically smooth y-cut ({0 1 0}, ac plane) MNBA-Et single crystal (size: 10 mm x 8 mm x 0.8 mm), a MNBA·MNBA-ClEt single crystal layer was grown by the solution phase heteroepitaxial growth as in Example 19.

About 1.5 hours later, the increase in the thickness on the {0 1 0} face was about 11.0 μm. Further, by the observation with a polarizing microscope, it was confirmed that the MNBA·MNBA-ClEt single crystal layer was formed on the entire surface of the region immersed in the solution with its principal axis of refractive index coincident with that of the MNBA single crystal substrate layer.

The above-described MNBA/MNBA·MNBA-ClEt multilayer organic nonlinear optical crystal was heated to 120°C in an oven and then allowed to cool after taking the sample out of the oven, but no breaking (generation of cracks, peeling and dropping) was observed.

(Example 21)

Production of MNBA/MNBA·MNBA-ClEt/MNBA·MNBA-Et Multilayer Organic Nonlinear Optical Crystal by Solution Method and Melt Method

Using the MNBA/MNBA·MNBA-ClEt multilayer organic nonlinear optical crystal having optically smooth {0 1 0} face, which was obtained by the solution phase heteroepitaxial growth in Example 20, the melt phase heteroepitaxial growth of MNBA·MNBA-Et was observed. In the visual field of a polarizing microscope equipped with a hot plate, a slide glass carrying MNBA and MNBA-Et mixed powder crystals (3:7 mol/mol) thereon was placed, and the sample was heated to 177°C so as to melt the mixed powder crystals. Thereafter, the sample was cooled to 170.5°C and was kept at this temperature. An MNBA/MNBA·MNBA-ClEt multilayer organic nonlinear optical crystal (m.p. of MNBA: about 194°C; m.p. of MNBA-ClEt: 194 - 196°C) placed on a different portion of the slide glass and so having almost the same temperature as the MNBA·MNBA-Et melt was moved to the MNBA·MNBA-Et melt in such a manner that the optically smooth {0 1 0} face contact the MNBA·MNBA-Et melt. The temperature of the hot plate was lowered at a rate of 0.1°C/min. As a result, crystal growth was observed on the {0 1 0} face of the MNBA/MNBA·MNBA-ClEt multilayer organic nonlinear optical crystal. It was also confirmed from the polarization characteristics that the grown crystal was a single crystal having the same direction of the principal axis of refractive index as that of the multilayer crystal on which the single crystal was grown.

By keeping the temperature at about 168.5°C, MNBA·MNBA-Et single crystal layer was grown. About 5 minutes later, the increase in the thickness of the layer on the {0 1 0} face was about 250 μm.

(Example 22)

Production of MNBA-Et/MNBA·MNBA-ClEt Multilayer Organic Nonlinear Optical Crystal Having X·Y Branched Waveguide by Using Aluminum Mask

On the polished y-cut face of MNBA-Et single crystal sizing 10 mm x 12 mm x 9.5 mm, aluminum was vapor-deposited until the thickness reached about 2000 nm. Thereafter, on the surface of the aluminum layer, X-shaped and Y-shaped window patterns with a width of 40 μm and a thickness of about 1.5 μm made of a quinone diazide-based positive photoresist were formed. The aluminum layer was selectively etched off by aqueous potassium ferricyanide/potassium hydroxide (4 wt% and 1 wt%, respectively) solution.

The photoresist pattern was exposed and removed by a developer.

On the thus prepared MNBA-Et single crystal layer having the aluminum pattern mask of X-shaped and Y-shaped windows, a MNBA·MNBA-ClEt isomorphous mixed crystal layer was grown by the solution phase heteroepitaxial process as in Example 19 for 15 minutes.

The sample was taken out and was rinsed with isopropanol:n-hexane (1:1). By observing the sample with a microscope, it was found that the thickness of the grown layer was about 2 μm and almost no microcrystals were attached to the aluminum pattern mask.

The aluminum layer was again etched by aqueous potassium ferricyanide/potassium hydroxide (2 wt% and 2wt%, respectively) solution and was completely removed. The resultant was rinsed with water and dried.

The polarization characteristics of the sample were examined by using a polarizing microscope. As a result, no change was observed in the light-transmitting property and extinction property before and after the crystal growth. Thus, it was confirmed that the entire simultaneously grown MNBA and MNBA-ClEt layer was an isomorphous mixed single crystal of which principal axis of refractive index was coincident with that of the MNBA-Et single crystal layer used as the substrate. By the observation with a reflector interferometer microscope, it was confirmed that the surface of the grown MNBA·MNBA-ClEt isomorphous mixed single crystal layer was optically smooth.

After polishing the end faces, a light with a wavelength of 633 nm from He-Ne laser was guided through X-shaped and Y-shaped ridge three-dimensional waveguide which was the MNBA·MNBA-ClEt isomorphous mixed single crystal layer in $T_E$ mode or $T_M$ mode in the direction parallel to the principal axis of refractive index. As a result, in both modes, the light was well guided.

The above-described MNBA-Et/MNBA·MNBA-ClEt multilayer organic nonlinear optical crystal having the X·Y-branched waveguide was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 23)

Production of MNBA-Et/MNBA·MNBA-ClEt Multilayer Organic Nonlinear Optical Crystal Having Patterned Layer by Wet Etching

As in Example 19, a MNBA-Et (y-cut)/MNBA·MNBA-ClEt multilayer organic nonlinear optical crystal (size: 22 mm x 8 mm x 0.8 mm) having MNBA·MNBA-ClEt isomorphous mixed single crystal layer grown by the liquid phase heteroepitaxial process to a thickness of about 5.0 µm was prepared.

On the MNBA·MNBA-ClEt isomorphous mixed single crystal layer of the multilayer organic nonlinear optical crystal, a quinone diazide-based positive photoresist was coated to a thickness of about 1 µm by using a spinner. After drying the photoresist by heating, the sample was exposed through a photomask having a line portion of 10 µm and a space portion of 40 µm. The photoresist was then developed by a developer only for positive photoresist, and the sample was again dried by heating.

The thus obtained MNBA-Et/MNBA·MNBA-ClEt multilayer organic nonlinear optical crystal having the photoresist pattern on the MNBA·MNBA-ClEt isomorphous mixed single crystal layer was immersed in 1,2-dichloroethane/cyclohexane (1/1 v/v) mixed etching solution under stirring at room temperature (about 25°C) so as to carry out the pattern etching. About 2.5 minutes later, the multilayer crystal was drawn up and was rinsed with cyclohexane, followed by drying. The entire surface of the sample was exposed. The photoresist pattern which became soluble in the developer only for positive photoresist was dissolved by the developer and removed. The resultant was rinsed with water and dried. By observing the resulting sample with a polarizing microscope, it was confirmed that good line/space pattern was formed.

The end faces of the sample having a ridge three-dimensional waveguide of 10 µm width and 5 µm thickness made of MNBA·MNBA-ClEt isomorphous mixed single crystal layer were polished, and a light with a wavelength of 633 nm from He-Ne laser was guided through the end face of the layer in $T_E$ mode or $T_M$ mode in the direction parallel to the principal axis of refractive index. As a result, in both modes, the light was well guided.

The above-described MNBA-Et/MNBA·MNBA-ClEt multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

A part of the MNBA-Et/MNBA·MNBA-ClEt multilayer organic nonlinear optical crystal having the patterned layer of the MNBA·MNBA-ClEt isomorphous mixed single crystal layer was cut out and etching shape and etching depth were observed with an electron microscope. The observation of the cross section revealed that the patterned layer had a trapezium shape and the etching depth was about 5 µm which was almost the same as the thickness of the isomorphous mixed single crystal layer.

(Example 24)

Production of MNBA-Et/MNBA Multilayer Organic Nonlinear Optical Crystal Having Patterned Layer

By observing a MNBA-Et crystal (size: 35 mm x 18 mm x 12 mm) grown from a solution in dimethylacetamide by the slow cooling method with a polarizing microscope, it was found that this crystal was a single crystal. By X-ray diffraction analysis, it was found that the largest crystal face was {0 1 0} face. The (0 1 0) face and (0 -1 0) face were polished with diamond powder to make the faces optically smooth.

By the observation of conoscopic image with a polarizing microscope, it was found that a principal axis of refractive index was perpendicular to the {0 1 0} face.

Using the optically smooth {0 1 0} face of the thus obtained MNBA-Et single crystal as a growth substrate layer, pattern growth of MNBA by the vapor phase heteroepitaxial growth was performed.

On the {0 1 0} face of the MNBA-Et single crystal substrate layer, a quinone diazide-based positive photoresist was coated to a thickness of about 5 µm by using a spinner. After drying the photoresist by heating, the sample was exposed through a photomask having a line portion of 40 µm and a space portion of 10 µm. The photoresist was then developed by a developer only for positive photoresist, and the sample was again dried by heating.

The MNBA-Et single crystal substrate layer having the above-described photoresist patterned mask on the {0 1 0} face was fixed on a heating substrate made of copper. This sample was set above a vacuum deposition boat in a vacuum deposition apparatus and the temperature of the copper heating substrate was raised to about 95°C. After evacuation of the chamber to $10^{-6}$ Torr, MNBA was vapor-deposited. The degree of vacuum during the vapor deposition was about $4.5 \times 10^{-4}$ Torr. The deposition rate was controlled to about 2.00 nm/sec. by controlling the temperature of the vacuum deposition boat by adjusting the boat voltage. The thickness of the deposited layer was monitored with a

quartz oscillator type membrane thickness monitor and the vapor deposition was continued until the thickness of the deposited layer reached about 3.5 μm.

Thereafter, the sample was taken out of the vacuum vapor deposition apparatus. The sample was removed from the copper heating substrate and was observed with a microscope. Microcrystals were attached on the photoresist pattern.

The entire surface of the multilayer crystal was exposed and the photoresist pattern which became soluble in the developer only for positive photoresist was dissolved and removed. The resultant was then rinsed with water and dried. The polarization characteristics were examined by using a polarizing microscope. As a result, no change was observed in the light-transmitting property and extinction property before and after the vapor deposition. Thus, it was confirmed that the entire vapor-deposited MNBA layer was a single crystal of which principal axis of refractive index was coincident with that of the MNBA-Et single crystal substrate layer. By the observation with a reflector interferometer microscope, it was confirmed that the surface of the grown MNBA single crystal layer was optically smooth.

The end faces of the sample having a ridge three-dimensional waveguide of 10 μm width and 3.5 μm thickness (MNBA patterned layer) were polished, and a light with a wavelength of 633 nm from He-Ne laser was guided through the end face in $T_E$ mode or $T_M$ mode in the direction parallel to the principal axis of refractive index. As a result, in both modes, the light was well guided. Thus, the refractive index of the MNBA single crystal layer was larger than that of the MNBA-Et single crystal layer.

The above-described MNBA-Et/MNBA multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

On the MNBA-Et/MNBA multilayer organic nonlinear optical crystal having the MNBA patterned layer, vapor phase heteroepitaxial growth of MNBA-Et was performed as follows:

The MNBA-Et/MNBA multilayer organic nonlinear optical crystal was again fixed on the copper heating substrate in such a manner that the vapor deposition was to be performed on the patterned layer. This sample was set above a vacuum deposition boat in a vacuum deposition apparatus and the temperature of the copper heating substrate was raised to about 100°C. After evacuation of the chamber to 2 x $10^{-6}$ Torr, MNBA-Et was vapor-deposited. The degree of vacuum during the vapor deposition was about 5 x $10^{-6}$ Torr. The rate of vapor deposition was about 1 nm/sec. until the thickness of the vapor-deposited layer reached about 10 μm and then about 5 nm/sec. until the total thickness of the vapor-deposited layer reached about 30 μm. Thereafter, the sample was taken out of the vacuum vapor deposition apparatus. The entire MNBA-Et/MNBA multilayer organic nonlinear optical crystal having vapor-deposited MNBA-Et was transparent. The sample was removed from the copper heating substrate and the polarization characteristics were examined by using a polarizing microscope. As a result, no change was observed in the light-transmitting property and extinction property before and after the vapor deposition. Thus, it was confirmed that the entire vapor-deposited MNBA-Et layer was a single crystal of which principal axis of refractive index was coincident with those of the MNBA-Et single crystal substrate layer and MNBA patterned layer.

After polishing the end faces again, a light with a wavelength of 633 nm from He-Ne laser was guided through the embedded three-dimensional waveguide of line/space pattern made of the MNBA single crystal layer in $T_E$ mode or $T_M$ mode in the direction parallel to the principal axis of refractive index. As a result, in both modes, the light was well guided.

The above-described MNBA-Et/MNBA/MNBA-Et multilayer organic nonlinear optical crystal having the patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 25)

Production of MNBA-Et/MNBA/MNBA-ClEt and MNBA-Et/MNBA/MNBA-ClEt/MNBA-Et Multilayer Organic Non-linear Optical Crystals Having MNBA-ClEt Pattern Layers

On the polished {0 1 0} face of MNBA-Et single crystal sizing 31 mm x 14 mm x 8.5 mm, MNBA was deposited to a thickness of about 5.0 μm by the vapor phase heteroepitaxial growth by employing the same growth conditions as in Example 24, to obtain an optically good MNBA-Et/MNBA multilayer organic non-linear optical crystal.

On the surface of the MNBA crystal layer, X-shaped and Y-shaped window patterns with a width of 5 μm of quinone diazide-based positive photoresist with a thickness of about 4.5 μm was formed.

This sample was set above a vacuum deposition boat in a vacuum deposition apparatus in such a manner that

the MNBA single crystal layer having the photoresist pattern faces downward and the temperature of the copper heating substrate was raised to about 95°C. After evacuation of the chamber to 2 x $10^{-6}$ Torr, the vapor phase heteroepitaxial growth of MNBA-ClEt was performed.

The degree of vacuum during the vapor deposition was about 3.2 x $10^{-4}$ Torr and the rate of vapor deposition was about 0.8 nm/sec. The vapor deposition was continued until the deposited thickness reached about 3.5 μm.

Thereafter, the sample was taken out of the vacuum vapor deposition apparatus. The sample was removed from the copper heating substrate and was observed with a microscope. Microcrystals were attached on the photoresist pattern.

The entire surface of the multilayer crystal was exposed and the photoresist pattern which became soluble in the developer only for positive photoresist was dissolved and removed. The resultant was then rinsed with water and dried. The polarization characteristics were examined by using a polarizing microscope. As a result, no change was observed in the light-transmitting property and extinction property before and after the vapor deposition. Thus, it was confirmed that the entire vapor-deposited MNBA-ClEt layer was a single crystal of which principal axis of refractive index was coincident with that of the MNBA-Et/MNBA multilayer organic nonlinear optical crystal. By the observation with a reflector interferometer microscope, it was confirmed that the surface of the grown MNBA-ClEt single crystal layer was optically smooth.

After polishing the end faces, a light with a wavelength of 633 nm from He-Ne laser was guided through the X-shaped and Y-shaped ridge three-dimensional waveguide made of the MNBA-ClEt single crystal layer in $T_E$ mode or $T_M$ mode in the direction parallel to the principal axis of the refractive index. As a result, in both modes, the light was well guided.

Thus, the refractive index of the MNBA-ClEt single crystal layer was larger than that of the MNBA single crystal layer.

The above-described MNBA-Et/MNBA/MNBA-ClEt multilayer organic nonlinear optical crystal having the MNBA-ClEt patterned layer was heated to 120°C in an oven and then allowed to cool. No breaking (generation of cracks, peeling and dropping) was observed. Further, by repeating the above-described waveguiding experiment, it was confirmed that changes such as crystal distortion which clearly adversely affect the optical characteristics did not occur.

On the side of the MNBA-ClEt patterned layer, MNBA-Et was vapor-deposited to a thickness of about 30 μm. The copper heating substrate was heated to about 100°C, and the chamber was evacuated to 2 x $10^{-6}$ Torr, followed by vapor deposition of MNBA-Et. The degree of vacuum during the vapor deposition was about 3.0 x $10^{-6}$ Torr. The rate of vapor deposition was about 0.5 nm/sec. until the thickness of the deposited layer reached about 10 μm and about 2 nm/sec. until the total thickness of the deposited layer reached about 30 μm.

By observing the sample with a polarizing microscope, good epitaxial growth of MNBA-Et was observed on the entire surface of the sample.

After polishing the end faces, a light with a wavelength of 633 nm from He-Ne laser was guided through the X-shaped and Y-shaped embedded three-dimensional waveguide made of the MNBA-ClEt single crystal layer in $T_E$ mode or $T_M$ mode in the direction parallel to the principal axis of refractive index. As a result, in both modes, the light was well guided.

Thus, the refractive index of the MNBA-ClEt single crystal layer was larger than those of the MNBA single crystal layer and MNBA-Et single crystal layer.

The above-described MNBA-Et/MNBA/MNBA-ClEt/MNBA-Et multilayer organic nonlinear optical crystal having the MNBA-ClEt patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 26)

Production of MNBA-Et/MNBA Multilayer Organic Nonlinear Optical Crystal Having Patterned Layer

On a MNBA-Et single crystal (size: 29 mm x 6 mm x 4.4 mm) having an optically smooth {0 1 0} face, a pattern growth of MNBA by the solution phase heteroepitaxial growth was performed as follows:

First, as in Example 24, on the {0 1 0} face of the MNBA-Et single crystal substrate layer, a quinone diazide-based positive photoresist was coated to a thickness of about 5 μm by using a spinner. After drying the photoresist by heating, the sample was exposed through a photomask having a line portion of 40 μm and a space portion of 10 μm. The photoresist was then developed by a developer only for positive photoresist, and the sample was again dried by heating, to obtain a MNBA-Et single crystal growth substrate layer having the positive photoresist pattern mask on the {0 1 0} face.

In an about one liter cylindrical glass vessel having three openings with caps, a solution prepared by completely

dissolving about 28.0 g of MNBA powder crystals under heat in about 500 ml of chloroform was placed. Of the three openings, two were used as an inlet and an outlet of dry nitrogen gas, and the other one was stopped with a silicone rubber stopper. A platinum line was penetrated through the silicone rubber stopper and the above-described MNBA-Et single crystal growth substrate layer having the photoresist pattern mask on its {0 1 0} face was hung on the tip of the platinum line in such a manner that the crystal layer does not contact the solution. The openings were capped so that the atmosphere in the vessel was converted to chloroform atmosphere. Dry nitrogen gas was introduced at a rate of about 2 ml/min. and the system was left to stand under these conditions for two days at room temperature (about 25°C), so that the excess MNBA crystals were precipitated by slow evaporation and the solution was settled.

Thereafter, the region of the MNBA-Et single crystal growth substrate layer having the photoresist pattern mask on its (0 1 0} face other than a part of the substrate layer was immersed in the MNBA solution in chloroform, and the slow evaporation was continued. About two hours later, the MNBA-Et single crystal growth substrate layer was drawn up from the MNBA solution in chloroform and was rinsed with cyclohexane/isopropanol mixed solvent (1:1) and then with cyclohexane, followed by drying.

The entire surface of the multilayer crystal was exposed, and the photoresist pattern which became soluble in the developer only for positive photoresist was dissolved and removed, followed by rinsing with water and drying of the sample.

The entire surface of the multilayer crystal remained transparent. By observing the resulting sample with a reflector microscope, it was found that a step was formed at the boundary between the immersed region and non-immersed region due to the deposited layer. The height of the step was measured by the pin-touch method. The height of the step was about 20.0 μm.

The polarization characteristics of the entire multilayer crystal were examined with a polarizing microscope. As a result, the thickness-increased regions of the MNBA-Et single crystal substrate layer and of the MNBA patterned layer (i.e., the region immersed in the MNBA-Et solution in chloroform) and the other region (i.e., the region not immersed in the solution) did not change in their light-transmitting properties and extinction properties. Thus, it was confirmed that the MNBA single crystal layer was formed on the entire surface of the region immersed in the solution with its principal axis of refractive index coincident with that of the MNBA-Et substrate single crystal layer.

After polishing the end faces, a light with a wavelength of 633 nm from He-Ne laser was guided through the MNBA patterned layer, that is, the formed ridge three-dimensional waveguide in $T_E$ mode or $T_M$ mode in the direction parallel to the principal axis of refractive index. As a result, in both modes, the light was well guided.

The above-described MNBA-Et/MNBA multilayer organic nonlinear optical crystal having the MNBA patterned layer was heated to 120°C in an oven and then allowed to cool after taking the sample out of the oven. No breaking (generation of cracks, peeling and dropping) was observed.

(Example 27)

Production of MNBA/MNBA-ClEt/MNBA-Et Multilayer Organic Nonlinear Optical Crystal Having MNBA-ClEt Patterned Layer

Based on a MNBA single crystal (size: 41 mm x 12 mm x 1.1 mm) having an optically smooth {0 1 0} polished face, which was grown from a solution in dimethylacetamide, a MNBA/MNBA-ClEt multilayer organic nonlinear optical crystal having a MNBA-ClEt patterned layer was prepared by the vapor phase pattern growth of MNBA-ClEt as in Example 25. On the multilayer crystal thus obtained, MNBA-Et was grown by the melt phase heteroepitaxial growth as follows:

In the visual field of a polarizing microscope equipped with a hot plate, a slide glass carrying MNBA-Et powder crystals thereon was placed, and the sample was heated to 172°C so as to melt the MNBA-Et powder crystals (m.p.: 169.5 - 170°C). An MNBA/MNBA-ClEt multilayer organic nonlinear optical crystal having a MNBA-ClEt patterned layer (m.p. of MNBA: about 194°C; m.p. of MNBA-ClEt: 194 - 196°C) placed on a different portion of the slide glass and so having almost the same temperature as the MNBA-Et melt was moved to the MNBA-Et melt in such a manner that the surface having the MNBA-ClEt patterned layer contacts the MNBA-Et melt. The temperature of the hot plate was lowered at a rate of about 0.5°C/min. As a result, crystal growth was observed on the optically smooth {0 1 0} face of the MNBA/MNBA-ClEt multilayer organic nonlinear optical crystal having the patterned MNBA-ClEt layer from the temperature immediately below the melting point which is within the temperature range in which the MNBA-Et melt shows supercooling if the MNBA-Et melt alone is cooled (although depending on the cooling rate, the phase emerging next is the nematic liquid crystal phase). It was also confirmed from the polarization characteristics that the grown crystal was a single crystal having the same direction of the principal axis of refractive index as that of the multilayer crystal which was the substrate layer.

The MNBA-Et single crystal layer was also grown on the MNBA-ClEt patterned layer.

By keeping the temperature at about 168°C, MNBA-Et single crystal layer was grown. About 3 minutes later, the

increase in the thickness of the layer was about 100 μm.

The MNBA/MNBA-ClEt multilayer organic nonlinear optical crystal having the MNBA-ClEt patterned layer was drawn from the MNBA-Et melt and was allowed to cool.

After polishing the end faces, a light with a wavelength of 633 nm from He-Ne laser was guided through the MNBA-ClEt patterned layer, that is, the formed embedded three-dimensional waveguide in $T_E$ mode or $T_M$ mode in the direction parallel to the principal axis of refractive index. As a result, in both modes, the light was well guided.

The above-described MNBA/MNBA-ClEt/MNBA-Et multilayer organic nonlinear optical crystal having the MNBA-ClEt patterned layer was heated to 120°C in an oven and then allowed to cool after taking the sample out of the oven. No breaking (generation of cracks, peeling and dropping) was observed.

(Example 28)

Production of MNBA-Et/MNBA-ClEt Multilayer Organic Nonlinear Optical Crystal Having MNBA-ClEt Patterned Layer

On the polished {0 1 0} face of MNBA-Et single crystal sizing 30 mm x 12 mm x 9.5 mm, aluminum was vapor-deposited to a thickness of about 900 nm.

Thereafter, on the surface of the aluminum layer, X-shaped and Y-shaped window patterns with a width of 5 μm and a thickness of about 1.5 μm made of a quinone diazide-based positive photoresist were formed.

The aluminum layer was selectively etched off by aqueous potassium ferricyanide/potassium hydroxide (4 wt% and 1 wt%, respectively) solution.

The photoresist pattern was exposed and removed by a developer.

On the thus prepared MNBA-Et single crystal layer having the aluminum pattern mask of X-shaped and Y-shaped windows, MNBA-ClEt crystal layer was grown by the vapor phase heteroepitaxial process as follows:

The sample was set above a vacuum vapor deposition boat in a vacuum vapor deposition apparatus in such a manner that the MNBA-Et single layer having the aluminum pattern mask faces downward. After evacuating the chamber to 2 x $10^{-6}$ Torr, the copper heating substrate was heated to about 125°C, and then the MNBA-ClEt was vapor-deposited to a thickness of about 3.0 μm.

The degree of vacuum during the vapor deposition was about 3.1 x $10^{-6}$ Torr, and the rate of vapor deposition was about 2.80 nm/sec.

The sample was removed from the copper heating substrate and was observed with a microscope. Almost no microcrystals were attached to the aluminum pattern mask.

The aluminum layer was again etched by aqueous potassium ferricyanide/potassium hydroxide (2 wt% and 2wt%, respectively) solution and was completely removed. The resultant was rinsed with water and dried.

The polarization characteristics of the sample were examined by using a polarizing microscope. As a result, no change was observed in the light-transmitting property and extinction property before and after the vapor deposition. Thus, it was confirmed that the entire vapor-deposited MNBA-ClEt layer was a single crystal of which principal axis of refractive index was coincident with that of the MNBA-Et single crystal layer. By the observation with a reflector interferometer microscope, it was confirmed that the surface of the grown MNBA-ClEt crystal layer was optically smooth.

After polishing the end faces, a light with a wavelength of 633 nm from He-Ne laser was guided through the X-shaped and Y-shaped ridge three-dimensional waveguide made of the MNBA-ClEt single crystal layer in $T_E$ mode or $T_M$ mode in the direction parallel to the principal axis of refractive index. As a result, in both modes, the light was well guided.

The above-described MNBA-Et/MNBA-ClEt multilayer organic nonlinear optical crystal having the MNBA-ClEt patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 29)

Production of MNBA-Et/MNBA and MNBA-Et/MNBA/MNBA-Et Multilayer Organic Nonlinear Optical Crystals Having MNBA Patterned Layer

A MNBA-Et crystal (size: 25 mm x 11 mm x 8.5 mm) was grown from a solution in dimethylacetamide by the slow cooling method.

By observing the crystal with a polarizing microscope, it was found that this crystal was a single crystal. By X-ray diffraction analysis, it was found that the largest crystal face was {0 1 0} face. The (0 1 0) face and (0 -1 0) face were polished with diamond powder to make the faces optically smooth. By the observation of conoscopic image with a

polarizing microscope, it was found that a principal axis of refractive index was perpendicular to the {0 1 0} face.

Using the MNBA-Et single crystal having the thus obtained optically smooth surface as the substrate layer, pattern growth of MNBA by the vapor phase heteroepitaxial growth was performed as follows:

The above-described substrate layer was fixed on a heating substrate made of copper. This sample was set above a vacuum deposition boat in a vacuum deposition apparatus and the temperature of the copper hating substrate was raised to about 100°C. After evacuation of the chamber to 2 x $10^{-6}$ Torr, MNBA was vapor-deposited. The degree of vacuum during the vapor deposition was about 4 x $10^{-6}$ Torr. The deposition rate was controlled to about 1.50 nm/sec. by controlling the temperature of the vacuum deposition boat by adjusting the boat voltage. The thickness of the deposited layer was monitored with a quartz oscillator type membrane thickness monitor and the vapor deposition was continued until the thickness of the deposited layer reached about 5.0 μm.

Thereafter, the sample was taken out of the vacuum vapor deposition apparatus. The MNBA-Et single crystal substrate layer on which MNBA was vapor-deposited was transparent in its entirety. The sample was removed from the copper heating substrate and the polarization characteristics were examined by observing the sample with a polarizing microscope. As a result, no change was observed in the light-transmitting property and extinction property before and after the vapor deposition. Thus, it was confirmed that the entire vapor-deposited MNBA layer was a single crystal of which principal axis of refractive index was coincident with that of the MNBA-Et single crystal substrate layer. By the observation with a reflector interferometer microscope, it was confirmed that the surface of the grown MNBA single crystal layer was optically smooth.

By using a prism made of rutile, a light with a wavelength of 633 nm from He-Ne laser was guided in $T_E$ mode or $T_M$ mode through the MNBA single crystal layer in the direction parallel to the principal axis of the MNBA-Et single crystal substrate. As a result, in both modes, the light was well guided. Thus, the refractive index of the MNBA single crystal layer was larger than that of the MNBA-Et single crystal layer.

On the MNBA crystal layer of the thus prepared optically good MNBA-Et/MNBA multilayer organic nonlinear optical crystal which functions as a two-dimensional waveguide, a quinone diazide-based positive photoresist was coated to a thickness of about 1 μm by using a spinner. After drying the photoresist by heating, the sample was exposed through a photomask having a line portion of 10 μm and a space portion of 40 μm. The photoresist was then developed by a developer only for positive photoresist, and the sample was again dried by heating.

The thus obtained MNBA-Et/MNBA multilayer organic nonlinear optical crystal having the photoresist pattern on the MNBA single crystal layer was immersed in 1,2-dichloroethane/cyclohexane (1/1 v/v) mixed etching solution under stirring at room temperature (about 25°C) so as to carry out the pattern etching. About 2.5 minutes later, the multilayer crystal was drawn up and was rinsed with cyclohexane, followed by drying. The entire surface of the sample was exposed. The photoresist pattern which became soluble in the developer only for positive photoresist was dissolved by the developer and removed. The resultant was rinsed with water and dried. By observing the resulting sample with a polarizing microscope, it was confirmed that good line/space pattern was formed.

The end faces of the sample having a ridge three-dimensional waveguide (MNBA patterned layer) having a width of 10 μm and a thickness of 5 μm were polished and a light with a wavelength of 633 nm from He-Ne laser was guided therethrough in $T_E$ mode or $T_M$ mode in the direction parallel to the principal axis of refractive index. As a result, in both modes, the light was well guided.

The above-described MNBA-Et/MNBA multilayer organic nonlinear optical crystal having the MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

A part of the MNBA-Et/MNBA multilayer organic nonlinear optical crystal having the MNBA patterned layer was cut out and the etching shape and etching depth were observed with an electron microscope. The observation of the cross section revealed that the patterned layer had a trapezium shape and the etching depth was about 5 μm which was almost the same as the thickness of the MNBA single crystal layer.

On the other MNBA-Et/MNBA multilayer organic nonlinear optical crystal having the MNBA patterned layer, MNBA-Et was grown by the vapor phase heteroepitaxial method as follows:

The MNBA-Et/MNBA multilayer organic nonlinear optical crystal was again fixed on a copper heating substrate in such a manner that the vapor deposition is to be performed on the patterned layer. This sample was set above a vacuum deposition boat in a vacuum deposition apparatus and the sample was heated to about 100°C. After evacuating the chamber to 5 x $10^{-6}$ Torr, MNBA-Et was vapor-deposited. The degree of vacuum during the vapor deposition was about 5 x $10^{-6}$ Torr. The rate of vapor deposition was about 1.0 nm/sec. until the thickness of the deposited layer reached about 10 μm and about 5 nm/sec. thereafter. The vapor deposition was continued until the total thickness of the deposited layer reached about 30 μm.

Thereafter, the sample was taken out of the vacuum vapor deposition apparatus. The MNBA-Et/MNBA multilayer organic nonlinear optical crystal on which MNBA-Et was vapor-deposited was transparent in its entirety. The sample

was removed from the copper heating substrate and the polarization characteristics were examined by observing the sample with a polarizing microscope. As a result, no change was observed in the light-transmitting property and extinction property before and after the vapor deposition. Thus, it was confirmed that the entire vapor-deposited MNBA-Et layer was a single crystal of which principal axis of refractive index was coincident with those of the MNBA-Et single crystal substrate layer and the patterned MNBA single crystal layer. Thus, even though the MNBA single crystal layer was patterned by wet etching, MNBA-Et was well epitaxially grown on the MNBA-Et single crystal substrate layer and on the MNBA single crystal layer.

After polishing the end faces, a light with a wavelength of 633 nm from He-Ne laser was guided through the embedded three-dimensional waveguide of line/space pattern made of MNBA single crystal layer in $T_E$ mode or $T_M$ mode in the direction parallel to the principal axis of refractive index. As a result, in both modes, the light was well guided.

The above-described MNBA-Et/MNBA/MNBA-Et multilayer organic nonlinear optical crystal having the MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 30)

Production of MNBA-Et/MNBA/MNBA-Et Multilayer Organic Nonlinear Optical Crystal Having MNBA Patterned Layer

By the same method as in Example 29, MNBA was grown by the vapor phase heteroepitaxial growth on the polished {0 1 0} face of a MNBA-Et single crystal sizing 22 mm x 10 mm x 7.5 mm to a thickness of about 5.0 μm to obtain an optically good MNBA-Et/MNBA multilayer organic nonlinear optical crystal, and then a MNBA-Et/MNBA multilayer organic nonlinear optical crystal having X-shaped and Y-shaped patterns with a width of 5 μm of a quinone diazide-based positive photoresist having a thickness of about 1.5 μm on the surface of the MNBA crystal layer was prepared based thereon.

The resulting multilayer crystal was subjected to reactive ion etching from the side of the photoresist pattern. As for the etching conditions, tetrafluoromethane/oxygen mixed gas (80/30, v/v) was used, the degree of vacuum in the vacuum chamber was 0.075 Torr, the power between electrodes was 0.64 W/cm$^2$, and the etching was performed at a constant temperature (30°C) by cooling the electrode at the side of the multilayer crystal with water.

After the etching, the entire surface of the multilayer crystal was exposed. The photoresist pattern which became soluble in the developer only for positive photoresist was dissolved by the developer and removed. The resultant was rinsed with water and dried. By observing the resulting sample with a polarizing microscope, it was confirmed that good X-shaped and Y-shaped patterns were formed and that these patterns have the principal axes of refractive index coincident with that of the MNBA-Et single crystal substrate layer.

After polishing the end faces, a light with a wavelength of 633 nm from He-Ne laser was guided through X-shaped and Y-shaped ridge three-dimensional waveguide made of the MNBA single crystal layer in $T_E$ mode or $T_M$ mode in the direction parallel to the principal axis of refractive index. As a result, in both modes, the light was well guided.

The above-described MNBA-Et/MNBA multilayer organic nonlinear optical crystal having the above-described MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

The etching shape and etching depth of the X-shaped and Y-shaped ridge three-dimensional waveguide (patterned layer) was observed with an electron microscope. The observation of the cross section revealed that the cross section of the MNBA three-dimensional waveguide was rectangular and the etching depth was about 5 μm which was almost the same as the thickness of the MNBA single crystal.

By the same method as in Example 29, MNBA-Et was vapor-deposited on the side of the pattern layer of the sample until the thickness of deposited MNBA-Et layer became about 30 μm.

By observing the sample with a polarizing microscope, good epitaxial growth of the vapor-deposited MNBA-Et on the entire surface of the sample was confirmed.

After polishing the end faces, a light with a wavelength of 633 nm from He-Ne laser was guided through the X-shaped and Y-shaped embedded three-dimensional waveguide made of the MNBA single crystal layer in $T_E$ mode or $T_M$ mode in the direction parallel to the principal axis of refractive index. As a result, in both modes, the light was well guided.

The above-described MNBA-Et/MNBA/MNBA-Et multilayer organic nonlinear optical crystal having the above-described MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 31)

Production of MNBA-Et/MNBA/MNBA-ClEt/MNBA Multilayer Organic Nonlinear Optical Crystal Having MNBA-ClEt Patterned Layer

After preparing a MNBA-Et/MNBA multilayer organic nonlinear optical crystal by the same method as in Example 29, the multilayer crystal was set above a vacuum vapor deposition boat in a vacuum vapor deposition apparatus in such a manner that the MNBA single crystal layer faces downward. After evacuating the chamber to $10^{-6}$ Torr, the copper heating substrate was heated to about 120°C, and the vapor phase heteroepitaxial growth of MNBA-ClEt was carried out.

The degree of vacuum during the vapor deposition was about 2.2 x $10^{-6}$ Torr, and the rate of vapor deposition was about 0.7 nm/sec. The deposition was continued until the thickness of the deposited layer reached about 3.5 μm.

Thereafter, the sample was taken out of the vacuum vapor deposition apparatus. The MNBA-Et/MNBA multilayer organic nonlinear optical crystal on which MNBA-ClEt was vapor-deposited was transparent in its entirety. The polarization characteristics were examined by observing the sample with a polarizing microscope. As a result, no change was observed in the light-transmitting property and extinction property before and after the vapor deposition. Thus, it was confirmed that the entire vapor-deposited MNBA-ClEt layer was a single crystal of which principal axis of refractive index was coincident with that of the MNBA-Et/MNBA multilayer organic nonlinear optical crystal. By the observation with a reflector interferometer microscope, it was confirmed that the surface of the grown MNBA-ClEt single crystal layer was optically smooth.

By means of the prism coupling, a light with a wavelength of 633 nm from He-Ne laser was guided through the MNBA-ClEt single crystal layer in $T_E$ mode or $T_M$ mode in the direction parallel to one of the principal axes of refractive index. As a result, in both modes, the light was well guided. Thus, the refractive index of the MNBA-ClEt single crystal layer was larger than that of the MNBA single crystal layer.

The above-described MNBA-Et/MNBA/MNBA-ClEt multilayer organic nonlinear optical crystal was heated to 120°C in an oven and then allowed to cool. No breaking (generation of cracks, peeling and dropping) was observed. Further, by repeating the above-described waveguiding experiment, it was confirmed that changes such as crystal distortion which clearly adversely affect the optical characteristics did not occur.

By the same method as in Example 29, a MNBA-Et/MNBA/MNBA-ClEt multilayer organic nonlinear optical crystal having X-shaped and Y-shaped patterns with a width of 5 μm of a quinone diazide-based positive photoresist having a thickness of about 1.2 μm on the surface of the MNBA-ClEt single crystal layer was prepared.

The thus prepared multilayer crystal was subjected to the reactive ion etching as in Example 30 from the side of the photoresist pattern.

After the etching, the photoresist pattern was dissolved and removed, followed by drying. By observing the resultant with a polarizing microscope, it was confirmed that good X-shaped and Y-shaped patterns were formed.

After polishing the end faces, a light with a wavelength of 633 nm from He-Ne laser was guided through X-shaped and Y-shaped ridge three-dimensional waveguide made of the MNBA-ClEt single crystal layer in $T_E$ mode or $T_M$ mode in the direction parallel to the principal axis of refractive index. As a result, in both modes, the light was well guided.

The above-described MNBA-Et/MNBA/MNBA-ClEt multilayer organic nonlinear optical crystal having the above-described MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

The etching shape and etching depth of the X-shaped and Y-shaped ridge three-dimensional waveguide (patterned layer) was observed with an electron microscope. The observation of the cross section revealed that the cross section of the MNBA-ClEt three-dimensional waveguide was rectangular and the etching depth was about 3.5 μm which was almost the same as the thickness of the MNBA-ClEt single crystal.

By the same method as in Example 29, MNBA was vapor-deposited on the entire surface of the side of the pattern layer of the sample to a thickness of about 30 μm. The copper heating substrate was heated to about 100°C. After evacuating the chamber to $10^{-6}$ Torr, MNBA was vapor-deposited. The degree of vacuum during the vapor deposition was about 2.9 x $10^{-6}$ Torr. The rate of vapor deposition was about 0.5 nm/sec. until the thickness of the deposited layer reached about 10 μm and about 2 nm/sec. thereafter. The vapor deposition was continued until the total thickness of the deposited layer reached about 30 μm.

By the observation with a polarizing microscope, good epitaxial growth on the entire surface of the sample was confirmed.

After polishing the end faces, a light with a wavelength of 633 nm from He-Ne laser was guided through X-shaped and Y-shaped embedded three-dimensional waveguide made of the MNBA-ClEt single crystal layer in $T_E$ mode or $T_M$ mode in the direction parallel to the principal axis of refractive index. As a result, in both modes, the light was well guided.

The above-described MNBA-Et/MNBA/MNBA-ClEt/MNBA multilayer organic nonlinear optical crystal having the above-described MNBA patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 32)

Production of MNBA-Et/MNBA/MNBA-ClEt/MNBA Multilayer Organic Nonlinear Optical Crystal Having MNBA-ClEt Patterned Layer

By the same method as in Examples 29 and 31, a MNBA-Et/MNBA/MNBA-ClEt/MNBA multilayer organic nonlinear optical crystal was prepared. The thicknesses of the single crystal layers were 1.5 mm, 5 μm, 3.5 μm and 1 μm, respectively.

By the same method as in Example 29, X-shaped and Y-shaped patterns with a width of 5 μm and a thickness of about 1.2 μm made of quinone diazide-based positive photoresist were formed on the MNBA single crystal layer.

The thus prepared multilayer crystal was subjected to the reactive ion etching as in Example 31 from the side of the photoresist pattern.

Utilizing the relationship between the etching rate and the etching time, a depth of 4.5 μm was etched which was the total of the thickness of the uppermost MNBA single crystal layer and the MNBA-ClEt single crystal layer thereunder.

After the etching, the photoresist pattern was dissolved and removed, followed by drying. By observing the resultant with a polarizing microscope, it was confirmed that good X-shaped and Y-shaped patterns were formed.

After polishing the end faces, a light with a wavelength of 633 nm from He-Ne laser was guided through the formed X-shaped and Y-shaped ridge three-dimensional waveguide in $T_E$ mode or $T_M$ mode in the direction parallel to the principal axis of refractive index. As a result, in both modes, the light was well guided in the MNBA-ClEt single crystal layer.

The above-described MNBA-Et/MNBA/MNBA-ClEt/MNBA multilayer organic nonlinear optical crystal having the above-described MNBA and MNBA-ClEt patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

By the same method as in Example 29, MNBA was vapor-deposited on the side of the pattern layer of the sample to a thickness of about 30 μm. The copper heating substrate was heated to about 100°C. After evacuating the chamber to 2 x $10^{-6}$ Torr, MNBA was vapor-deposited. The degree of vacuum during the vapor deposition was about 5.0 x $10^{-6}$ Torr. The rate of vapor deposition was about 0.5 nm/sec. until the thickness of the deposited layer reached about 10 μm and about 2 nm/sec. thereafter. The vapor deposition was continued until the total thickness of the deposited layer reached about 30 μm.

By the observation with a polarizing microscope, good epitaxial growth of vapor deposited MNBA on the entire surface of the sample was confirmed.

After polishing the end faces, a light with a wavelength of 633 nm from He-Ne laser was guided through X-shaped and Y-shaped embedded three-dimensional waveguide made of the MNBA-ClEt single crystal layer in $T_E$ mode or $T_M$ mode in the direction parallel to the principal axis of refractive index. As a result, in both modes, the light was well guided.

The above-described MNBA-Et/MNBA/MNBA-ClEt/MNBA multilayer organic nonlinear optical crystal having the above-described MNBA-ClEt patterned layer was heated to 120°C in an oven and then allowed to cool after taking the sample out of the oven. No breaking (generation of cracks, peeling and dropping) was observed. Further, by repeating the above-described waveguiding experiment, it was confirmed that changes such as crystal distortion which clearly adversely affect the optical characteristics did not occur.

(Example 33)

Production of MNBA-Et/MNBA/MNBA-Et Multilayer Organic Nonlinear Optical Crystal Having MNBA Patterned Layer

A MNBA-Et/MNBA multilayer organic nonlinear optical crystal (thickness of the MNBA single crystal layer: about 5.0 μm) having a MNBA patterned layer (X-shaped and Y-shaped ridge three-dimensional waveguide) was prepared by the deposition and growth of MNBA single crystal layer by the vapor phase method and the lithography as in Example

30 from a MNBA-Et single crystal (size: 33 mm x 4 mm x 1.2 mm) having optically smooth {0 1 0} face.

Solution phase heteroepitaxial growth of MNBA-Et was performed on this MNBA-Et/MNBA multilayer organic nonlinear optical crystal as follows:

In an about one liter cylindrical glass vessel having three openings with caps, a solution prepared by completely dissolving about 28.0 g of MNBA-Et powder crystals under heat in about 500 ml of chloroform was placed. Of the three openings, two were used as an inlet and an outlet of dry nitrogen gas, and the other one was stopped with a silicone rubber stopper. A platinum line was penetrated through the silicone rubber stopper and the above-described MNBA-Et/MNBA multilayer organic nonlinear optical crystal having the above-described MNBA patterned layer was hung on the tip of the platinum line in such a manner that the crystal layer does not contact the solution. The openings were capped so that the atmosphere in the vessel was converted to chloroform atmosphere. Dry nitrogen gas was introduced at a rate of about 2 ml/min. and the system was left to stand under these conditions for two days at room temperature (about 25°C), so that a small amount of MNBA-Et crystals were precipitated by slow evaporation and the solution was settled.

Thereafter, the MNBA-Et/MNBA multilayer organic nonlinear optical crystal having the MNBA patterned layer, except for a part of the MNBA-Et substrate single crystal layer was immersed in the MNBA-Et solution in chloroform, and the slow evaporation was continued. About two hours later, the MNBA-Et/MNBA multilayer organic nonlinear optical crystal was drawn up from the MNBA-Et solution in chloroform and was rinsed with cyclohexane/isopropanol mixed solvent (1:1) and then with cyclohexane, followed by drying.

The entire surface of the multilayer crystal remained transparent. By observing the resulting sample with a reflector microscope, it was found that a step was formed on the MNBA-Et substrate single crystal layer at the boundary between the immersed region and non-immersed region due to the deposited layer. The height of the step was measured by the pin-touch method. The height of the step was about 32.0 µm.

The polarization characteristics of the entire multilayer crystal were examined with a polarizing microscope. As a result, the thickness-increased regions of the MNBA-Et single crystal substrate layer and of the MNBA patterned layer (i.e., the region immersed in the MNBA-Et solution in chloroform) and the other regions (i.e., the region not immersed in the solution) did not change in their light-transmitting properties and extinction properties. Thus, it was confirmed that the MNBA-Et single crystal layer was formed on the entire surface of the region immersed in the solution with its principal axis of refractive index coincident with that the multilayer crystal.

Thus, on the MNBA patterned layer, MNBA-Et was able to be grown by the solution phase heteroepitaxial growth.

The above-described MNBA-Et/MNBA/MNBA-Et multilayer organic nonlinear optical crystal was heated to 120°C in an oven and then allowed to cool after taking the sample out of the oven. No breaking (generation of cracks, peeling and dropping) was observed.

(Example 34)

Production of MNBA/MNBA-ClEt/MNBA-Et Multilayer Organic Nonlinear Optical Crystal Having MNBA-ClEt Patterned Layer

Based on a MNBA single crystal (size: 43 mm x 13 mm x 1.1 mm) having an optically smooth {0 1 0} polished face, which was grown from a solution in dimethylacetamide, a MNBA/MNBA-ClEt multilayer organic nonlinear optical crystal having a MNBA-ClEt patterned layer (X-shaped and Y-shaped ridge three-dimensional waveguide) by the deposition and growth by the vapor phase method and lithography as in Example 31 was prepared (the thickness of the MNBA-ClEt single crystal layer: about 5.0 µm).

On the MNBA/MNBA-ClEt multilayer organic nonlinear optical crystal having the MNBA-ClEt patterned layer, MNBA-Et was grown by the melt phase heteroepitaxial growth as follows:

In the visual field of a polarizing microscope equipped with a hot plate, a slide glass carrying MNBA-Et powder crystals thereon was placed, and the sample was heated to 172°C so as to melt the MNBA-Et powder crystals (m.p.: 169.5 - 170°C). An MNBA/MNBA-ClEt multilayer organic nonlinear optical crystal having a MNBA-ClEt patterned layer (m.p. of MNBA: about 194°C; m.p. of MNBA-ClEt: 194 - 196°C) placed on a different portion of the slide glass and so having almost the same temperature as the MNBA-Et melt was moved to the MNBA-Et melt in such a manner that the surface having the MNBA-ClEt patterned layer contacts the MNBA-Et melt. The temperature of the hot plate was lowered at a rate of 0.5°C/min. As a result, crystal growth was observed on the optically smooth {0 1 0} face of the MNBA/MNBA-ClEt multilayer organic nonlinear optical crystal having the patterned MNBA-ClEt layer from the temperature immediately below the melting point which is within the temperature range in which the MNBA-Et melt shows supercooling if the MNBA-Et melt alone is cooled (although depending on the cooling rate, the phase emerging next is the nematic liquid crystal phase). It was also confirmed from the polarization characteristics that the grown crystal was a single crystal having the same direction of the principal axis of refractive index as that of the multilayer crystal which was the substrate layer.

The MNBA-Et single crystal layer was also grown on the MNBA-ClEt patterned layer.

By keeping the temperature at about 168°C, MNBA-Et single crystal layer was grown. About 5 minutes later, the increase in the thickness of the layer was about 155 μm.

(Example 35)

X-ray Analysis of Structure of Multilayer Organic Nonlinear Optical Crystal (Multilayer Crystal)

A single crystal of MNBA-Et was grown from a solution in dimethylacetamide by the slow cooling method. To obtain a smooth surface, the crystal was cut in the direction parallel to the ac plane and optical polishing was performed on the cut face so as to obtain a substrate crystal having {0 1 0) face. Diamond paste was used as the polishing particles and buff polishing was performed as the finishing.

The thus obtained substrate crystal was adhered to a slide glass by Canada balsam in such a manner that the surface of the crystal opposite to the polished ac plane contacts the slide glass. This sample was fixed to the upper portion of a vapor deposition boat in a vacuum vapor deposition apparatus in such a manner that the polished surface faces downward. After evacuating the chamber to 2 x $10^{-6}$ Torr, MNBA was vapor-deposited to obtain a multilayer crystal. The thickness of the MNBA single crystal layer grown measured with a preliminarily adjusted quartz oscillator type membrane thickness monitor was about 1.9 μm.

The polarization characteristics of the ac plane of the multilayer crystal were examined with a polarizing microscope. As a result, no change was observed in their light-transmitting properties and extinction properties. Thus, it was confirmed that the MNBA single crystal layer was grown with its principal axis of refractive index coincident with that of the MNBA-Et substrate crystal.

The crystal orientation of the MNBA-Et substrate crystal and the MNBA single crystal layer constituting the multilayer crystal was measured by the X-ray double crystal diffractometer method (CuK$\alpha$1). Using the (0 4 0) diffraction line ($\theta$ = 6.305°) as the base line, the rocking curve was measured. As a result, the (0 4 0) diffraction line of the MNBA single crystal layer was observed at the position shifted from the base line by about 850 seconds (i.e., 0.236°). The results of the measurement are shown in Fig. 16. This indicates that the ac plane of the MNBA single crystal layer was grown in parallel to the ac plane of the MNBA-Et substrate crystal and the distances between the ac planes of the crystals differ each other by about 3.7%. This difference is about the same as the difference in the lattice parameters of MNBA-Et crystal and MNBA crystal.

By the observation with a polarizing microscope and by the measurement of the diffraction line by the X-ray double crystal diffractometer method, it was shown that the grown MNBA single crystal layer of the MNBA-Et/MNBA multilayer crystal had the same crystal orientation as that of the MNBA-Et substrate crystal, and that the MNBA single crystal layer grown had the same lattice parameters as those of the ordinary MNBA crystals.

That is, it was proved that the grown single crystal layer of the multilayer crystal was a single crystal having the same symmetry as that of the substrate crystal, so that the multilayer crystal as a whole also had the same symmetry as that of the substrate crystal.

(Example 36)

Measurement of Second-Order Nonlinear Susceptibility ($\chi^{(2)}$) by Maker Fringe Method

To obtain a smooth surface, the MNBA-Et crystal obtained by the same method as in Example 35 was cleaved along a plane parallel to the ac plane. Using the MNBA-Et crystal having the cleaved face as an ac plane ({0 1 0}) substrate, MNBA single crystal layer was grown thereon by the following liquid phase method to prepare a multilayer crystal.

In an about one liter cylindrical glass flask having three openings with caps, a solution prepared by completely dissolving about 28.0 g of MNBA powder crystals under heat in about 500 ml of chloroform was placed. Of the three openings, two were used as an inlet and an outlet of dry nitrogen gas, and the other one was stopped with a silicone rubber stopper. A platinum line was penetrated through the silicone rubber stopper and the MNBA-Et substrate crystal was hung on the tip of the platinum line in such a manner that the crystal does not contact the solution. The openings were capped and dry nitrogen gas was introduced at a rate of about 2 ml/min. and the system was left to stand under these conditions for two days at room temperature (about 25°C) in a thermostat chamber, so that a small amount of MNBA crystals were precipitated by slow evaporation and the solution was saturated with MNBA.

Thereafter, the platinum line was lowered in such a manner that about 2/3 area of the cleaved ac plane was immersed in the solution, and the slow evaporation was continued. About 8 hours later, the crystal was drawn up and was rinsed with cyclohexane/isopropanol mixed solvent (1:1) and then with cyclohexane, followed by drying to obtain a MNBA-Et/MNBA multilayer crystal.

By observing the resulting sample with a reflector microscope, it was found that a step was formed at the boundary between the immersed region and non-immersed region. The thickness of the MNBA single crystal layer grown on the cleaved ac plane was about 110 μm. The multilayer crystal was again cleaved parallel to the ac plane to obtain a multilayer crystal having a thickness including the grown MNBA layer of about 250 μm.

The second-order nonlinear optical effect and the anisotropy of the MNBA-Et/MNBA multilayer crystal was examined by the Maker fringe method (Electron. Lett., 23(11), 595(1987)), which is a method for measuring the directional dependence of the second harmonic generation (SHG) intensities.

The above-described multilayer crystal with a thickness of about 250 μm was set in a goniometer. The relationship between the rotation angle θ about the axis of a linearly polarized laser beam (YAG laser, 1064 nm), the incident angle φ to the ac plane, and the observed SHG intensities was determined.

The θ dependence was nearly a $\cos^2\theta$ function with a period of π, and the φ dependence was so called the fringe pattern.

The largest nonlinear susceptibility ($\chi^{(2)}_{11}$) obtained when the linear polarization (polarized plane) of the impinging light was coincident with the x axis in the ac plane was 4.3 x $10^{-6}$ esu. This is more than about 3 times the $\chi^{(2)}_{11}$ of the MNA crystal which is an organic material known to have a large nonlinearity. This value is about the same as that of the MNBA-Et crystal used as the substrate crystal, which is 3.9 x $10^{-6}$ esu (Japanese Patent Application No. 1-199761).

Estimating the frequency converting ability from the measured nonlinear susceptibility of the multilayer crystal, the frequency converter utilizing the multilayer crystal has a frequency converting ability per a unit length of about 10 times larger than that of the frequency converter utilizing the MNA crystal when the impinging light density is the same. Further, when compared with the frequency converter utilizing the lithium niobate ($LiNbO_3$) which is an inorganic material, the frequency converting ability thereof is about 500 times.

Therefore, in a case where a frequency converter with a certain frequency conversion efficiently is constructed, the power of the light source can be reduced and the device can be made small if the multilayer crystal according to the present invention is utilized.

The above-described MNBA-Et/MNBA multilayer crystal was heated to 150°C in an oven and then allowed to cool after taking the sample out of the oven. No breaking (generation of cracks, peeling and dropping) was observed. Further, by repeating the above-described experiment of the Maker fringe method, it was confirmed that fluctuation of the measured values due to the changes such as crystal distortion which clearly adversely affect the optical characteristics did not occur.

(Example 37)

Preparation of Optical Modulator Employing Multilayer Crystal and Measurement of Linear Electro-Optic Effect

Using the multilayer crystal obtained in Example 36, an optical modulator was prepared and the intensity of the linear electro-optic effect thereof was measured. The structure of the optical modulator is shown in Fig. 17.

The MNBA-Et/MNBA multilayer crystal 171 was adhered to a glass plate 172 in such a manner that the ac plane contacts the glass plate 172. Aluminum parallel electrodes 174 (thickness: about 200 nm; distance between the electrodes: 2 mm; width of electrode: 2 mm; length of electrode: 20 mm) formed on the glass plate 173 by mask vapor-deposition of aluminum were pressed to the ac plane to construct an electro-optic device 17.

A linearly polarized light of He-Ne laser beam (633 nm) obtained by passing through a polarizer 178 was impinged on the ac plane perpendicularly so that the vector of electric vibration of the impinging light is parallel to the ac plane. At this time, the direction of the polarizer (i.e., the direction of plane of polarization) was shifted from the direction of the axis of the maximum absorption in the ac plane (i.e., the x axis) by 45°. The light was passed through a Soleil-Babinet's compensator 175 to compensate the intrinsic birefrengence, and the intensity of the output light from an analyzer 179 perpendicular to the polarizer 178 was measured with a photodetector 176. To the parallel electrodes 174, a sinusoidal voltage of 500 Hz was applied by a power source 177.

With such an optical modulator, the figure of merit F of the linear electro-optic effect is expressed by the Equation 2.

$$F = |n_1^3 r_{11} - n_3^3 r_{31}|/2 = (\delta/2\pi) \cdot (\lambda/d) \cdot (w/v) \qquad \text{Equation 2}$$

wherein

δ means the phase difference (radian);
λ means the wavelength of impinging light (i.e., 633 nm);
d means the thickness of the multilayer crystal;
w means the distance between the electrodes; and
v means the applied voltage.

According to the Equation 2, the figure of merit of the optical modulator was about 800 pm/V. This value is a large value which is not less than 6 times that obtained with an optical modulator employing LN crystal, that is 120 pm/V.

The above-described optical modulator employing the MNBA-Et/MNBA multilayer crystal was heated to 100°C in an oven and then allowed to cool after taking the sample out of the oven. No breaking (generation of cracks, peeling and dropping) was observed. Further, by repeating the measurement of the linear electro-optic effect, it was confirmed that no fluctuation of the measured values occurred.

(Example 38)

Preparation of Optical Modulator Employing Multilayer Crystal and Measurement of Linear Electro-Optic Effect

Using the ac plane ({0 1 0}) of a MNBA single crystal in the form of a thin film (10 mm x 3 mm x 4 μm) grown in a solution in cyclohexane/chloroform (1/1 v/v) as a substrate, MNBA-ClEt was grown (thickness: 1.2 μm) on the substrate by the vapor phase method as in Example 35 to obtain a multilayer crystal.

Using the thus obtained multilayer crystal, an optical modulator was prepared as in Example 37 and the intensity of the linear electro-optic effect thereof was measured. In this time, however, the aluminum parallel electrodes 174 on the glass plate 173 were formed by the vapor-deposition and photoresist patterning, the thickness of the electrodes was about 200 nm, the distance between the electrodes was 5 μm, the width of the electrodes was 1 mm and the length of the electrodes was 40 mm. The figure of merit was calculated according to the Equation 2, which was about 900 pm/V.

The above-described optical modulator employing the MNBA/MNBA-ClEt multilayer crystal was heated to 100°C in an oven and then allowed to cool after taking the sample out of the oven. No breaking (generation of cracks, peeling and dropping) was observed. Further, by repeating the measurement of the linear electro-optic effect, it was confirmed that no fluctuation of the measured values occurred.

(Example 39)

Preparation of Frequency Converter

Using the ac plane ({0 1 0}) of a MNBA-Et single crystal as a substrate, MNBA-ClEt was grown (thickness: 1.0 μm) on the substrate by the vapor phase method as in Example 35 to obtain a multilayer crystal.

On the ac plane of the grown layer of the MNBA-Et/MNBA-ClEt multilayer crystal, tantalum pentoxide ($Ta_2O_5$) was vapor-deposited to a thickness of about 700 ± 100 nm to prepare a composite planar waveguide 182 made of MNBA-ClEt and tantalum pentoxide. With this structure, the refractive index of tantalum pentoxide is higher than that of the MNBA-ClEt substrate crystal at the wavelength of the YAG laser (1064 nm) and lower at the wavelength of the second harmonic.

Into the composite passive planar waveguide 182, a linearly polarized light of YAG laser was impinged in such manner that its plane of polarization was parallel to the ac plane. In other words, the linearly polarized light was impinged and propagated in the composite planar waveguide in the TE mode. The power density of the impinging YAG laser was about 1 $MW/cm^2$.

Generation of a green SH light and radiation to the MNBA-Et crystal side was observed. The maximum SH light was observed when the plane of polarization of the YAG laser was coincident with the x axis.

The above-described frequency converter employing the MNBA-Et/MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 40)

Preparation of Frequency Converter Having Passive Waveguide

A multilayer crystal having a grown MNBA-ClEt single crystal layer (thickness: about 400 μm) was prepared using as a substrate the ac plane ({0 1 0}) of a MNBA-Et crystal grown in a solution in dimethylacetamide by the same method as in Example 36 except that MNBA-ClEt was grown by the solution phase heteroepitaxial method in place of MNBA.

Observation of the used MNBA-Et crystal with a multiple interferometer microscope revealed that the ac plane had etch pits formed by the washing with dimethylacetamide and drying after drawing up the crystal from the solution, so that the ac plane was not optically smooth.

However, the surface of the MNBA-ClEt single crystal layer grown was optically smooth.

On the ac plane of the grown layer of the MNBA-Et/MNBA-ClEt multilayer crystal, tantalum pentoxide was vapor-deposited to a thickness of about 900 ± 100 nm to provide a passive planar waveguide made of tantalum pentoxide. With this structure, the refractive index of tantalum pentoxide is higher than that of the MNBA-ClEt substrate crystal at the wavelength of the YAG laser (1064 nm) and lower at the wavelength of the second harmonic.

Into the passive planar waveguide, a linearly polarized light of YAG laser was impinged in such manner that its plane of polarization was parallel to the ac plane. In other words, the linearly polarized light was impinged and propagated in the passive planar waveguide in the TE mode. The power density of the impinging YAG laser was about 1 $MW/cm^2$.

Radiation of a green SH light to the MNBA-Et crystal side was observed. The maximum SH light was observed when the plane of polarization of the YAG laser was coincident with the x axis.

From these results, it is concluded that the second harmonic generation is caused by the leakage of the YAG laser photoelectric field (evanescent wave) propagating in the tantalum pentoxide passive planar waveguide to the MNBA-ClEt crystal side.

The above-described frequency converter having the passive waveguide employing the MNBA-Et/MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 41)

Preparation of Total Internal Reflection (TIR) Switch

Using a polished ac plane ({0 1 0}) of a MNBA-Et single crystal grown by the slow cooling method from a solution in dimethylacetamide as a substrate crystal, the pattern growth of MNBA by the vapor phase heteroepitaxial method was carried out as follows:

On the {0 1 0} substrate of the MNBA-Et single crystal, a quinone diazide-based positive photoresist was applied to a thickness of about 5 μm with a spinner and was dried under heat. The photoresist was exposed through a photomask and was developed by a developer only for positive photoresist, followed by drying under heat again. The photomask had a pattern of two waveguides (width: 10 μm) crossing at an angle of 7.5°.

The MNBA-Et substrate crystal having the above-described photoresist pattern mask on its ac plane was fixed on a heating substrate made of copper in such a manner that the surface of the crystal opposite to the polished ac plane contacts the copper heating substrate. The sample was set above a vapor deposition boat in a vacuum vapor deposition apparatus in such a manner that the polished surface faces downward. After evacuating the chamber to 2 x $10^{-6}$ Torr, the copper heating substrate was heated to 70°C and MNBA was vapor-deposited to obtain a MNBA-Et/MNBA multilayer crystal. The thickness of the pattern-grown MNBA single crystal layer measured with an adjusted quartz oscillator type membrane thickness monitor was about 3.5 μm.

The multilayer crystal was then taken out of the vacuum vapor deposition apparatus and the entire surface of the multilayer crystal was exposed. The photoresist pattern which became soluble in the developer only for positive photoresist was dissolved and removed together with the vapor-deposited MNBA layer thereon. The multilayer crystal was then rinsed with water and dried.

Silicon dioxide ($SiO_2$) was then vapor-deposited on the entire surface to a thickness of about 300 nm by electron beam ion evaporation in oxygen atmosphere.

Further, aluminum was deposited on the entire surface to a thickness of about 200 nm.

On this aluminum layer, a positive photoresist was applied with a spinner and was exposed through a chromium mask having an electrode pattern, followed by developing of the photoresist. The aluminum layer was etched by an aqueous potassium hydroxide (2 wt%)/potassium ferricyanide (1 wt%) solution and the photoresist was removed to prepare planar electrodes.

In Fig. 19, the thus prepared total internal reflection switch 19 is shown.

That is, two MNBA waveguides 191 with a width of about 10 μm were crossed at a crossing angle of about 7.5°, and planar electrodes 192 were formed at the crossing portion to form a switching portion. The distance between the electrodes 194 was about 4 μm. Thus, the axis 193 of absorbing in the longest wavelength of the MNBA waveguide was perpendicular to the longitudinal direction of the planar electrodes.

A linearly polarized light of He-Ne laser beam obtained by passing through a polarizer was impinged horizontally on the end face 19a of the waveguide and was guided in the TE mode.

When no voltage was applied, it was confirmed by observing the red light scattered at the end face that the light went straight and was emitted from an end face 19a'.

Then a dc voltage of 5V was applied to the planar electrodes. The red scattered light was observed on an end face 19b' of the waveguide, which was opposing one to the end face 19a' where the red scattered light was observed

when no voltage was applied. Thus, it was confirmed that with this device, the light path can be switched by applying a voltage to the electrodes.

A similar TIR switch employing the LN crystal has been reported (C.S. Tsai et al., "Optical channel waveguides switch and coupler using total internal reflection", IEEE J. Quantum Electron., vol. QE-14, No. 7, pp. 513-517, July 1978). Comparing the present device with the reported switch, the crossing angle of the switch utilizing the MNBA-Et/MNBA multilayer crystal having the MNBA patterned layer is about twice as large as that of the reported switch employing the LN crystal. Therefore, it has been shown that the degree of integration of an optical switch of the branched type can be about four times higher than that employing LN crystal.

The above-described total internal reflection switch was heated to 100°C in an oven and then allowed to cool after taking the sample out of the oven. No breaking (generation of cracks, peeling and dropping) was observed. Further, by repeating the switching operation, no change occurred and the switch was properly operated.

(Example 42)

Production of MNBA-Et/MNBA·MNBA-ClEt Multilayer Organic Nonlinear Optical Crystal and Analysis Thereof with Polarizing Microscope

A crystal of MNBA-Et (size: 13 mm x 6 mm x 4.5 mm) was grown by the slow cooling method from a solution in dimethylacetamide.

By the observation with a polarizing microscope, it was found that this crystal was a single crystal. By the X-ray diffraction analysis, it was found that the largest crystal face was {0 1 0} face (Example 13).

Taking the b axis of MNBA-Et crystal as y axis, taking the axis of the maximum absorption (the axis having an absorption edge at the longest wavelength) in the ac plane ({0 1 0} face) as x axis, and taking the axis perpendicular to these axes as z axis, the relationships among the principal refractive indices along the respective axes are $n_x > n_y > n_z$, and the nonlinear susceptibility ($\chi^{(2)}_{11}$) along x axis is the maximum.

The crystal was cut with a wire saw along the plane perpendicular to the x axis so as to divide the crystal into two portions.

To provide optically smooth surfaces, the {0 1 0} face perpendicular to the y axis (y-cut face) of one of the crystals and the cut face perpendicular to the x axis (x-cut face) of another crystal were polished with diamond paste.

Observation with an interferometer microscope revealed that the thus provided optically smooth surfaces had a maximum surface roughness of ± 0.1 μm.

Using the MNBA-Et single crystal having the thus provided y-cut polished face or x-cut polished face as a substrate layer, simultaneous vapor phase heteroepitaxial growth of MNBA and MNBA-ClEt was carried out as follows:

Each of the substrate layer was adhered on a slide glass by Canada balsam in such a manner that the surface opposite to the polished surface contacts the slide glass. The thus prepared sample was set above a vacuum vapor deposition boat in a vacuum vapor deposition apparatus in such a manner that the polished surface faces downward, and the half of the substrate layer was intimately covered with aluminum foil. After evacuation of the chamber to $10^{-6}$ Torr, the substrate layer was heated to about 120°C, and then MNBA and MNBA-ClEt were vapor-deposited from individual vapor deposition boats. The degree of vacuum during the vapor deposition was about 4 x $10^{-6}$ Torr. The rates of deposition were controlled to about 0.5 nm/sec. by controlling the temperatures of the vacuum vapor deposition boats by adjusting the boat voltages. The shutter shielding the sample was then opened. The thickness of the deposited layer was monitored with a quartz oscillator type membrane thickness monitor, and the deposition was continued until the thickness of the deposited layer reached about 5.0 μm.

Thereafter, the substrate layer on the slide glass was removed from the vacuum vapor deposition apparatus, and the aluminum foil was removed. Although the surface of the slide glass turned cloudy due to the microcrystals, the entire y-cut and x-cut MNBA-Et single crystal substrate layers including the regions covered with the aluminum foil and the exposed regions remained transparent. By observing each of the resulting samples with a reflector microscope, it was found that a step was formed at the boundary between the exposed region and the region covered with the aluminum foil due to the thickness of the deposited layer.

The polarization characteristics of the y-cut face (ac plane) and the x-cut face were examined by using a polarizing microscope. As a result, no change was observed in the light-transmitting property and extinction property. Thus, it was confirmed that the entire vapor-deposited MNBA and MNBA-ClEt layer was an isomorphous mixed single crystal of which principal axis of refractive index was coincident with that of the MNBA-Et single crystal substrate.

That is, it was confirmed that the grown isomorphous mixed single crystal layer in the multilayer crystal was a single crystal having the same symmetry as the substrate crystal, so that the multilayer crystal as a whole has the same symmetry as the substrate crystal.

(Example 43)

Measurement of Second Order Nonlinear Susceptibility ($\chi^{(2)}$) by Maker Fringe Method

A MNBA-Et (y-cut)/MNBA·MNBA-ClEt multilayer organic nonlinear optical crystal (size: 12 mm x 5 mm x 1.5 mm) having a MNBA·MNBA-ClEt isomorphous mixed single crystal layer with a thickness of about 50 µm grown by the vapor phase heteroepitaxial method was prepared by the same method as in Example 42.

The polarization characteristics of the multilayer organic nonlinear optical crystal were examined by using a polarizing microscope. As a result, no change was observed in the light-transmitting property and extinction property. Thus, it was confirmed that the entire vapor-deposited MNBA and MNBA-ClEt layer was an isomorphous mixed single crystal of which principal axis of refractive index was coincident with that of the MNBA-Et single crystal substrate.

The side of the MNBA-Et crystal substrate layer of the above-described MNBA-Et (y-cut)/MNBA·MNBA-ClEt multilayer organic nonlinear optical crystal was ground and polished so that the thickness of the multilayer crystal was reduced to about 150 µm.

The MNBA-Et/MNBA·MNBA-ClEt multilayer organic nonlinear optical crystal was set on a goniometer and the intensity and the anisotropy of the second-order nonlinear optical effect was examined by the Maker fringe method as in Example 36.

The largest nonlinear susceptibility ($\chi^{(2)}{}_{11}$) obtained when the linear polarization (polarized plane) of the impinging light was coincident with the x axis in the ac plane was 4.1 x $10^{-6}$ esu. This is more than about 3 times the $\chi^{(2)}{}_{11}$ of the MNA crystal which is an organic material known to have a large nonlinearity. This value is about the same as that of the MNBA-Et crystal used as the substrate crystal, which is 3.9 x $10^{-6}$ esu (Japanese Patent Application No. 1-199761).

From these results, it was found that the grown MNBA·MNBA-ClEt isomorphous mixed single crystal layer in the MNBA-Et/MNBA·MNBA-ClEt multilayer crystal was a single crystal having the same symmetry (anisotropy of the second-order nonlinear optical effect) and the similar intensity of the second-order nonlinear optical effect as the MNBA-Et crystal substrate layer.

The above-described MNBA-Et/MNBA·MNBA-ClEt multilayer crystal was heated to 150°C in an oven and then allowed to cool after taking the sample out of the oven. No breaking (generation of cracks, peeling and dropping) was observed. Further, by repeating the above-described experiment of the Maker fringe method, it was confirmed that fluctuation of the measured values due to the changes such as crystal distortion which clearly adversely affect the optical characteristics did not occur.

(Example 44)

Preparation of Optical Modulator Employing Multilayer Crystal and Measurement of Linear Electro-Optic Effect

Using the multilayer crystal obtained in Example 43, an optical modulator was prepared and the intensity of the linear electro-optic effect thereof was measured. The structure of the optical modulator was the same as the optical modulator prepared in Example 37.

The MNBA-Et/MNBA·MNBA-ClEt multilayer crystal was adhered to a glass plate in such a manner that the ac plane (y-cut face) contacts the glass plate. Aluminum parallel electrodes (thickness: about 200 nm; distance between the electrodes: 2 mm; width of electrode: 2 mm; length of electrode: 20 mm) formed on the glass plate by mask vapor-deposition of aluminum were pressed to the ac plane to construct an electro-optic device.

According to the Equation 2 (Example 37), the figure of merit of the optical modulator was about 800 pm/V. This value is a large value which is not less than 6 times that obtained with a optical modulator employing LN crystal, that is 120 pm/V. This value is similar to that of MNBA-Et crystal used as the substrate layer crystal, which is about 700 pm/V (Japanese Patent Application No. 1-199761).

From these results, it was found that the grown MNBA·MNBA-ClEt isomorphous mixed single crystal layer in the MNBA-Et/MNBA·MNBA-ClEt multilayer crystal was a single crystal having the same symmetry (anisotropy of the second-order nonlinear optical effect) and the similar intensity of the linear electro-optic effect as the MNBA-Et crystal substrate layer.

The above-described optical modulator employing the multilayer crystal was heated to 100°C in an oven and then allowed to cool after taking the sample out of the oven. No breaking (generation of cracks, peeling and dropping) was observed. Further, by repeating the measurement of the linear electro-optic effect, it was confirmed that no fluctuation of the measured values occurred.

(Example 45)

Preparation of Frequency Converter

A MNBA-Et/MNBA·MNBA-ClEt multilayer crystal having a MNBA·MNBA-ClEt isomorphous mixed single crystal layer grown with a thickness of about 1.0 μm was prepared by the vapor phase method as in Example 42 using the ac plane ({0 1 0} face) of the MNBA-Et crystal as the substrate layer.

As in Example 39, on the ac plane of the grown isomorphous mixed crystal layer in the MNBA-Et/MNBA·MNBA-ClEt multilayer crystal, tantalum pentoxide was vapor-deposited to a thickness of about 600 ± 100 nm to prepare a composite planar waveguide made of the MNBA·MNBA-ClEt isomorphous mixed single crystal layer and the tantalum pentoxide layer.

A linearly polarized light of YAG laser was propagated in the composite planar waveguide in the TE mode. The power density of the impinging YAG laser was about 1 $MW/cm^2$.

Radiation of a green SH light to the MNBA-Et crystal side was observed. The maximum frequency-converted light was observed when the plane of polarization of the YAG laser was coincident with the x axis.

The above-described frequency converter employing the MNBA-Et/MNBA·MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 46)

Preparation of Frequency Converter Having Passive Waveguide

A multilayer crystal having a grown MNBA·MNBA-ClEt isomorphous mixed single crystal (thickness: about 60 μm) was prepared by the vapor phase heteroepitaxial growth as in Example 42 using the polished y-cut face (ac plane, {0 1 0} face) of a MNBA-Et crystal as the substrate layer.

On the ac plane of the grown MNBA·MNBA-ClEt isomorphous mixed single crystal layer in the MNBA-Et/MNBA. MNBA-ClEt multilayer crystal, tantalum pentoxide was vapor-deposited to a thickness of about 900 ± 100 nm to prepare a passive planar waveguide made of tantalum pentoxide.

A linearly polarized light of YAG laser was propagated in the passive planar waveguide in the TE mode. The power density of the impinging YAG laser was about 1 $MW/cm^2$.

Radiation of a green SH light to the MNBA-Et crystal side was observed. The maximum frequency-converted light was observed when the plane of polarization of the YAG laser was coincident with the x axis.

From these results, it is concluded that the second harmonic generation is caused by the leakage of the YAG laser photoelectric field (evanescent wave) propagating in the tantalum pentoxide passive planar waveguide to the MNBA·MNBA-ClEt isomorphous mixed single crystal side.

The above-described frequency converter having the passive waveguide employing the MNBA-Et/MNBA·MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 47)

Preparation of Total Internal Reflection (TIR) Switch

Using a polished y-cut face (ac plane, ({0 1 0} face) of a MNBA-Et single crystal as a substrate layer, the pattern growth of MNBA·MNBA-Et isomorphous mixed single crystal by the vapor phase heteroepitaxial method was carried out as follows:

A window pattern of two waveguides (width: 10 μm) crossing at an angle of 7.5° was formed with a positive photoresist on the polished y-cut face of MNBA-Et substrate layer crystal.

After evacuation to 2 x $10^{-6}$ Torr, the co-vapor deposition of MNBA and MNBA-ClEt was carried out in substantially the same manner as in Example 41 at a temperature of the copper heating substrate of 115°C to obtain a MNBA-Et/MNBA·MNBA-ClEt multilayer crystal with a thickness of about 3.3 μm.

After removing the photoresist pattern, silicon dioxide ($SiO_2$) was deposited on the entire surface to a thickness of about 200 nm by the electron beam ion evaporation in oxygen atmosphere, and then aluminum was vapor-deposited thereon to a thickness of about 200 nm.

By a process employing a positive photoresist, planar electrodes made of aluminum were formed.

The prepared total internal reflection switch had the similar structure to that of the TIR switch prepared in Example 41. That is, two MNBA·MNBA-ClEt isomorphous mixed crystal waveguides with a width of about 10 μm were crossed at a crossing angle of about 7.5°, and planar electrodes were formed at the crossing portion to form a switching portion. The distance between the electrodes was about 4 μm. Thus, the axis of absorbing in the longest wavelength of the MNBA·MNBA-ClEt isomorphous mixed single crystal waveguide was perpendicular to the longitudinal direction of the planar electrodes.

A linearly polarized light of He-Ne laser beam obtained by passing through a polarizer was impinged horizontally on the end face 4a of the waveguide and was propagated in the TE mode.

When no voltage was applied, it was confirmed by observing the red light scattered at the end face that the light went straight and was emitted from an end face 4a'. However, when a dc voltage of 5V was applied to the planar electrodes, the red scattered light was observed on an end face 4b' of the waveguide, which was opposing one to the end face where the red scattered light was observed when no voltage was applied. Thus, it was confirmed that with this device, the light path can be switched by applying a voltage to the electrodes.

Comparing the present device with the device employing LN crystal, the crossing angle of the switch utilizing the MNBA-Et/MNBA·MNBA-ClEt multilayer crystal having the MNBA·MNBA-ClEt patterned layer is about twice as large as that of the switch employing the LN crystal. Therefore, it has been shown that the degree of integration of an optical switch of the branched type can be about four times higher than that employing LN crystal.

The above-described total internal reflection switch was heated to 100°C in an oven and then allowed to cool after taking the sample out of the oven. No breaking (generation of cracks, peeling and dropping) was observed. Further, by repeating the switching operation, no change occurred and the switch was properly operated.

(Example 48)

Preparation of Total Internal Reflection Switch

Using a polished y-cut face (ac plane, ({0 1 0} face) of a MNBA single crystal as a substrate layer, the pattern growth of MNBA·MNBA-ClEt isomorphous mixed single crystal by the vapor phase heteroepitaxial method was carried out as follows:

On the polished y-cut face of the MNBA substrate layer crystal, a window of two waveguides (width: 10 μm) crossing at an angle of 7.5° was formed with a quinone diazide-based positive photoresist (thickness: 2 μm).

The sample was fixed above a vapor deposition boat in a vacuum vapor deposition apparatus in such a manner that the polished surface faces downward, and MNBA and MNBA-ClEt were vapor-deposited from individual vapor deposition boats at a temperature of the substrate layer of 120°C under an initial pressure of $10^{-6}$ Torr. The degree of vacuum during the vapor deposition was about $3 \times 10^{-6}$ Torr.

The rate of deposition of each component was controlled to about 0.4 nm/sec. by controlling the temperature of the respective vacuum vapor deposition boat by adjusting the boat voltage. The shutter shielding the sample was then opened. The shutter of the vapor deposition boat containing MNBA was gradually closed with time. The shutter of the vapor deposition boat containing MNBA-ClEt was kept open. The vapor deposition of MNBA-ClEt was continued after the shutter of the vapor deposition boat containing MNBA was completely closed until the thickness of the deposited layer was increased by another about 1.5 μm. When the total thickness of the deposited layer monitored with a quartz oscillator type membrane thickness monitor reached about 4.0 μm, the shutter shielding the sample was completely closed to finish the crystal growth.

Thereafter, the multilayer crystal was taken out of the vacuum vapor deposition apparatus and the photoresist pattern and MNBA and MNBA-ClEt thereon were removed. The sample was then rinsed with water and dried.

Silicon dioxide ($SiO_2$) was then vapor-deposited on the entire surface to a thickness of about 200 nm by electron beam ion evaporation in oxygen atmosphere.

Further, aluminum was deposited on the entire surface to a thickness of about 200 nm. The aluminum layer was etched by an aqueous potassium ferricyanide solution (1 wt%) and the photoresist was removed to prepare planar electrodes, thereby preparing an internal total reflection switch.

That is, two refractive index distribution waveguides with a width of about 10 μm made of the MNBA↓·MNBA-ClEt↑ isomorphous mixed crystal layer and the MNBA-ClEt single crystal layer were crossed at a crossing angle of about 7.5°, and planar electrodes were formed at the crossing portion to form a switching portion. The distance between the electrodes was about 4 μm. Thus, the axis of absorbing in the longest wavelength of the MNBA-ClEt single crystal waveguide was perpendicular to the longitudinal direction of the planar electrodes.

A linearly polarized light of He-Ne laser beam obtained by passing through a polarizer was impinged horizontally on the end face of the waveguide and was propagated in the TE mode.

It was confirmed that with this device, the light path can be switched as in Example 47.

The above-described total internal reflection switch was heated to 120°C in an oven and then allowed to cool after

taking the sample out of the oven. No breaking (generation of cracks, peeling and dropping) was observed. Further, by repeating the switching operation, no change occurred and the switch was properly operated.

(Example 49)

Production of MNBA-Et/MNBA·MNBA-ClEt Multilayer Organic Nonlinear Optical Crystal by Solution Method and Analysis Thereof with Polarizing Microscope

A crystal of MNBA-Et (size: 13 mm x 6 mm x 4.5 mm) was grown by the slow cooling method from a solution in dimethylacetamide.

By the observation with a polarizing microscope, it was found that this crystal was a single crystal. By the X-ray diffraction analysis, it was found that the largest crystal face was {0 1 0} face.

Taking the b axis of MNBA-Et crystal as y axis, taking the axis of the maximum absorption (the axis having an absorption edge at the longest wavelength) in the ac plane ({0 1 0} face) as x axis, and taking the axis perpendicular to these axes as z axis, the relationships among the principal refractive indices along the respective axes are $n_x > n_y > n_z$, and the nonlinear susceptibility ($\chi^{(2)}_{11}$) along x axis is the maximum.

The crystal was cut with a wire saw along the plane perpendicular to the x axis so as to divide the crystal into two portions.

To provide optically smooth surfaces, the {0 1 0} face perpendicular to the y axis (y-cut face) of one of the crystals and the cut face perpendicular to the x axis (x-cut face) of another crystal were polished with diamond paste.

Observation with an interferometer microscope revealed that the thus provided optically smooth surfaces had a maximum surface roughness of ± 0.1 µm.

Using the MNBA-Et single crystal having the thus provided y-cut polished face or x-cut polished face as a substrate layer, simultaneous solution phase heteroepitaxial growth of MNBA and MNBA-ClEt was carried out as follows:

In an about one liter cylindrical glass vessel having a lid with three openings, a solution prepared by completely dissolving about 14.0 g of MNBA powder crystals and about 19.0 g of MNBA-ClEt powder crystals under heat in about 500 ml of chloroform was placed. Of the three openings in the lid, two were used as an inlet and an outlet of dry nitrogen gas, and the other one was stopped with a silicone rubber stopper. A platinum line was penetrated through the silicone rubber stopper and the above-described y-cut MNBA-Et single crystal or x-cut MNBA-Et single crystal was hung on the tip of the platinum line in such a manner that the crystal does not contact the solution. The vessel was closed with the lid so that the atmosphere in the vessel was converted to chloroform atmosphere. Dry nitrogen gas was introduced at a rate of about 2 ml/min. and the system was left to stand under these conditions for two days at room temperature (about 25°C), so that a small amount of crystal was precipitated by slow evaporation and the solution was settled.

Thereafter, the platinum line was lowered in such a manner that half area of the y-cut face or the x-cut face of the two MNBA-Et crystals was immersed in the MNBA/MNBA-ClEt solution in chloroform, and the slow evaporation was continued. About one hour later, the MNBA-Et single crystal was drawn up from the MNBA/MNBA-ClEt solution in chloroform and was rinsed with cyclohexane/isopropanol mixed solvent (1:1) and then with cyclohexane, followed by drying.

Both of the regions immersed in the MNBA/MNBA-ClEt solution in chloroform and not immersed in the solution on the y-cut face remained transparent in their entirety. As for x-cut face, the entire surface remained transparent too. By observing the resulting sample with a reflector microscope, it was found that a step was formed at the boundary between the immersed region and non-immersed region due to the deposited layer. The height of the step was measured by the pin-touch method. The height of the step on the y-cut face was about 6.0 µm and that on the x-cut face was about 13 µm. The polarization characteristics of the y-cut face and x-cut face were examined with a polarizing microscope. As a result, the thickness-increased regions (i.e., the regions immersed in the MNBA/MNBA-ClEt solution in chloroform) and the other regions (i.e., the regions not immersed in the solution) did not change in their light-transmitting properties and extinction properties. Thus, it was confirmed that the MNBA·MNBA-ClEt single crystal layer was formed on the entire surface of the regions immersed in the solution with its principal axis of refractive index coincident with that of the multilayer crystal.

The above-described MNBA-Et/MNBA·MNBA-ClEt multilayer organic nonlinear optical crystal was heated to 120°C in an oven and then allowed to cool after taking the sample out of the oven, but no breaking (generation of cracks, peeling and dropping) was observed.

(Example 50)

Measurement of Second Order Nonlinear Susceptibility ($\chi^{(2)}_{11}$) by Maker Fringe Method

A MNBA-Et (y-cut)/MNBA·MNBA-ClEt multilayer organic nonlinear optical crystal (size: 7 mm x 6 mm x 1.6 mm)

having a MNBA·MNBA-ClEt isomorphous mixed single crystal layer with a thickness of about 50 μm grown by the solution phase heteroepitaxial method was prepared by the same method as in Example 48.

The polarization characteristics of the multilayer organic nonlinear optical crystal were examined by using a polarizing microscope. As a result, no change was observed in the light-transmitting property and extinction property. Thus, it was confirmed that the entire MNBA and MNBA-ClEt layer grown was an isomorphous mixed single crystal of which principal axis of refractive index was coincident with that of the MNBA-Et single crystal substrate.

The side of the MNBA-Et crystal substrate layer of the above-described MNBA-Et (y-cut)/MNBA·MNBA-ClEt multilayer organic nonlinear optical crystal with a thickness of about 1.6 mm was ground and polished so that the thickness of the multilayer crystal was reduced to about 180 μm.

The intensity of the second-order nonlinear optical effect and its anisotropy of the MNBA-Et/MNBA·MNBA-ClEt multilayer organic nonlinear optical crystal were examined by the Maker fringe method (see Example 36).

The largest nonlinear susceptibility ($\chi^{(2)}_{11}$) obtained when the linear polarization (polarized plane) of the impinging light was coincident with the x axis in the ac plane was 4.0 x $10^{-6}$ esu. This is more than about 3 times the $\chi^{(2)}_{11}$ of the MNA crystal which is an organic material known to have a large nonlinearity. This value is about the same as that of the MNBA-Et crystal used as the substrate crystal, which is 3.9 x $10^{-6}$ esu (Japanese Patent Application No. 1-199761).

From these results, it was found that the MNBA·MNBA-ClEt isomorphous mixed single crystal layer in the MNBA-Et/MNBA·MNBA-ClEt multilayer crystal, which was grown by the solution phase method was a single crystal having the same symmetry (anisotropy of the second-order nonlinear optical effect) and the similar intensity of the second-order nonlinear optical effect as the MNBA-Et crystal substrate layer.

The above-described MNBA-Et/MNBA·MNBA-ClEt multilayer crystal was heated to 150°C in an oven and then allowed to cool after taking the sample out of the oven. No breaking (generation of cracks, peeling and dropping) was observed. Further, by repeating the above-described experiment of the Maker fringe method, it was confirmed that fluctuation of the measured values due to the changes such as crystal distortion which clearly adversely affect the optical characteristics did not occur.

(Example 51)

Preparation of Optical Modulator Employing Multilayer Crystal and Measurement of Linear Electro-Optic Effect

Using the multilayer crystal obtained in Example 49, an optical modulator was prepared and the intensity of the linear electro-optic effect thereof was measured. The structure of the optical modulator was the same as the optical modulator prepared in Example 37.

The MNBA-Et/MNBA·MNBA-ClEt multilayer crystal was adhered to a glass plate in such a manner that the ac plane (y-cut face) contacts the glass plate. Aluminum parallel electrodes (thickness: about 200 nm; distance between the electrodes: 2 mm; width of electrode: 2 mm; length of electrode: 20 mm) formed on the glass plate were pressed to the ac plane to construct an electro-optic device.

The figure of merit of the optical modulator calculated was about 770 pm/V. This value is a large value which is not less than 6 times that obtained with an optical modulator employing LN crystal (120 pm/V). This value is similar to that of MNBA-Et crystal used as the substrate layer crystal, which is about 700 pm/V (Japanese Patent Application No. 1-199761).

From these results, it was found that the grown MNBA·MNBA-ClEt isomorphous mixed single crystal layer in the MNBA-Et/MNBA·MNBA-ClEt multilayer crystal was a single crystal having the same symmetry (anisotropy of the second-order nonlinear optical effect) and the similar intensity of the linear electro-optic effect as the MNBA-Et crystal substrate layer.

The above-described optical modulator employing the multilayer crystal was heated to 100°C in an oven and then allowed to cool after taking the sample out of the oven. No breaking (generation of cracks, peeling and dropping) was observed. Further, by repeating the measurement of the linear electro-optic effect, it was confirmed that no fluctuation of the measured values occurred.

(Example 52)

Preparation of Frequency Converter

A MNBA-Et/MNBA·MNBA-ClEt multilayer crystal having a MNBA·MNBA-ClEt isomorphous mixed single crystal layer grown with a thickness of about 1.0 μm was prepared by the solution phase method as in Example 49 using the ac plane ({0 1 0} face) of the MNBA-Et crystal as the substrate layer.

On the ac plane of the grown isomorphous mixed crystal layer in the MNBA-Et/MNBA·MNBA-ClEt multilayer crystal, tantalum pentoxide was vapor-deposited to a thickness of about 600 ± 100 nm to prepare a composite planar waveguide

made of the MNBA·MNBA-ClEt isomorphous mixed single crystal layer and the tantalum pentoxide layer. With this structure, the refractive index of tantalum pentoxide is higher than that of the MNBA-ClEt substrate crystal at the wavelength of the YAG laser (1064 nm) and lower at the wavelength of the second harmonic generation.

Into the composite planar waveguide, a linearly polarized light of YAG laser was impinged in such manner that its plane of polarization was parallel to the ac plane. In other words, the linearly polarized light was impinged and propagated in the composite planar waveguide in the TE mode. The power density of the impinging YAG laser was about 1 $MW/cm^2$.

Radiation of a green SH light to the MNBA-Et crystal side was observed. The maximum frequency-converted light was observed when the plane of polarization of the YAG laser was coincident with the x axis.

The above-described frequency converter employing the MNBA-Et/MNBA·MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 53)

Preparation of Frequency Converter Having Passive Waveguide

A multilayer crystal having a grown MNBA·MNBA-ClEt isomorphous mixed single crystal (thickness: about 60 µm) was prepared by the solution phase heteroepitaxial growth as in Example 1 using the polished y-cut face (ac plane, {0 1 0} face) of a MNBA-Et crystal as the substrate layer.

On the ac plane of the grown MNBA·MNBA-ClEt isomorphous mixed crystal layer in the MNBA-Et/MNBA·MNBA-ClEt multilayer crystal, tantalum pentoxide was vapor-deposited to a thickness of about 900 ± 100 nm to prepare a passive planar waveguide made of tantalum pentoxide. With this structure, the refractive index of tantalum pentoxide is higher than that of the isomorphous mixed single crystal layer at the wavelength of the YAG laser (1064 nm) and lower at the wavelength of the second harmonic generation.

Into the passive planar waveguide, a linearly polarized light of YAG laser was impinged in such manner that its plane of polarization was parallel to the ac plane. In other words, the linearly polarized light was impinged and propagated in the passive planar waveguide in the TE mode. The power density of the impinging YAG laser was about 1 $MW/cm^2$.

Radiation of a green SH light to the MNBA-Et crystal side was observed. The maximum frequency-converted light was observed when the plane of polarization of the YAG laser was coincident with the x axis.

From these results, it is concluded that the second harmonic generation is caused by the leakage of the YAG laser photoelectric field (evanescent wave) propagating in the tantalum pentoxide passive planar waveguide to the MNBA·MNBA-ClEt isomorphous mixed single crystal side.

The above-described frequency converter having the passive waveguide employing the MNBA-Et/MNBA·MNBA-ClEt multilayer crystal was heated to 100°C in an oven and then allowed to cool after taking the sample out of the oven. No breaking (generation of cracks, peeling and dropping) was observed. Further, by repeating the frequency conversion, it was confirmed that no change in the frequency-converting performance occurred.

(Example 54)

Preparation of Total Internal Reflection (TIR) Switch

Using a polished y-cut face (ac plane, ({0 1 0} face) of a MNBA-Et single crystal as a substrate layer, the pattern growth of MNBA·MNBA-Et isomorphous mixed single crystal by the solution phase heteroepitaxial method was carried out as follows:

On the polished y-cut face of a MNBA-Et single crystal sizing 10 mm x 12 mm x 9.5 mm, aluminum was vapor-deposited to a thickness of about 2000 nm. On the surface of the aluminum surface, a quinone diazide-based positive photoresist was applied with a spinner to a thickness of about 2 µm. After drying the sample under heat, the photoresist was exposed through a photomask and was developed by a developer only for positive photoresist. The sample was then dried again under heat. The photomask used had a pattern of two waveguides (width: 10 µm) crossing at an angle of 7.5°. The aluminum layer was selectively etched by an aqueous potassium ferricyanide/potassium hydroxide (4 wt% and 1 wt%, respectively). The photoresist pattern was then exposed and removed by using the developer.

On the thus formed MNBA-Et single crystal layer having the X-shaped aluminum pattern mask, a MNBA·MNBA-ClEt isomorphous mixed crystal layer was grown for about 10 minutes by the solution phase heteroepitaxial method as in Example 48. The sample was taken out and was rinsed with isopropanol:n-hexane (1:1). By the observation with a microscope, the thickness of the grown layer was about 1.5 µm and microcrystals and the like were almost not

attached to the aluminum pattern mask.

The aluminum layer was etched again with an aqueous potassium ferricyanide/potassium hydroxide (2 wt% and 2 wt%, respectively) to completely remove the aluminum layer. The sample was then rinsed with water and dried.

Silicon dioxide ($SiO_2$) was then vapor-deposited on the entire surface to a thickness of about 200 nm by electron beam ion evaporation in oxygen atmosphere.

Further, aluminum was deposited on the entire surface to a thickness of about 200 nm.

On this aluminum layer, a positive photoresist was applied with a spinner and was exposed through a chromium mask having an electrode pattern, followed by development of the photoresist. The aluminum layer was etched by an aqueous potassium hydroxide (2 wt%)/potassium ferricyanide (1 wt%) solution and the photoresist was removed to prepare planar electrodes.

That is, two MNBA·MNBA-ClEt isomorphous mixed crystal waveguides with a width of about 10 μm were crossed at a crossing angle of about 7.5°, and planar electrodes were formed at the crossing portion to form a switching portion. The distance between the electrodes was about 4 μm. Thus, the axis of absorbing in the longest wavelength of the MNBA·MNBA-ClEt isomorphous mixed single crystal waveguide was perpendicular to the longitudinal direction of the planar electrodes.

A linearly polarized light of He-Ne laser beam obtained by passing through a polarizer was impinged horizontally on the end face of the waveguide and was propagated in the TE mode.

When no voltage was applied, it was confirmed by observing the red light scattered at the end face that the light went straight and was emitted from an end face.

A dc voltage of 5V was then applied to the planar electrodes. The red scattered light was observed on an end face of the waveguide, which was opposing one to the end face where the red scattered light was observed when no voltage was applied. Thus, it was confirmed that with this device, the light path can be switched by applying a voltage to the electrodes.

Comparing the present device with the device employing LN crystal, the crossing angle of the switch utilizing the MNBA-Et/MNBA·MNBA-ClEt multilayer crystal having the MNBA·MNBA-ClEt patterned layer is about twice as large as that of the switch employing the LN crystal. Therefore, it has been shown that the degree of integration of an optical switch of the branched type can be about four times higher than that employing LN crystal.

The above-described total internal reflection switch was heated to 100°C in an oven and then allowed to cool after taking the sample out of the oven. No breaking (generation of cracks, peeling and dropping) was observed. Further, by repeating the switching operation, no change occurred and the switch was properly operated.

(Example 55)

Production of MNBA/MNBA·MNBA-ClEt/MNBA·MNBA-Et Multilayer Organic Nonlinear Optical Crystal by Solution and Melt Methods

Using a MNBA single crystal (size: 10 x 8 x 0.8 mm) having an optically smooth y-cut face ({0 1 0} face, ac plane), MNBA·MNBA-ClEt single crystal layer was grown by the solution phase heteroepitaxial growth as in Example 49.

About 1.5 hours later, the increase in the thickness on the y-cut face was about 11.0 μm. By the observation with a polarizing microscope, it was confirmed that the MNBA·MNBA-ClEt single crystal layer was formed with its principal axis of refractive index coincident with that of the multilayer crystal on the entire surface of the region of the y-cut face, which was immersed in the solution.

Using the thus obtained MNBA/MNBA·MNBA-ClEt multilayer organic nonlinear optical crystal having the optically smooth y-cut face, melt phase heteroepitaxial growth of MNBA·MNBA-Et was carried out. In the visual field of a polarizing microscope equipped with a hot plate, a slide glass carrying MNBA and MNBA-Et mixed powder crystals (3:7 mol/mol) thereon was placed, and the sample was heated to 177°C so as to melt the mixed powder crystals. Thereafter, the sample was cooled to 171.5°C. A MNBA/MNBA·MNBA-ClEt multilayer organic nonlinear optical crystal (m.p. of MNBA: about 194°C; m.p. of MNBA-ClEt: 194 - 196°C) placed on a different portion of the slide glass and so having almost the same temperature as the MNBA/MNBA-Et melt was moved to the MNBA/MNBA-Et melt in such a manner that the optically smooth y-cut face contacts the MNBA/MNBA-Et melt. The temperature of the hot plate was lowered at a rate of 0.2°C/min. As a result, crystal growth was observed on the y-cut face of the MNBA/MNBA·MNBA-ClEt multilayer organic nonlinear optical crystal. It was also confirmed from the polarization characteristics that the grown crystal was a single crystal having the same direction of the principal axis of refractive index as that of the multilayer crystal on which the single crystal was grown.

By keeping the temperature at about 168.5°C, MNBA·MNBA-Et single crystal layer was grown. About 5 minutes later, the increase in the thickness of the layer was about 250 μm. The side of the grown isomorphous mixed single crystal layer of the MNBA(y-cut)/MNBA·MNBA-ClEt/MNBA·MNBA-Et multilayer organic nonlinear optical crystal was ground and polished. After the polishing, the thickness of the isomorphous mixed single crystal layer was about 100

μm. By polishing the MNBA substrate layer crystal, the thickness of the multilayer crystal was reduced to about 250 μm.

The optical modulator as in Example 50 was prepared using the thus obtained MNBA/MNBA·MNBA-ClEt/MNBA·MNBA-Et multilayer crystal and the intensity of the linear electro-optic effect was determined. The figure of merit was calculated, which was as large as about 750 pm/V.

INDUSTRIAL AVAILABILITY

By the multilayer organic nonlinear optical crystal or the process for producing the same according to the present invention, an organic nonlinear optical crystal which overcomes the problems in the conventional organic nonlinear optical crystal, which has the following advantages is provided:

(1) The orientation of the crystal growth and the thickness of waveguides can be precisely controlled, so that it is easy to design and to form waveguides which are optimum for the given function of the device.
(2) The crystal is resistant to crystal distortion and breakage (peeling and dropping) in the change of temperature.
(3) The difference in the refractive index between an optical waveguide and its environment or the refractive index profile can be intentionally and appropriately adjusted, so that the degree of freedom in the designing of the device is large.
(4) It is easy to provide a desired pattern such as nonlinear optical waveguide or grating coupler.
(5) It is easy to make the device compact or highly integrated.

Further, it is expected that the nonlinear optical devices such as frequency converters and electro-optic devices with high performance and reliability, which are prepared by using the multilayer organic nonlinear optical crystal of the present invention will exhibit very large advantageous effects in the field of optical information processing and optical communication.

**Claims**

1. A multilayer organic nonlinear optical crystal structure comprising a plurality of noncentrosymmetric organic single crystal layers, said single crystal layers satisfying the following three requirements:

   i) at least two layers of said single crystal layers optically contact each other;
   ii) at least two layers of said single crystal layers optically contacting each other have different refractive indices; and
   iii) at least one layer of said single crystal layers has an optically smooth crystal surface.

2. The multilayer organic nonlinear optical crystal structure of claim 1, wherein said at least two noncentrosymmetric organic single crystal layers optically contacting each other have at least one pair of principal axes of refractive index which are substantially coincident.

3. The multilayer organic nonlinear optical crystal structure of claim 1, wherein said at least one noncentrosymmetric organic single crystal layer having an optically smooth crystal surface has at least one principal axis of refractive index which is substantially perpendicular to said crystal surface.

4. The multilayer organic nonlinear optical crystal structure of claim 1, wherein said at least one noncentrosymmetric organic single crystal layer having an optically smooth crystal surface is one of said at least two noncentrosymmetric organic single crystal layers optically contacting each other.

5. The multilayer organic nonlinear optical crystal structure of claim 1, wherein at least one layer of said plurality of noncentrosymmetric organic single crystal layers consists essentially of a compound selected from the group consisting of 4'-nitrobenzylidene-3-alkanoylamino-4-methoxyaniline and 4'-nitrobenzylidene-3-halogenoalkanoylamino-4-methoxyaniline which are represented by the formula A:

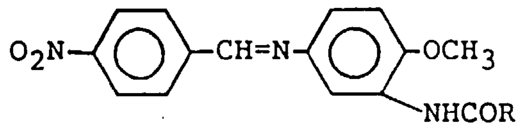

A

wherein R represents alkyl or haloalkyl having not more than 2 carbon atoms
and compounds which are the same as said compounds except that at least a part of hydrogen atoms is substituted with deuterium.

**6.** The multilayer organic nonlinear optical crystal structure of claim 1, wherein at least one layer of said at least two noncentrosymmetric organic single crystal layers optically contacting each other consists essentially of a compound selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**7.** The multilayer organic nonlinear optical crystal structure of claim 1, wherein said at least one noncentrosymmetric organic single crystal layer having an optically smooth crystal surface consists essentially of a compound selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**8.** The multilayer organic nonlinear optical crystal structure of claim 1, wherein at least one layer of said plurality of noncentrosymmetric organic single crystal layers is an isomorphous mixed single crystal layer consisting essentially of a plurality of compounds which form the same kind of noncentrosymmetric organic single crystal.

**9.** The multilayer organic nonlinear optical crystal structure of claim 1, wherein at least one layer of said at least two noncentrosymmetric organic single crystal layers optically contacting each other is an isomorphous mixed single crystal layer consisting essentially of a plurality of compounds which form the same kind of noncentrosymmetric organic single crystal.

**10.** The multilayer organic nonlinear optical crystal structure of claim 1, wherein said at least one noncentrosymmetric organic single crystal layer having an optically smooth crystal surface is an isomorphous mixed single crystal layer consisting essentially of a plurality of compounds which form the same kind of noncentrosymmetric organic single crystal.

**11.** The multilayer organic nonlinear optical crystal structure of claim 1, wherein at least one layer of said plurality of noncentrosymmetric organic single crystal layers is an isomorphous mixed single crystal layer consisting essentially of a plurality of compounds which form the same kind of noncentrosymmetric organic single crystal, which compounds are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**12.** The multilayer organic nonlinear optical crystal structure of claim 1, wherein at least one layer of said at least two noncentrosymmetric organic single crystal layers optically contacting each other is an isomorphous mixed single crystal layer consisting essentially of a plurality of compounds which form the same kind of noncentrosymmetric organic single crystal, which compounds are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**13.** The multilayer organic nonlinear optical crystal structure of claim 1, wherein said at least one noncentrosymmetric organic single crystal layer having an optically smooth surface is an isomorphous mixed single crystal layer consisting essentially of a plurality of compounds which form the same kind of noncentrosymmetric organic single crystal, which compounds are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**14.** The multilayer organic nonlinear optical crystal structure of claim 1, wherein at least one layer of said plurality of noncentrosymmetric organic single crystal layers is an isomorphous mixed noncentrosymmetric organic single crystal layer having a gradient of refractive index.

15. The multilayer organic nonlinear optical crystal structure of claim 1, wherein at least one layer of said plurality of noncentrosymmetric organic single crystal layers is an isomorphous mixed noncentrosymmetric organic single crystal layer having a gradient of refractive index, which layer consists essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

16. The multilayer organic nonlinear optical crystal structure of claim 1, which has at least one patterned noncentrosymmetric organic single crystal layer.

17. The multilayer organic nonlinear optical crystal structure of claim 16, wherein said at least one patterned noncentrosymmetric organic single crystal layer is one of said at least two noncentrosymmetric organic single crystal layers optically contacting each other.

18. The multilayer organic nonlinear optical crystal structure of claim 16, wherein said at least one patterned noncentrosymmetric organic single crystal layer is said noncentrosymmetric organic single crystal layer having an optically smooth crystal surface.

19. The multilayer organic nonlinear optical crystal structure of claim 16, wherein said at least one patterned noncentrosymmetric organic single crystal layer consists essentially of a compound selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

20. The multilayer organic nonlinear optical crystal structure of claim 16, wherein said at least one patterned noncentrosymmetric organic single crystal layer is an isomorphous mixed single crystal layer consisting essentially of a plurality of compounds which form noncentrosymmetric organic single crystals of the same kind of symmetry.

21. The multilayer organic nonlinear optical crystal structure of claim 16, wherein said at least one patterned noncentrosymmetric organic single crystal layer is an isomorphous mixed noncentrosymmetric organic single crystal layer consisting essentially of a plurality of compounds selected from the group consisting of 4'-nitrobenzylidene-3-alkanoylamino-4-methoxyaniline, 4'-methoxyaniline, which are represented by the formula A as defined in claim 5, and compounds which are the same as said compounds except that at least a part of hydrogen atoms is substituted with deuterium.

22. The multilayer organic nonlinear optical crystal structure of claim 16, wherein said at least one patterned noncentrosymmetric organic single crystal layer is an isomorphous noncentrosymmetric organic single crystal layer having a gradient of refractive index.

23. The multilayer organic nonlinear optical crystal structure of claim 16, wherein said at least one patterned noncentrosymmetric organic single crystal layer is an isomorphous noncentrosymmetric organic single crystal layer having a gradient of refractive index consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

24. A process for producing a multilayer organic nonlinear optical crystal structure comprising the step of forming a noncentrosymmetric organic single crystal layer on an optically smooth crystal surface of an arbitrary noncentrosymmetric organic single crystal layer such that said layers optically contact each other, wherein said forming noncentrosymmetric organic single crystal layer has a different refractive index from that of said arbitrary noncentrosymmetric organic single crystal layer having the optically smooth crystal surface; and sequentially forming noncentrosymmetric organic single crystal layers up to the (m + 1)th layer, wherein m represents an arbitrary natural number, such that the refractive index of the (m + 1)th layer is different from that of the mth layer.

25. The process for producing a multilayer organic nonlinear optical crystal according to claim 24, wherein said noncentrosymmetric organic single crystal layer having an optically smooth crystal surface and said noncentrosymmetric organic single crystal layer formed thereon have at least one pair of principal axes of refractive index which

are substantially coincident.

**26.** The process for producing a multilayer organic nonlinear optical crystal according to claim 24, wherein said noncentrosymmetric organic single crystal layer having an optically smooth crystal surface has at least one principal axis of refractive index which is substantially perpendicular to said crystal surface.

**27.** The process for producing a multilayer organic nonlinear optical crystal according to claim 24, wherein the compound constituting said noncentrosymmetric organic single crystal layer having an optically smooth crystal surface and the compound constituting said noncentrosymmetric organic single crystal layer formed on said optically smooth crystal surface form the same kind of noncentrosymmetric organic single crystal.

**28.** The process for producing a multilayer organic nonlinear optical crystal according to claim 24, wherein the compound constituting said noncentrosymmetric organic single crystal layer having an optically smooth crystal surface and the compound constituting said noncentrosymmetric organic single crystal layer formed on said optically smooth crystal surface are selected from the group consisting of 4'-nitrobenzylidene-3-alkanoylamino-4-methoxyaniline and 4'-nitrobenzylidene-3-halogenoalkanoylamino-4-methoxyaniline which are represented by the formula A:

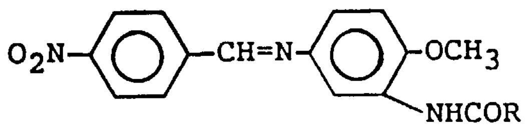

A

wherein R represents alkyl or haloalkyl having not more than 2 carbon atoms and compounds which are the same as said compounds except that at least a part of hydrogen atoms is substituted with deuterium.

**29.** The process for producing a multilayer organic nonlinear optical crystal according to claim 24, wherein at least one layer of said noncentrosymmetric organic single crystal layer having an optically smooth crystal surface and said noncentrosymmetric organic single crystal layer formed on said optically smooth crystal surface is an isomorphous mixed single crystal layer consisting essentially of a plurality of compounds which form the same kind of noncentrosymmetric organic single crystal.

**30.** The process for producing a multilayer organic nonlinear optical crystal according to claim 24, wherein at least one layer of said arbitrary noncentrosymmetric organic single crystal layer having an optically smooth crystal surface and said noncentrosymmetric organic single crystal layer formed on said optically smooth crystal surface is an isomorphous mixed single crystal layer consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**31.** The process for producing a multilayer organic nonlinear optical crystal according to claim 24, wherein at least one layer of said arbitrary noncentrosymmetric organic single crystal layer having an optically smooth crystal surface and said noncentrosymmetric organic single crystal layer formed on said optically smooth crystal surface is an isomorphous mixed single crystal layer having a gradient of refractive index.

**32.** The process for producing a multilayer organic nonlinear optical crystal according to claim 24, wherein at least one layer of said arbitrary noncentrosymmetric organic single crystal layer having an optically smooth crystal surface and said noncentrosymmetric organic single crystal layer formed on said optically smooth crystal surface is an isomorphous mixed single crystal layer having a gradient of refractive index consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**33.** The process for producing a multilayer organic nonlinear optical crystal according to claim 24 wherein the formation of at least one noncentrosymmetric organic single crystal layer is carried out by crystal growth.

**34.** The process for producing a multilayer organic nonlinear optical crystal according to claim 33, wherein said crystal growth is carried out by a method in which the thickness of the crystal during the crystal growth is monitored.

**35.** The process for producing a multilayer organic nonlinear optical crystal according to claim 33, wherein said crystal growth is carried out by a vapor phase method.

**36.** The process for producing a multilayer organic nonlinear optical crystal according to claim 33, wherein said crystal growth is carried out by a solution method.

**37.** The process for producing a multilayer organic nonlinear optical crystal according to claim 33, wherein said crystal growth is carried out by a melt method.

**38.** The process for producing a multilayer organic nonlinear optical crystal according to claim 33, wherein the compound constituting said arbitrary noncentrosymmetric organic single crystal layer having an optically smooth crystal surface and the compound constituting said noncentrosymmetric organic single crystal layer formed on said optically smooth crystal surface by the crystal growth form the same kind of noncentrosymmetric organic single crystal.

**39.** The process for producing a multilayer organic nonlinear optical crystal according to claim 33, wherein the compound constituting said arbitrary noncentrosymmetric organic single crystal layer having an optically smooth crystal surface and the compound constituting said noncentrosymmetric organic single crystal layer formed on said optically smooth crystal surface by the crystal growth are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**40.** The process for producing a multilayer organic nonlinear optical crystal according to claim 33, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer consisting essentially of a plurality of compounds which form the same kind of noncentrosymmetric organic single crystal.

**41.** The process for producing a multilayer organic nonlinear optical crystal according to claim 33, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**42.** The process for producing a multilayer organic nonlinear optical crystal according to claim 33, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer having a gradient of refractive index.

**43.** The process for producing a multilayer organic nonlinear optical crystal according to claim 33, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer having a gradient of refractive index consisting essentially of a plurality of compounds selected from the group consisting of 4'-nitrobenzylidene-3-alkanoylamino-4-methoxyaniline; 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**44.** The process for producing a multilayer organic nonlinear optical crystal according to claim 24 wherein the formation of at least one noncentrosymmetric organic single crystal layer is carried out by crystal growth after forming a pattern mask on said optically smooth crystal surface of said arbitrary noncentrosymmetric organic single crystal

layer.

**45.** The process for producing a multilayer organic nonlinear optical crystal having a patterned layer according to claim 44, wherein said pattern mask is formed by lithography using active electromagnetic wave.

**46.** The process for producing a multilayer organic nonlinear optical crystal having a patterned layer according to claim 44, wherein said pattern mask is a photoresist layer.

**47.** The process for producing a multilayer organic nonlinear optical crystal according to claim 44, wherein said crystal growth is carried out by a method in which the thickness of the crystal during the crystal growth is monitored.

**48.** The process for producing a multilayer organic nonlinear optical crystal according to claim 44, wherein said crystal growth is carried out by a vapor phase method.

**49.** The process for producing a multilayer organic nonlinear optical crystal according to claim 44, wherein said crystal growth is carried out by a solution method.

**50.** The process for producing a multilayer organic nonlinear optical crystal according to claim 44, wherein said crystal growth is carried out by a melt method.

**51.** The process for producing a multilayer organic nonlinear optical crystal according to claim 44, wherein the compound constituting said arbitrary noncentrosymmetric organic single crystal layer having an optically smooth crystal surface and the compound constituting said noncentrosymmetric organic single crystal layer formed on said optically smooth crystal surface by the crystal growth form the same kind of noncentrosymmetric organic single crystal.

**52.** The process for producing a multilayer organic nonlinear optical crystal according to claim 44, wherein the compound constituting said arbitrary noncentrosymmetric organic single crystal layer having an optically smooth crystal surface and the compound constituting said noncentrosymmetric organic single crystal layer formed on said optically smooth crystal surface by the crystal growth are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**53.** The process for producing a multilayer organic nonlinear optical crystal according to claim 44, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer consisting essentially of a plurality of compounds which form the same kind of noncentrosymmetric organic single crystal.

**54.** The process for producing a multilayer organic nonlinear optical crystal according to claim 44, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**55.** The process for producing a multilayer organic nonlinear optical crystal according to claim 44, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer having a gradient of refractive index.

**56.** The process for producing a multilayer organic nonlinear optical crystal according to claim 44, wherein at least one layer of said arbitrary noncentrosymmetric organic single crystal layer having an optically smooth crystal surface and said noncentrosymmetric organic single crystal layer formed on said optically smooth crystal surface formed by the crystal growth is an isomorphous mixed noncentrosymmetric organic single crystal layer having a

gradient of refractive index consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**57.** The process for producing a multilayer organic nonlinear optical crystal according to claim 24, comprising a step of etching one of said noncentrosymmetric organic single crystal layers after forming a pattern mask thereon.

**58.** The process for producing a multilayer organic nonlinear optical crystal according to claim 57, wherein said pattern mask is formed by lithography using active electromagnetic wave.

**59.** The process for prbducing a multilayer organic nonlinear optical crystal according to claim 57, wherein said pattern mask is a photoresist layer.

**60.** The process for producing a multilayer organic nonlinear optical crystal according to claim 57, wherein said etching is a wet etching using a solvent which dissolves the single crystal layer.

**61.** The process for producing a multilayer organic nonlinear optical crystal according to claim 57, wherein said etching is a dry etching by which the noncentrosymmetric organic single crystal layer to be etched is removed as a volatile gas.

**62.** The process for producing a multilayer organic nonlinear optical crystal according to claim 61, wherein said etching is a reactive ion etching using a mixed gas containing a halogenated hydrocarbon and/or halogenated carbon, and oxygen.

**63.** The process for producing a multilayer organic nonlinear optical crystal according to claim 57, wherein said arbitrary noncentrosynmetric organic single crystal layer having an optically smooth crystal surface and said noncentrosymmetric organic single crystal layer to be etched form the same kind of noncentrosymmetric organic single crystal.

**64.** The process for producing a multilayer organic nonlinear optical crystal according to claim 57, wherein the compound constituting said arbitrary noncentrosymmetric organic single crystal layer having an optically smooth crystal surface and the compound constituting the noncentrosymmetric organic single crystal layer to be etched are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**65.** The process for producing a multilayer organic nonlinear optical crystal according to claim 57, wherein the compound constituting said noncentrosymmetric organic single crystal layer to be etched is an isomorphous mixed noncentrosymmetric organic single crystal layer consisting essentially of a plurality of compounds which form the same kind of noncentrosymmetric organic single crystal layer as said arbitrary noncentrosymmetric organic single crystal layer having an optically smooth crystal surface.

**66.** The process for producing a multilayer organic nonlinear optical crystal according to claim 57, wherein the compound constituting said noncentrosymmetric organic single crystal layer to be etched is an isomorphous noncentrosymmetric organic single crystal layer consisting essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**67.** The process for producing a multilayer organic nonlinear optical crystal according to claim 57, wherein said noncentrosymmetric organic single crystal layer to be etched is an isomorphous mixed noncentrosymmetric organic single crystal layer having a gradient of refractive index.

**68.** The process for producing a multilayer organic nonlinear optical crystal according to claim 57, wherein said noncentrosymmetric organic single crystal layer to be etched is an isomorphous mixed noncentrosymmetric organic single crystal layer having a gradient of refractive index consisting essentially of a plurality of compounds selected

from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**69.** The process for producing a multilayer organic nonlinear optical crystal according to claim 24 wherein the formation of at least one noncentrosymmetric organic single crystal layer is carried out by simultaneous crystal growth of a plurality of compounds forming an isomorphous mixed crystal.

**70.** The process for producing a multilayer organic nonlinear optical crystal according to claim 69, wherein said plurality of compounds forming said isomorphous mixed crystal are selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 28, and compounds which are the same as said compounds except that at least a part of hydrogen atoms is substituted with deuterium.

**71.** The process for producing a multilayer organic nonlinear optical crystal according to claim 69, wherein said simultaneous crystal growth is carried out by a method in which the thickness of the crystal during the crystal growth is monitored.

**72.** The process for producing a multilayer organic nonlinear optical crystal according to claim 69, wherein said simultaneous crystal growth is carried out by a vapor phase method.

**73.** The process for producing a multilayer organic nonlinear optical crystal according to claim 69, wherein said plurality of compounds used for said simultaneous crystal growth are individually evaporated from individual evaporation source.

**74.** The process for producing a multilayer organic nonlinear optical crystal according to claim 73, wherein the deposition rates of said plurality of compounds individually evaporated from said individual evaporation source are individually controlled.

**75.** The process for producing a multilayer organic nonlinear optical crystal according to claim 72, wherein at least two compounds of said plurality of compounds used for said simultaneous crystal growth are evaporated from the same evaporation source.

**76.** The process for producing a multilayer organic nonlinear optical crystal according to claim 69, wherein the formation of at least one isomorphous mixed single crystal layer by the simultaneous crystal growth of said plurality of compounds is carried out after forming a pattern mask on the crystal surface on which said single crystal layer is grown.

**77.** The process for producing a multilayer organic nonlinear optical crystal according to claim 76, wherein said pattern mask is formed by lithography using active electromagnetic wave.

**78.** The process for producing a multilayer organic nonlinear optical crystal according to claim 77, wherein said pattern mask is a photoresist layer.

**79.** The process for producing a multilayer organic nonlinear optical crystal according to claim 69, wherein said simultaneous crystal growth is carried out by a solution method.

**80.** The process for producing a multilayer organic nonlinear optical crystal according to claim 69, wherein said simultaneous crystal growth is carried out by a melt method.

**81.** A second order nonlinear optical device comprising a multilayer organic nonlinear optical crystal in accordance with any of claims 1 to 23,

**82.** The second order nonlinear optical device of claim 81, wherein at least one layer of said at least two noncentrosymmetric organic single crystal layers optically contacting each other is an isomorphous mixed noncentrosymmetric organic single crystal layer having a gradient of refractive index.

**83.** The second order nonlinear optical device of claim 81, wherein at least one layer of said at least one noncentrosymmetric organic single crystal layer having an optically smooth crystal surface is an isomorphous mixed noncentrosymmetric organic single crystal layer having a gradient of refractive index.

**84.** The second order nonlinear optical device of claim 81, wherein at least one layer of said at least two noncentrosymmetric organic single crystal layers optically contacting each other is an isomorphous mixed noncentrosymmetric organic single crystal layer having a gradient of refractive index, which layer consists essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline,. which are represented by the formula A as defined in claim 5, and compounds which are the same as said compounds except that at least a part of hydrogen atoms is substituted with deuterium.

**85.** The second order nonlinear optical device of claim 81, wherein at least one layer of said at least one noncentrosymmetric organic single crystal layer having an optically smooth crystal surface is an isomorphous mixed noncentrosymmetric organic single crystal layer having a gradient of refractive index, which layer consists essentially of a plurality of compounds selected from the group consisting of 4'-nitrobenzylidene-3-alkanoylamino-4-methoxyaniline, 4'-nitrobenzylidene-3-halogenoalkanoylamino-4-methoxyaniline, which are represented by the formula A as defined in claim 5, and compounds which are the same as said compounds except that at least a part of hydrogen atoms is substituted with deuterium.

**86.** The second order nonlinear optical device of claim 81, wherein said optically smooth crystal surface of said at least one noncentrosymmetric organic single crystal layer in said noncentrosymmetric organic single crystal layers constituting said multilayer organic nonlinear optical crystal is a surface for impinging or propagating a light having a main component of the optical wave with polarization in an ac plane of at least one single crystal layer.

**87.** The second order nonlinear optical device of claim 81, wherein said optically smooth crystal surface of said at least one noncentrosymmetric organic single crystal layer in said noncentrosymmetric organic single crystal layers constituting said multilayer organic nonlinear optical crystal is a surface for impinging or propagating a light having a main component of the optical wave with polarization along the axis of absorbing in the longest wavelength in an ac plane of at least one single crystal layer.

**88.** The second order nonlinear optical device of claim 81, wherein said optically smooth crystal surface of said at least one noncentrosymmetric organic single crystal layer in said noncentrosymmetric organic single crystal layers constituting said multilayer organic nonlinear optical crystal is a surface for impinging or propagating a light having a main component of the optical wave with polarization along the direction shifted by 45° from the axis of absorbing in the longest wavelength in an ac plane of at least one single crystal layer.

**89.** The second order nonlinear optical device of claim 81, which has at least one pair of electrodes for applying an electric field having a large component in an ac plane of at least one noncentrosymmetric organic single crystal layer constituting said multilayer organic nonlinear optical crystal.

**90.** The second order nonlinear optical device of claim 81, which has at least one pair of electrodes for applying an electric field having a large component along the axis of absorbing in the longest wavelength in an ac plane of at least one single crystal layer.

**91.** The second order nonlinear optical device of claim 81, which has at least one pair of electrodes formed on a crystal surface substantially parallel to an ac plane of at least one noncentrosymmetric organic single crystal layer constituting said multilayer organic nonlinear optical crystal.

**92.** The second order nonlinear optical device of claim 81, which has at least one pair of electrodes formed on a crystal surface substantially perpendicular to the axis of absorbing in the longest wavelength in an ac plane of at least one single crystal layer constituting said multilayer organic nonlinear optical crystal.

**93.** The second order nonlinear optical device of claim 81, which has at least one pair of electrodes formed on two crystal surfaces substantially perpendicular to the axis of absorbing in the longest wavelength in an ac plane of at least one single crystal layer constituting said multilayer.organic nonlinear optical crystal.

**Patentansprüche**

1. Mehrschichtige Struktur organischer nichtlinearer optischer Kristalle, die eine Anzahl nichtzentrosymmetrischer organischer Einkristallschichten umfaßt, wobei die Einkristallschichten folgende drei Forderungen erfüllen: i) mindestens zwei Schichten der Einkristallschichten stehen in optischem Kontakt zueinander; ii) mindestens zwei Schichten der Einkristallschichten, die zueinander in optischem Kontakt stehen, haben unterschiedliche Brechungsindices; und iii) mindestens eine Schicht der Einkristallschichten weist eine optisch glatte Kristalloberfläche auf.

2. Mehrschichtige Struktur organischer nichtlinearer optischer Kristalle nach Anspruch 1, wobei die zumindest zwei nichtzentrosymmetrischen organischen Einkristallschichten, die in optischem Kontakt zueinander stehen, mindestens ein Paar Hauptachsen des Brechungsindex aufweisen, die im wesentlichen übereinstimmen.

3. Mehrschichtige Struktur organischer nichtlinearer optischer Kristalle nach Anspruch 1, wobei die zumindest eine nichtzentrosymmetrische organische Einkristallschicht mit optisch glatter Kristalloberfläche mindestens eine Hauptachse des Brechungsindex aufweist, die zur Kristalloberfläche im wesentlichen senkrecht ist.

4. Mehrschichtige Struktur organischer nichtlinearer optischer Kristalle nach Anspruch 1, wobei die zumindest eine nichtzentrosymmetrische organische Einkristallschicht mit optisch glatter Kristalloberfläche eine der zumindest zwei nichtzentrosymmetrischen organischen Einkristallschichten ist, die in optischem Kontakt zueinander stehen.

5. Mehrschichtige Struktur organischer nichtlinearer optischer Kristalle nach Anspruch 1, wobei zumindest eine Schicht der Anzahl der nichtzentrosymmetrischen organischen Einkristallschichten im wesentlichen aus einer Verbindung, die aus der Gruppe ausgwählt ist, die aus 4'-Nitrobenzyliden-3-alkanoylamino-4-methoxyanilin und 4'-Nitrobenzyliden-3-halogen alkanoylamino-4-methoxyanilin besteht, die durch die Formel dargestellt werden:

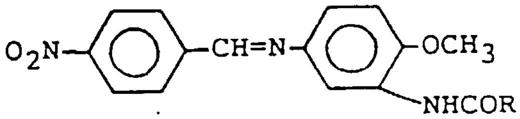

A

worin R eine Alkyl- oder Halogenalkylgruppe mit nicht mehr als 2 Kohlenstoffatomen darstellt,
und Verbindungen besteht, die die gleichen wie diese Verbindungen sind, außer daß zumindest ein Teil der Wasserstoffatome durch Deuterium substituiert ist.

6. Mehrschichtige Struktur organischer nichtlinearer optischer Kristalle nach Anspruch 1, wobei zumindest eine Schicht der zumindest zwei nichtzentrosymmetrischen organischen Einkristallschichten, die in optischem Kontakt zueinander stehen, im wesentlichen aus einer Verbindung, die aus der Gruppe ausgewählt ist, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

7. Mehrschichtige Struktur organischer nichtlinearer optischer Kristalle nach Anspruch 1, wobei die zumindest eine nichtzentrosymmetrische organische Einkristallschicht mit optisch glatter Kristalloberfläche im wesentlichen aus einer Verbindung, die aus der Gruppe ausgewählt ist, die aus 4'-Nitrobenzyliden-3-alkanoylamino-4-methoxyanilin und 4'-Nitrobenzyliden -3- halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

8. Mehrschichtige Struktur organischer nichtlinearer optischer Kristalle nach Anspruch 1, wobei zumindest eine Schicht der Anzahl der nichtzentrosymmetrischen organischen Einkristallschichten eine isomorph gemischte Einkristallschicht ist, die im wesentlichen aus einer Anzahl von Verbindungen besteht, die die gleiche Art eines nichtzentrosymmetrischen organischen Einkristalls bilden.

9. Mehrschichtige Struktur organischer nichtlinearer optischer Kristalle nach Anspruch 1, wobei zumindest eine Schicht der zumindest zwei nichtzentrosymmetrischen organischen Einkristallschichten, die in optischem Kontakt zueinander stehen, eine isomorph gemischte Einkristallschicht ist, die im wesentlichen aus einer Anzahl von Verbindungen besteht, die die gleiche Art des nichtzentrosymmetrischen organischen Einkristalls bilden.

**10.** Mehrschichtige Struktur organischer nichtlinearer optischer Kristalle nach Anspruch 1, wobei die zumindest eine nichtzentrosymmetrische organische Einkristallschicht mit optisch glatter Kristalloberfläche eine isomorph gemischte Einkristallschicht ist, die im wesentlichen aus einer Anzahl von Verbindungen besteht, die die gleiche Art eines nichtzentrosymmetrischen organischen Einkristalls bilden.

**11.** Mehrschichtige Struktur organischer nichtlinearer optischer Kristalle nach Anspruch 1, wobei zumindest eine Schicht der Anzahl der nichtzentrosymmetrischen organischen Einkristallschichten eine isomorph gemischte Einkristallschicht ist, die im wesentlichen aus einer Anzahl von Verbindungen, die die gleiche Art eines nichtzentrosymmetrischen organischen Einkristalls bilden, wobei diese Verbindungen aus der Gruppe ausgewählt sind, die aus 4'-Nitrobenzyliden-3-alkanoylamino-4-methoxyanilin und 4'-Nitrobenzyliden -3- halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**12.** Mehrschichtige Struktur organischer nichtlinearer optischer Kristalle nach Anspruch 1, wobei zumindest eine Schicht der zumindest zwei nichtzentrosymmetrischen organischen Einkristallschichten, die in optischen Kontakt zueinander stehen, eine isomorph gemischte Einkristallschicht ist, die im wesentlichen aus einer Anzahl von Verbindungen, die die gleiche Art eines nichtzentrosymmetrischen organischen Einkristalls bilden, wobei diese Verbindungen aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**13.** Mehrschichtige Struktur organischer nichtlinearer optischer Kristalle nach Anspruch 1, wobei zumindest eine nichtzentrosymmetrische organische Einkristallschicht mit optisch glatter Oberfläche eine isomorph gemischte Einkristallschicht ist, die im wesentlichen aus einer Anzahl von Verbindungen, die die gleiche Art eines nichtzentrosymmetrischen organischen Einkristalls bilden, wobei die Verbindungen aus der Gruppe ausgewählt sind, die aus 4'-Nitrobenzyliden-3-alkanoylamino-4-methoxyanilin und 4'-Nitrobenzyliden-3- halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**14.** Mehrschichtige Struktur organischer nichtlinearer optischer Kristalle nach Anspruch 1, wobei zumindest eine Schicht aus der Anzahl der nichtzentrosymmetrischen organischen Einkristallschichten eine isomorph gemischte nichtzentrosymmetrische organische Einkristallschicht mit einem Gradienten des Brechungsindex ist.

**15.** Mehrschichtige Struktur organischer nichtlinearer optischer Kristalle nach Anspruch 1, wobei zumindeste eine Schicht der Anzahl der nichtzentrosymmetrischen organischen Einkristallschichten eine isomorph gemischte nichtzentrosymmetrische organische Einkristallschicht mit einem Gradienten des Brechungsindex ist, wobei diese Schicht im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**16.** Mehrschichtige Struktur organischer nichtlinearer optischer Kristalle nach Anspruch 1, die zumindest eine gemusterte nichtzentrosymmetrische organische Einkristallschicht aufweist.

**17.** Mehrschichtige Struktur organischer nichtlinearer optischer Kristalle nach Anspruch 16, wobei die zumindest eine gemusterte nichtzentrosymmetrische organische Einkristallschicht eine der zumindest zwei nichtzentrosymmetrischen organischen Einkristallschichten ist, die in optischem Kontakt zueinander stehen.

**18.** Mehrschichtige Struktur organischer nichtlinearer optischer Kristalle nach Anspruch 16, wobei die zumindest eine gemusterte nichtzentrosymmetrische organische Einkristallschicht die nichtzentrosymmetrische organische Einkristallschicht mit optisch glatter Kristalloberfläche ist.

**19.** Mehrschichtige Struktur organischer nichtlinearer optischer Kristalle nach Anspruch 16, wobei die zumindest eine gemusterte nichtzentrosymmetrische organische Einkristallschicht im wesentlichen aus einer Verbindung, die aus der Gruppe ausgewählt ist, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**20.** Mehrschichtige Struktur organischer nichtlinearer optischer Kristalle nach Anspruch 16, wobei die zumindest eine gemusterte nichtzentrosymmetrische organische Einkristallschicht eine isomorph gemischte Einkristallschicht ist, die im wesentlichen aus einer Anzahl von Verbindungen besteht, die nichtzentrosymmetrische organische Einkristalle der gleichen Symmetrieart bilden.

**21.** Mehrschichtige Struktur organischer nichtlinearer optischer Kristalle nach Anspruch 16, wobei die zumindest eine gemusterte nichtzentrosymmetrische organische Einkristallschicht eine isomorph gemischte nichtzentrosymmetrische organische Einkristallschicht ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**22.** Mehrschichtige Struktur organischer nichtlinearer optischer Kristalle nach Anspruch 16, wobei die zumindest eine gemusterte nichtzentrosymmetrische organische Einkristallschicht eine isomorphe nichtzentrosymmetrische organische Einkristallschicht mit einem Gradienten des Brechungsindex ist.

**23.** Mehrschichtige Struktur organischer nichtlinearer optischer Kristalle nach Anspruch 16, wobei die zumindest eine gemusterte nichtzentrosymmetrische organische Einkristallschicht eine isomorphe nichtzentrosymmetrische organische Einkristallschicht mit einem Gradienten des Brechungsindex ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden -3- halogenalkanoylamino-4-methoxyanilin besteht, die durch die in Anspruch 5 definierte Formel dargestellt werden, und Verbindungen besteht, die die gleichen wie diese Verbindungen sind, außer daß zumindest ein Teil der Wasserstoffatome durch Deuterium substituiert ist.

**24.** Verfahren zur Herstellung einer mehrschichtigen Struktur organischer nichtlinearer optischer Kristalle, das den Schritt der Bildung einer nichtzentrosymmetrischen organischen Einkristallschicht auf einer optisch glatten Kristalloberfläche einer willkürlichen nichtzentrosymmetrischen organischen Einkristallschicht, so daß die Schichten in optischen Kontakt zueinander stehen, wobei die entstehende nichtzentrosymmetrische organische Einkristallschicht einen Brechungsindex aufweist, der sich von dem der willkürlichen nichtzentrosymmetrischen organischen Einkristallschicht mit optisch glatter Kristalloberfläche unterschiedet; und das aufeinanderfolgende Bilden nichtzentrosymmetrischer organischer Einkristallschichten bis zur $(m + 1)$ten Schicht umfaßt, wobei m eine willkürliche natürliche Zahl darstellt, so daß der Brechungsindex der $(m + 1)$ten Schicht von dem der m-ten verschieden ist.

**25.** Verfahren zur Herstellung eines mehrschichtigen organischen nichtlinearen optischen Kristalls nach Anspruch 24, wobei die nichtzentrosymmetrische organische Einkristallschicht mit optisch glatter Kristalloberfläche und die darauf ausgebildete nichtzentrosymmetrische organische Einkristallschicht mindestens ein Paar Hauptachsen des Brechungsindex aufweisen, die im wesentlichen übereinstimmen.

**26.** Verfahren zur Herstellung eines mehrschichtigen organischen nichtlinearen optischen Kristalls nach Anspruch 24, wobei die nichtzentrosymmetrische organische Einkristallschicht mit optisch glatter Kristalloberfläche mindestens eine Hauptachse des Brechungsindex aufweist, die zur Kristalloberfläche im wesentlichen senkrecht ist.

**27.** Verfahren zur Herstellung eines mehrschichtigen organischen nichtlinearen optischen Kristalls nach Anspruch 24, wobei die Verbindung, die die nichtzentrosymmetrische organische Einkristallschicht mit optisch glatter Kristalloberfläche bildet, und die Verbindung, die die nichtzentrosymmetrische organische Einkristallschicht bildet, die auf der optisch glatten Kristalloberfläche ausgebildet ist, die gleiche Art eines nichtzentrosymmetrischen organischen Einkristalls erzeugen.

**28.** Verfahren zur Herstellung eines mehrschichtigen organischen nichtlinearen optischen Kristalls nach Anspruch 24, wobei die Verbindung, die die nichtzentrosymmetrische organische Einkristallschicht mit optisch glatter Oberfläche

bildet, und die Verbindung, die die nichtzentrosymmetrische organische Einkristallschicht bildet, die auf der optisch glatten Kristalloberfläche ausgebildet ist, aus der Gruppe ausgewählt sind, die aus 4'-Nitrobenzyliden-3-alkanoylamino-4-methoxyanilin und 4'-Nitrobenzyliden -3- halogenalkanoylamino-4-methoxyanilin besteht, die durch die Formel:

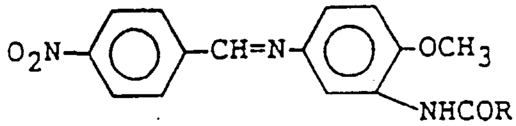

A

dargestellt werden, worin R eine Alkyl- oder Halogenalkylgruppe mit nicht mehr als 2 Kohlenstoffatomen darstellt, und Verbindungen besteht, die die gleichen wie diese Verbindungen sind, außer daß zumindest ein Teil der Wasserstoffatome durch Deuterium substituiert ist.

**29.** Verfahren zur Herstellung eines mehrschichtigen organischen nichtlinearen optischen Kristalls nach Anspruch 24, wobei zumindest eine Schicht der nichtzentrosymmetrischen organischen Einkristallschicht mit optisch glatter Kristalloberfläche und der nichtzentrosymmetrischen organischen Einkristallschicht, die auf der optisch glatten Kristalloberfläche ausgebildet ist, eine isomorph gemischte Einkristallschicht ist, die im wesentlichen aus einer Anzahl von Verbindungen besteht, die die gleiche Art eines nichtzentrosymmetrischen organischen Einkristalls erzeugen.

**30.** Verfahren zur Herstellung eines mehrschichtigen organischen nichtlinearen optischen Kristalls nach Anspruch 24, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die auf der optisch glatten Kristalloberfläche ausgebildet ist, eine isomorph gemischte Einkristallschicht ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**31.** Verfahren zur Herstellung eines mehrschichtigen organischen nichtlinearen optischen Kristalls nach Anspruch 24, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die auf der optisch glatten Kristalloberfläche ausgebildet ist, eine isomorph gemischte Einkristallschicht mit einem Gradienten des Brechungsindex ist.

**32.** Verfahren zur Herstellung eines mehrschichtigen organischen nichtlinearen optischen Kristalls nach Anspruch 24, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die auf der optisch glatten Kristalloberfläche ausgebildet ist, eine isomorph gemischte Einkristallschicht mit einem Gradienten des Brechungsindex ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**33.** Verfahren zur Herstellung eines mehrschichtigen organischen nichtlinearen optischen Kristalls nach Anspruch 24, wobei die Bildung der zumindest einen nichtzentrosymmetrischen organischen Einkristallschicht durch Kristallzüchtung erfolgt.

**34.** Verfahren zur Herstellung eines mehrschichtigen organischen nichtlinearen optischen Kristalls nach Anspruch 33, wobei die Kristallzüchtung durch ein Verfahren erfolgt, bei dem die Dicke des Kristalls während der Kristallzüchtung überwacht wird.

**35.** Verfahren zur Herstellung eines mehrschichtigen organischen nichtlinearen optischen Kristalls nach Anspruch 33, wobei die Kristallzüchtung durch ein Dampfphasen-Verfahren erfolgt.

**36.** Verfahren zur Herstellung eines mehrschichtigen organischen nichtlinearen optischen Kristalls nach Anspruch 33, wobei die Kristallzüchtung durch ein Lösungsverfahren erfolgt.

**37.** Verfahren zur Herstellung eines mehrschichtigen organischen nichtlinearen optischen Kristalls nach Anspruch 33, wobei die Kristallzüchtung durch ein Verfahren in der Schmelze erfolgt.

**38.** Verfahren zur Herstellung eines mehrschichtigen organischen nichtlinearen optischen Kristalls nach Anspruch 33, wobei die Verbindung, die die willkürliche nichtzentrosymmetrische organische Einkristallschicht mit optisch glatter Kristalloberfläche bildet, und die Verbindung, die die nichtzentrosymmetrische organische Einkristallschicht bildet, die durch Kristallzüchtung auf der optisch glatten Kristalloberfläche ausgebildet ist, die gleiche Art eines nichtzentrosymmetrischen organischen Einkristalls erzeugen.

**39.** Verfahren zur Herstellung eines mehrschichtigen organischen nichtlinearen optischen Kristalls nach Anspruch 33, wobei die Verbindung, die die willkürliche nichtzentrosymmetrische organische Einkristallschicht mit optisch glatter Kristalloberfläche bildet, und die Verbindung, die die nichtzentrosymmetrische organische Einkristallschicht bildet, die durch Kristallzüchtung auf der optisch glatten Kristalloberfläche ausgebildet ist, aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**40.** Verfahren zur Herstellung eines mehrschichtigen organischen nichtlinearen optischen Kristalls nach Anspruch 33, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht ist, die im wesentlichen aus einer Anzahl von Verbindungen besteht, die die gleiche Art eines nichtzentrosymmetrischen organischen Einkristalls erzeugen.

**41.** Verfahren zur Herstellung eines mehrschichtigen organischen nichtlinearen optischen Kristalls nach Anspruch 33, wobei die zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**42.** Verfahren zur Herstellung eines mehrschichtigen organischen nichtlinearen optischen Kristalls nach Anspruch 33, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht ist, die einen Gradienten des Brechungsindex aufweist.

**43.** Verfahren zur Herstellung eines mehrschichtigen organischen nichtlinearen optischen Kristalls nach Anspruch 33, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht mit einem Gradienten des Brechungsindex ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**44.** Verfahren zur Herstellung eines mehrschichtigen organischen nichtlinearen optischen Kristalls nach Anspruch 24, wobei die Bildung der zumindest einen nichtzentrosymmetrischen organischen Einkristallschicht nach Bildung einer Mustermaske auf der optisch glatten Kristalloberfläche der willkürlichen nichtzentrosymmetrischen organischen Einkristallschicht durch Kristallzüchtung erfolgt.

**45.** Verfahren zur Herstellung eines mehrschichtigen organischen nichtlinearen optischen Kristalls mit einer gemusterten Schicht nach Anspruch 44, wobei die Mustermaske durch Lithographie mit aktiven elektromagnetischen

Wellen gebildet wird.

**46.** Verfahren zur Herstellung eines mehrschichtigen organischen nichtlinearen optischen Kristalls mit einer gemusterten Schicht nach Anspruch 44, wobei die Mustermaske eine Photoresistschicht ist.

**47.** Verfahren zur Herstellung eines mehrschichtigen organischen nichtlinearen optischen Kristalls nach Anspruch 44, wobei die Kristallzüchtung durch ein Verfahren erfolgt, bei dem die Dicke des Kristalls während der Kristallzüchtung überwacht wird.

**48.** Verfahren zur Herstellung eines mehrschichtigen organischen nichtlinearen optischen Kristalls nach Anspruch 44, wobei die Kristallzüchtung durch ein Dampfphasen-Verfahren erfolgt.

**49.** Verfahren zur Herstellung eines mehrschichtigen organischen nichtlinearen optischen Kristalls nach Anspruch 44, wobei die Kristallzüchtung durch ein Lösungsverfahren erfolgt.

**50.** Verfahren zur Herstellung eines mehrschichtigen organischen nichtlinearen optischen Kristalls nach Anspruch 44, wobei die Kristallzüchtung durch ein Schmelzverfahren erfolgt.

**51.** Verfahren zur Herstellung eines mehrschichtigen organischen nichtlinearen optischen Kristalls nach Anspruch 44, wobei die Verbindung, die die willkürliche nichtzentrosymmetrische organische Einkristallschicht mit optisch glatter Kristalloberfläche bildet, und die Verbindung, die die nichtzentrosymmetrische organische Einkristallschicht bildet, die durch Kristallzüchtung auf der optisch glatten Metalloberfläche ausgebildet ist, die gleiche Art eines nichtzentrosymmetrischen organischen Einkristalls erzeugen.

**52.** Verfahren zur Herstellung eines mehrschichtigen organischen nichtlinearen optischen Kristalls nach Anspruch 44, wobei die Verbindung, die die willkürliche nichtzentrosymmetrische organische Einkristallschicht mit optisch glatter Kristalloberfläche bildet, und die Verbindung, die die nichtzentrosymmetrische organische Einkristallschicht bildet, die durch Kristallzüchtung auf der optisch glatten Kristalloberfläche ausgebildet ist, aus der Gruppe ausgewählt sind, die aus 4'-Nitrobenzyliden-3-alkanoylamino-4-methoxyanilin und 4'-Nitrobenzyliden -3- halogenalkanoylamino-4-methoxyanilin, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**53.** Verfahren zur Herstellung eines mehrschichtigen organischen nichtlinearen optischen Kristalls nach Anspruch 44, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht ist,die im wesentlichen aus einer Anzahl von Verbindungen besteht, die die gleiche Art eines nichtzentrosymmetrischen organischen Einkristalls erzeugen.

**54.** Verfahren zur Herstellung eines mehrschichtigen organischen nichtlinearen optischen Kristalls nach Anspruch 44, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogen alkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**55.** Verfahren zur Herstellung eines mehrschichtigen organischen nichtlinearen optischen Kristalls nach Anspruch 44, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht mit einem Gradienten des Brechungsindex ist.

**56.** Verfahren zur Herstellung eines mehrschichtigen organischen nichtlinearen optischen Kristalls nach Anspruch 44, wobei zumindest eine Schicht der willkürlichen nichtzentrosymmetrischen organischen Einkristallschicht mit optisch glatter Kristalloberfläche und der nichtzentrosymmetrischen organischen Einkristallschicht, die durch Kristallzüchtung auf der optisch glatten Kristalloberfläche ausgebildet ist, eine isomorph gemischte nichtzentrosymmetrische organische Einkristallschicht mit einem Gradienten des Brechungsindex ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogen,alkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**57.** Verfahren zur Herstellung eines mehrschichtigen organischen nichtlinearen optischen Kristalls nach Anspruch 24, das den Schritt des Ätzens einer der nichtzentrosymmetrischen organischen Einkristallschichten umfaßt, nachdem darauf eine Mustermaske ausgebildet worden ist.

**58.** Verfahren zur Herstellung eines mehrschichtigen organischen nichtlinearen optischen Kristalls nach Anspruch 57, wobei die Mustermaske durch Lithographie mit aktiven elektromagnetischen Wellen gebildet wird.

**59.** Verfahren zur Herstellung eines mehrschichtigen organischen nichtlinearen optischen Kristalls nach Anspruch 57, wobei die Mustermaske eine Photoresistschicht ist.

**60.** Verfahren zur Herstellung eines mehrschichtigen organischen nichtlinearen optischen Kristalls nach Anspruch 57, wobei das Ätzen ein Naßätzverfahren mit einem Lösungsmittel ist, das die Einkristallschicht löst.

**61.** Verfahren zur Herstellung eines mehrschichtigen organischen nichtlinearen optischen Kristalls nach Anspruch 57, wobei das Ätzen ein Trockenätzverfahren ist, durch das die zu ätzende nichtzentrosymmetrische organische Einkristallschicht als flüchtiges Gas entfernt wird.

**62.** Verfahren zur Herstellung eines mehrschichtigen organischen nichtlinearen optischen Kristalls nach Anspruch 61, wobei das Ätzen reaktives Ionenätzen mit einem gemischten Gas ist, das einen halogenierten Kohlenwasserstoff und/oder halogenierten Kohlenstoff und Sauerstoff enthält.

**63.** Verfahren zur Herstellung eines mehrschichtigen organischen nichtlinearen optischen Kristalls nach Anspruch 57, wobei die willkürliche nichtzentrosymmetrische organische Einkristallschicht mit optisch glatter Kristalloberfläche und die zu ätzende nichtzentrosymmetrische organische Einkristallschicht die gleiche Art eines nichtzentrosymmetrischen organischen Einkristalls erzeugen.

**64.** Verfahren zur Herstellung eines mehrschichtigen organischen nichtlinearen optischen Kristalls nach Anspruch 57, wobei die Verbindung, die die willkürliche nichtzentrosymmetrische organische Einkristallschicht mit optisch glatter Kristalloberfläche bildet, und die Verbindung, die die zu ätzende nichtzentrosymmetrische organische Einkristallschicht bildet, aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**65.** Verfahren zur Herstellung eines mehrschichtigen organischen nichtlinearen optischen Kristalls nach Anspruch 57, wobei die Verbindung, die die zu ätzende nichtzentrosymmetrische organische Einkristallschicht bildet, eine isomorph gemischte nichtzentrosymmetrische organische Einkristallschicht ist, die im wesentlichen aus einer Anzahl von Verbindungen besteht, die die gleiche Art der nichtzentrosymmetrischen organischen Einkristallschicht erzeugen wie die willkürliche nichtzentrosymmetrische organische Einkristallschicht mit optisch glatter Kristalloberfläche.

**66.** Verfahren zur Herstellung eines mehrschichtigen organischen nichtlinearen optischen Kristalls nach Anspruch 57, wobei die Verbindung, die die zu ätzende nichtzentrosymmetrische organische Einkristallschicht bildet, eine isomorphe nichtzentrosymmetrische organische Einkristallschicht ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**67.** Verfahren zur Herstellung eines mehrschichtigen organischen nichtlinearen optischen Kristalls nach Anspruch 57,

wobei die zu ätzende nichtzentrosymmetrische organische Einkristallschicht eine isomorph gemischte nichtzentrosymmetrische organische Einkristallschicht ist, die einen Gradienten des Brechungsindex aufweist.

**68.** Verfahren zur Herstellung eines mehrschichtigen organinischen nichtlinearen optischen Kristalls nach Anspruch 57, wobei die zu ätzende nichtzentrosymmetrische organische Einkristallschicht eine isomorph gemischte nichtzentrosymmetrische organische Einkristallschicht mit einem Gradienten des Brechungsindex ist, die im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**69.** Verfahren zur Herstellung eines mehrschichtigen organischen nichtlinearen optischen Kristalls nach Anspruch 24, wobei die Bildung der zumindest einen nichtzentrosymmetrischen organischen Einkristallschicht durch gleichzeitige Kristallzüchtung einer Anzahl von Verbindungen erfolgt, die einen isomorph gemischten Kristall bilden.

**70.** Verfahren zur Herstellung eines mehrschichtigen organischen nichtlinearen optischen Kristalls nach Anspruch 69, wobei die Anzahl der Verbindungen, die den isomorph gemischten Kristall bilden, aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**71.** Verfahren zur Herstellung eines mehrschichtigen organischen nichtlinearen optischen Kristalls nach Anspruch 69, wobei die gleichzeitige Kristallzüchtung durch ein Verfahren erfolgt, bei dem die Dicke des Kristalls während der Kristallzüchtung überwacht wird.

**72.** Verfahren zur Herstellung eines mehrschichtigen organischen nichtlinearen optischen Kristalls nach Anspruch 69, wobei die gleichzeitige Kristallzüchtung durch ein Dampfphasen-Verfahren erfolgt.

**73.** Verfahren zur Herstellung eines mehrschichtigen organischen nichtlinearen optischen Kristalls nach Anspruch 69, wobei die Anzahl der Verbindungen, die für die gleichzeitige Kristallzüchtung verwendet werden, einzeln aus einer einzelnen Verdampfungsquelle verdampft werden.

**74.** Verfahren zur Herstellung eines mehrschichtigen organischen nichtlinearen optischen Kristalls nach Anspruch 73, wobei die Abscheidungsraten der Anzahl der Verbindungen, die einzeln aus der einzelnen Verdampfungsquelle verdampft werden, einzeln gesteuert werden.

**75.** Verfahren zur Herstellung eines mehrschichtigen organischen nichtlinearen optischen Kristalls nach Anspruch 72, wobei zumindest zwei Verbindungen aus der Anzahl der Verbindungen, die für die gleichzeitige Kristallzüchtung verwendet werden, aus der gleichen Verdampfungsquelle verdampft werden.

**76.** Verfahren zur Herstellung eines mehrschichtigen organischen nichtlinearen optischen Kristalls nach Anspruch 69, wobei die Bildung der zumindest einen isomorph gemischten Einkristallschicht durch gleichzeitige Kristallzüchtung der Anzahl der Verbindungen vorgenommen wird, nachdem auf der Kristalloberfläche, auf der die Einkristallschicht wächst, eine Mustermaske ausgebildet worden ist.

**77.** Verfahren zur Herstellung eines mehrschichtigen organischen nichtlinearen optischen Kristalls nach Anspruch 76, wobei die Mustermaske durch Lithographie mit aktiven elektromagnetischen Wellen gebildet wird.

**78.** Verfahren zur Herstellung eines mehrschichtigen organischen nichtlinearen optischen Kristalls nach Anspruch 77, wobei die Mustermaske eine Photoresistschicht ist.

**79.** Verfahren zur Herstellung eines mehrschichtigen organischen nichtlinearen optischen Kristalls nach Anspruch 69, wobei die gleichzeitige Kristallzüchtung durch ein Lösungsverfahren erfolgt.

**80.** Verfahren zur Herstellung eines mehrschichtigen organischen nichtlinearen optischen Kristalls nach Anspruch 69, wobei die gleichzeitige Kristallzüchtung durch ein Schmelzverfahren erfolgt.

**81.** Nichtlineares optisches Bauteil zweiter Ordnung, das einen mehrschichtigen organischen nichtlinearen optischen Kristall nach einem der Ansprüche 1 bis 23 umfaßt.

**82.** Nichtlineares optisches Bauteil zweiter Ordnung nach Anspruch 81, wobei zumindest eine Schicht der zumindest zwei nichtzentrosymmetrischen organischen Einkristallschichten, die in optischem Kontakt zueinander stehen, eine isomorph gemischte nichtzentrosymmetrische organische Einkristallschicht mit einem Gradienten des Brechungsindex ist.

**83.** Nichtlineares optisches Bauteil zweiter Ordnung nach Anspruch 81, wobei zumindest eine Schicht der zumindest einen nichtzentrosymmetrischen organischen Einkristallschicht mit optisch glatter Kristalloberfläche eine isomorph gemischte nichtzentrosymmetrische organische Einkristallschicht mit einem Gradienten des Brechungsindex ist.

**84.** Nichtlineares optisches Bauteil zweiter Ordnung nach Anspruch 81, wobei zumindest eine Schicht der zumindest zwei nichtzentrosymmetrischen organischen Einkristallschichten, die in optischem Kontakt zueinander stehen, eine isomorph gemischte nichtzentrosymmetrische organische Einkristallschicht mit einem Gradienten des Brechungsindex ist, wobei diese Schicht im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**85.** Nichtlineares optisches Bauteil zweiter Ordnung nach Anspruch 81, wobei zumindest eine Schicht der zumindest einen nichtzentrosymmetrischen organischen Einkristallschicht mit optisch glatter Kristalloberfläche eine isomorph gemischte nichtzentrosymmetrische organische Einkristallschicht mit einem Gradienten des Brechungsindex ist, wobei diese Schicht im wesentlichen aus einer Anzahl von Verbindungen, die aus der Gruppe ausgewählt sind, die aus 4'-Nitrobenzyliden-3-alkanoylamino-4-methoxyanilin und 4'-Nitrobenzyliden-3-halogenalkanoylamino-4-methoxyanilin besteht, die durch die in Anspruch 28 definierte Formel dargestellt werden, und Verbindungen besteht, die die gleichen wie diese Verbindungen sind, außer daß zumindest ein Teil der Wasserstoffatome durch Deuterium substituiert ist.

**86.** Nichtlineares optisches Bauteil zweiter Ordnung nach Anspruch 81, wobei die optisch glatte Kristalloberfläche der zumindest einen nichtzentrosymmetrischen organischen Einkristallschicht der nichtzentrosymmetrischen organischen Einkristallschichten, die den mehrschichtigen organischen nichtlinearen optischen Kristall bilden, eine Oberfläche für das Auftreffen oder die Ausbreitung von Licht ist, das die Hauptkomponente der optischen Welle mit der Polsarisation in der ac-Ebene von mindestens einer Einkristallschicht hat.

**87.** Nichtlineares optisches Bauteil zweiter Ordnung nach Anspruch 81, wobei die optisch glatte Kristalloberfläche der zumindest einen nichtzentrosymmetrischen organischen Einkristallschicht der nichtzentrosymmetrischen organischen Einkristallschichten, die den mehrschichtigen organischen nichtlinearen optischen Kristall bilden, eine Oberfläche für das Auftreffen oder die Ausbreitung von Licht ist, das die Hauptkomponente der optischen Welle mit einer Polsarisation entlang der Achse der Absorption in der längsten Wellenlänge in der ac-Ebene von mindestens einer Einkristallschicht hat.

**88.** Nichtlineares optisches Bauteil zweiter Ordnung nach Anspruch 81, wobei die optisch glatte Kristalloberfläche der zumindest einen nichtzentrosymmetrischen organischen Einkristallschicht der nichtzentrosymmetrischen organischen Einkristallschichten, die den mehrschichtigen organischen nichtlinearen optischen Kristall bilden, die Oberfläche zum Auftreffen oder Ausbreiten von Licht ist, das die Hauptkomponente der optischen Welle mit einer Polsarisation entlang der Richtung, die um 45° zur Achse der Absorption in der längsten Wellenlänge verschoben ist, in der ac-Ebene von mindestens einer Einkristallschicht hat.

**89.** Nichtlineares optisches Bauteil zweiter Ordnung nach Anspruch 81, das zumindest ein Paar Elektroden zum Anlegen eines elektrischen Feldes aufweist, das eine starke Komponente in der ac-Ebene von mindestens einer nichtzentrosymmetrischen organischen Einkristallschicht hat, die den mehrschichtigen organischen nichtlinearen optischen Kristall bildet.

**90.** Nichtlineares optisches Bauteil zweiter Ordnung nach Anspruch 81, das mindestens ein Paar Elektroden zum Anlegen eines elektrischen Feldes aufweist, das eine starke Komponente entlang der Achse der Absorption in der längsten Wellenlänge in der ac-Ebene von mindestens einer Einkristallschicht aufweist.

**91.** Nichtlineares optisches Bauteil zweiter Ordnung nach Anspruch 81, das mindestens ein Paar Elektroden aufweist, die auf der Kristalloberfläche ausgebildet sind, die zur ac-Ebene von zumindest einer nichtzentrosymmetrischen organischen Einkristallschicht im wesentlichen parallel ist, die den mehrschichtigen organischen nichtlinearen optischen Kristall bildet.

**92.** Nichtlineares optisches Bauteil zweiter Ordnung nach Anspruch 81, das mindestens ein Paar Elektroden aufweist, die auf der Kristalloberfläche ausgebildet sind, die zu der Achse der Absorption in der längsten Wellenlänge in der ac-Ebene von zumindest einer Einkristallschicht im wesentlichen senkrecht ist, die den mehrschichtigen organischen nichtlinearen optischen Kristall bildet.

**93.** Nichtlineares optisches Bauteil zweiter Ordnung nach Anspruch 81, das zumindest ein Paar Elektroden aufweist, die auf zwei Kristalloberflächen ausgebildet sind, die zur Achse der Absorption in der längsten Wellenlänge in der ac-Ebene von zumindest einer Einkristallschicht im wesentlichen senkrecht sind, die den mehrschichtigen organischen nichtlinearen optischen Kristall bildet.

## Revendications

**1.** Structure cristalline non-linéaire organique multicouche comprenant une pluralité de couches monocristallines organiques non-centrosymétriques, lesdites couches monocristallines satisfaisant les trois exigences suivantes :

i) deux couches au moins desdites couches monocristallines se contactent optiquement l'une l'autre ;
ii) deux couches au moins desdites couches monocristallines se contactant optiquement l'une l'autre possèdent des indices de réfraction différents ; et
iii) une couche au moins desdites couches monocristallines comporte une surface cristalline optiquement régulière.

**2.** Structure cristalline optique non-linéaire organique multicouche selon la revendication 1, dans laquelle lesdites au moins deux couches monocristallines organiques non-centrosymétriques se contactant optiquement l'une l'autre ont au moins une paire d'axes principaux d'indice de réfraction qui coïncident sensiblement .

**3.** Structure cristalline optique non-linéaire organique multicouche selon la revendication 1, dans laquelle ladite au moins une couche monocristalline organique non-centrosymétrique comportant une surface cristalline optiquement régulière à au moins un axe principal d'indice de réfraction qui est sensiblement perpendiculaire à ladite surface cristalline.

**4.** Structure cristalline optique non-linéaire organique multicouche selon la revendication 1, dans laquelle ladite au moins une couche monocristalline organique non-centrosymétrique comportant une surface cristalline optiquement régulière est l'une desdites au moins deux couches monocristallines organiques non-centrosymétriques se contactant l'une l'autre.

**5.** Structure cristalline optique non-linéaire organique multicouche selon la revendication 1, dans laquelle une couche au moins de ladite pluralité de couches monocristallines organiques non-centrosymétriques est essentiellement constituée d'un composé choisi dans le groupe constitué de la 4'-nitrobenzilidène-3-acylamino-4-méthoxyaniline et la 4'-nitrobenzilidène-3-halogénoacylamino-4-méthoxianiline qui sont représentés par la formule :

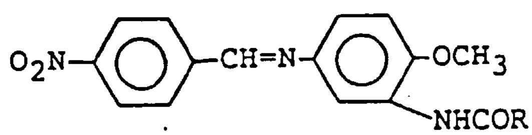

dans laquelle R représente un groupe alkyle ou halogénoalkyle ne comportant pas plus de deux atomes de carbone,

et des composés qui sont les mêmes que lesdits composés à l'exception qu'une partie au moins des atomes d'hydrogène est substituée par des atomes de deutérium.

**6.** Structure cristalline optique non-linéaire organique multicouche selon la revendication 1, dans laquelle une couche au moins desdites au moins deux couches monocristallines organiques non-centrosymétriques se contactant optiquement l'une l'autre est essentiellement constituée d'un composé dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et de composés qui sont les mêmes que lesdits composés à l'exception qu'une partie au moins des atomes d'hydrogène est substituée par des atomes de deutérium.

**7.** Structure cristalline optique non-linéaire organique multicouche selon la revendication 1, dans laquelle ladite au moins une couche monocristalline organique non-centrosymétrique comportant une surface cristalline optiquement régulière est essentiellement constituée d'un composé choisi dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins des atomes d'hydrogène est substituée par des atomes de deutérium.

**8.** Structure cristalline optique non-linéaire organique multicouche selon la revendication 1, dans laquelle une couche au moins de ladite pluralité de couches monocristallines organiques non-centrosymétriques est une couche monocristalline mixte isomorphe essentiellement constituée d'une pluralité de composés qui forment le même genre de monocristal organique non-centrosymétrique.

**9.** Structure cristalline optique non-linéaire organique multicouche selon la revendication 1, dans laquelle une couche au moins desdites au moins deux couches monocristallines organiques non-centrosymétriques se contactant optiquement l'une l'autre est une couche monocristalline mixte isomorphe essentiellement constituée d'une pluralité de composés qui forment le même genre de monocristal organique non-centrosymétrique.

**10.** Structure cristalline optique non-linéaire organique multicouche selon la revendication 1, dans laquelle ladite au moins une couche monocristalline organique non-centrosymétrique comportant une surface cristalline optiquement régulière est une couche monocristalline mixte isomorphe essentiellement constituée d'une pluralité de composés qui forment le même genre de monocristal organique non-centrosymétrique.

**11.** Structure cristalline optique non-linéaire organique multicouche selon la revendication 1, dans laquelle une couche au moins de ladite pluralité de couches monocristallines organiques non-centrosymétriques est une couche monocristalline mixte isomorphe essentiellement constituée d'une pluralité de composés qui forment le même genre de monocristal organique non-centrosymétrique, composés qui sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins d'atomes d'hydrogène est substituée par des atomes de deutérium.

**12.** Structure cristalline optique non-linéaire organique multicouche selon la revendication 1, dans laquelle une couche au moins desdites au moins deux couches monocristallines organiques non-centrosymétriques se contactant optiquement l'une l'autre est une couche monocristalline mixte isomorphe essentiellement constituée d'une pluralité de composés qui forment le même genre de monocristal organique non-centrosymétrique, composés qui sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie dans la revendication 5 et de composés qui sont les mêmes que lesdits composés à l'exception qu'une partie au moins des atomes d'hydrogène est substituée par des atomes de deutérium.

**13.** Structure cristalline optique non-linéaire organique multicouche selon la revendication 1, dans laquelle ladite au moins une couche monocristalline organique non-centrosymétrique comportant une surface optiquement régulière est une couche monocristalline mixte isomorphe essentiellement constituée d'une pluralité de composés qui forment le même genre de monocristal organique non-centrosymétrique, composés qui sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie dans la revendication 5 et de composés qui sont les mêmes que lesdits composés à l'exception qu'une partie au moins des atomes d'hydrogène est substituée par des atomes de deutérium.

**14.** Structure cristalline optique non-linéaire organique multicouche selon la revendication 1, dans laquelle une couche au moins de ladite pluralité de couches monocristallines organiques non-centrosymétriques est une couche monocristalline organique non-centrosymétrique mixte isomorphe comportant un gradient d'indice de réfraction.

**15.** Structure cristalline optique non-linéaire organique multicouche selon la revendication 1, dans laquelle une couche au moins de ladite pluralité de couches monocristallines organiques non-centrosymétriques est une couche monocristalline organique non-centrosymétrique mixte isomorphe ayant un gradient d'indice de réfraction, couche qui est essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et de composés qui sont les mêmes que lesdits composés à l'exception qu'une partie au moins des atomes d'hydrogène est substituée par des atomes de deutérium.

**16.** Structure cristalline optique non-linéaire organique multicouche selon la revendication 1, qui comporte au moins une couche monocristalline organique non-centrosymétrique gravée en motif par masque.

**17.** Structure cristalline optique non-linéaire organique multicouche selon la revendication 16, dans laquelle au moins une couche monocristalline organique non-centrosymétrique gravée en motif par masque est l'une desdites au moins deux couches monocristallines organiques non-centrosymétriques se contactant l'une l'autre.

**18.** Structure cristalline optique non-linéaire organique multicouche selon la revendication 16, dans laquelle au moins une couche monocristalline organique non-centrosymétrique gravée en motif par masque est ladite couche monocristalline organique non-centrosymétrique comportant une surface cristalline optiquement régulière.

**19.** Structure cristalline optique non-linéaire organique multicouche selon la revendication 16, dans laquelle ladite au moins une couche monocristalline organique non-centrosymétrique gravée en motif par masque est essentiellement constituée d'un composé choisi dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et de composés qui sont les mêmes que lesdits composés à l'exception qu'une partie au moins des atomes d'hydrogène est substituée par des atomes de deutérium.

**20.** Structure cristalline optique non-linéaire organique multicouche selon la revendication 16, dans laquelle ladite au moins une couche monocristalline organique non-centrosymétrique gravée en motif par masque est une couche monocristalline mixte isomorphe essentiellement constituée d'une pluralité de composés qui forment des monocristaux organiques non-centrosymétriques du même genre de symétrie.

**21.** Structure cristalline optique non-linéaire organique multicouche selon la revendication 16, dans laquelle ladite au moins une couche monocristalline organique non-centrosymétrique gravée en motif par masque est une couche monocristalline organique non-centrosymétrique mixte isomorphe essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins des atomes d'hydrogène est substituée par des atomes de deutérium.

**22.** Structure cristalline optique non-linéaire organique multicouche selon la revendication 16, dans laquelle ladite au moins une couche monocristalline organique non-centrosymétrique gravée en motif par masque est une couche monocristalline organique non-centrosymétrique isomorphe ayant un gradient d'indice de réfraction.

**23.** Structure cristalline optique non-linéaire organique multicouche selon la revendication 16, dans laquelle ladite au moins une couche monocristalline organique non-centrosymétrique gravée en motif par masque est une couche monocristalline organique non-centrosymétrique isomorphe ayant un gradient d'indice de réfraction essentiellement constitué d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins des atomes d'hydrogène est substituée par des atomes de deutérium.

**24.** Procédé pour la production d'une structure cristalline optique non-linéaire organique multicouche comprenant l'étape consistant à former une couche monocristalline organique non-centrosymétrique sur une surface cristalline optiquement régulière d'une couche monocristalline organique non-centrosymétrique arbitraire d'une manière telle que lesdites couches se contactent optiquement l'une l'autre, dans laquelle ladite formation d'une couche monocristalline organique non-centrosymétrique présente un indice de réfraction différent de celui de ladite couche monocristalline organique non-centrosymétrique arbitraire comportant la surface cristalline optiquement régulière

et à former séquentiellement des couches monocristallines organiques non-centrosymétriques jusqu'à la $(m+1)^{ième}$ couche, dans laquelle M représente un nombre naturel arbitraire d'une manière telle que l'indice de réfraction de la $(m+1)^{ième}$ couche soit différent de celui de la $m^{ième}$ couche.

**25.** Procédé pour la production d'un cristal optique non-linéaire organique multicouche selon la revendication 24, dans lequel ladite couche monocristalline organique non-centrosymétrique comportant une surface cristalline optiquement régulière et ladite couche monocristalline organique non-centrosymétrique formée sur sa surface comportent au moins une paire d'axes principaux d'indice de réfraction qui coïncident sensiblement.

**26.** Procédé pour la production d'un cristal optique non-linéaire multicouche organique selon la revendication 24, dans lequel ladite couche monocristalline organique non-centrosymétrique comportant une surface cristalline optiquement uniforme a au moins un axe principal d'indice de réfraction qui est sensiblement perpendiculaire à ladite surface cristalline.

**27.** Procédé pour la production d'un cristal optique non-linéaire organique multicouche selon la revendication 24, dans lequel le composé constituant ladite couche monocristalline organique non-centrosymétrique comportant une surface cristalline optiquement régulière et le composé constituant ladite couche monocristalline organique non-centrosymétrique formée sur ladite surface cristalline optiquement régulière forme le même genre de monocristal organique non-centrosymétrique.

**28.** Procédé pour la production d'un cristal optique non-linéaire organique multicouche selon la revendication 24, dans lequel le composé constituant ladite couche monocristalline organique non-centrosymétrique comportant une surface cristalline optiquement régulière et le composé constituant ladite couche monocristalline organique non-centrosymétrique formée sur ladite surface cristalline optiquement régulière sont choisis dans le groupe constitué la 4'-nitrobenzilidène-3-acylamino-4-méthoxyaniline, la 4'-nitrobenzilidène-3-halogénoacylamino-4-méthoxianiline qui sont représentés par la formule :

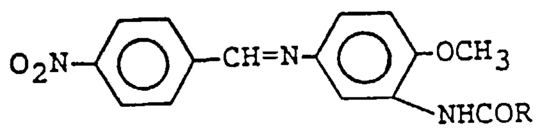

dans laquelle L représente des groupes alkyle ou halogénoalkyle ne comportant pas plus de 2 atomes de carbone et des composés qui sont les mêmes que lesdits composés à l'exception qu'une partie au moins des atomes d'hydrogène est substituée par des atomes de deutérium.

**29.** Procédé pour la production d'un cristal optique non-linéaire organique multicouche selon la revendication 24, dans lequel une couche au moins de ladite couche monocristalline organique non-centrosymétrique comportant une surface cristalline optiquement régulière et de ladite couche monocristalline organique non-centrosymétrique formée sur ladite surface cristalline optiquement régulière est une couche monocristalline mixte isomorphe essentiellement constituée d'une pluralité de composés qui forment le même genre de monocristal organique non-centrosymétrique.

**30.** Procédé pour la production d'un cristal optique non-linéaire organique multicouche selon la revendication 24, dans lequel une couche au moins de ladite couche monocristalline organique non-centrosymétrique arbitraire comportant une surface cristalline optiquement régulière et ladite couche monocristalline organique non-centrosymétrique formée sur ladite surface cristalline optiquement régulière est une couche monocristalline mixte isomorphe essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et de composés qui sont les mêmes que lesdits composés à l'exception qu'une partie au moins des atomes d'hydrogène est substituée par des atomes de deutérium.

**31.** Procédé pour la production d'un cristal optique non-linéaire organique multicouche selon la revendication 24, dans lequel une couche au moins de la couche monocristalline organique non-centrosymétrique arbitraire comportant une surface cristalline optiquement et de ladite couche monocristalline organique non-centrosymétrique formée sur ladite surface cristalline optiquement régulière est une couche monocristalline mixte isomorphe ayant un gradient d'indice de réfraction.

32. Procédé pour la production d'un cristal optique non-linéaire organique multicouche dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière est une couche monocristalline mixte isomorphe ayant un gradient d'indice de réfraction étant essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

33. Procédé pour la production d'un cristal optique non-linéaire organique multicouche selon la revendication 24 dans lequel la formation d'au moins une couche monocristalline organique non-centrosymétrique est réalisée par croissance cristalline.

34. Procédé pour la production d'un cristal optique non-linéaire organique multicouche selon la revendication 33, dans lequel on réalise la croissance cristalline par un procédé dans lequel l'épaisseur du cristal pendant la croissance cristalline est surveillée.

35. Procédé pour la production d'un cristal optique non-linéaire organique multicouche selon la revendication 33, dans lequel ladite croissance cristalline est effectuée par un procédé en phase vapeur.

36. Procédé pour la production d'un cristal optique non-linéaire organique multicouche selon la revendication 33, dans lequel ladite croissance cristalline est effectuée par un procédé de mise en solution.

37. Procédé pour la production d'un cristal optique non-linéaire organique multicouche selon la revendication 33, dans lequel ladite croissance cristalline est effectuée par un procédé de fusion.

38. Procédé pour la production d'un cristal optique non-linéaire organique multicouche selon la revendication 33, dans lequel le composé constituant ladite couche monocristalline organique non-centrosymétrique arbitraire comportant une surface cristalline optiquement régulière et le composé constituant ladite couche monocristalline organique non-centrosymétrique formée sur ladite surface cristalline optiquement régulière par la croissance cristalline forme le même genre de monocristal organique non-centrosymétrique.

39. Procédé pour la production d'un cristal optique non-linéaire organique multicouche selon la revendication 33, dans lequel le composé constituant ladite couche monocristalline organique non-centrosymétrique arbitraire comportant une surface cristalline optiquement régulière et le composé constituant ladite couche monocristalline organique non-centrosymétrique formée sur ladite surface cristalline optiquement régulière par la croissance cristalline sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

40. Procédé pour la production d'un cristal optique non-linéaire organique multicouche selon la revendication 33, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière par la croissance cristalline est une couche monocristalline organique non-centrosymétrique mixte isomorphe essentiellement constituée d'une pluralité de composés qui forment le même genre de monocristal organique non-centrosymétrique.

41. Procédé pour la production d'un cristal optique non-linéaire organique multicouche selon la revendication 33, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**42.** Procédé pour la production d'un cristal optique non-linéaire organique multicouche selon la revendication 33, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe ayant un gradient d'indice de réfraction.

**43.** Procédé pour la production d'un cristal optique non-linéaire organique multicouche selon la revendication 33, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe ayant un gradient d'indice de réfraction est essentiellement constitué d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**44.** Procédé pour la production d'un cristal optique non-linéaire organique multicouche selon la revendication 24 dans lequel la formation d'au moins une couche monocristalline organique non-centrosymétrique est effectuée par croissance cristalline après formation d'un masque de gravure sur ladite surface cristalline optiquement régulière de ladite couche monocristalline organique non-centrosymétrique arbitraire.

**45.** Procédé pour la production d'un cristal optique non-linéaire organique multicouche comportant une couche gravée en motif par masque selon la revendication 44, dans lequel ledit masque de gravure est formé par gravure en utilisant une onde électromagnétique active.

**46.** Procédé pour la production d'un cristal optique non-linéaire organique multicouche comportant une couche gravée en motif par masque selon la revendication 44, dans laquelle ledit masque de gravure est une couche de résine photosensible.

**47.** Procédé pour la production d'un cristal optique non-linéaire organique multicouche selon la revendication 44, dans lequel ladite croissance cristalline est effectuée par un procédé dans lequel l'épaisseur du cristal pendant la croissance cristalline est surveillée.

**48.** Procédé pour la production d'un cristal optique non-linéaire organique multicouche selon la revendication 44, dans lequel ladite croissance cristalline est effectuée par un procédé en phase vapeur.

**49.** Procédé pour la production d'un cristal optique non-linéaire organique multicouche selon la revendication 44, dans lequel ladite croissance cristalline est effectuée par un procédé de mise en solution.

**50.** Procédé pour la production d'un cristal optique non-linéaire organique multicouche selon la revendication 44, dans lequel ladite croissance cristalline est effectuée par un procédé de fusion.

**51.** Procédé pour la production d'un cristal optique non-linéaire organique multicouche selon la revendication 44, dans lequel le composé constituant ladite couche monocristalline organique non-centrosymétrique arbitraire comportant une surface cristalline optiquement régulière et le composé constituant ladite couche monocristalline organique non-centrosymétrique formée sur ladite surface cristalline optiquement régulière par la croissance cristalline forme le même genre de monocristal organique non-centrosymétrique.

**52.** Procédé pour la production d'un cristal optique non-linéaire organique multicouche selon la revendication 44, dans lequel le composé constituant ladite couche monocristalline organique non-centrosymétrique arbitraire comportant une surface cristalline optiquement régulière et le composé constituant ladite couche monocristalline organique non-centrosymétrique formée sur ladite surface cristalline optiquement régulière par la croissance cristalline sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**53.** Procédé pour la production d'un cristal optique non-linéaire organique multicouche selon la revendication 44, dans

lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe essentiellement constituée d'une pluralité de composés qui forment le même genre de monocristal organique non-centrosymétrique.

**54.** Procédé pour la production d'un cristal optique non-linéaire organique multicouche selon la revendication 44, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe essentiellement constituée d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**55.** Procédé pour la production d'un cristal optique non-linéaire organique multicouche selon la revendication 44, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe ayant un gradient d'indice de réfraction.

**56.** Procédé pour la production d'un cristal optique non-linéaire organique multicouche selon la revendication 44, dans lequel une couche au moins de ladite couche monocristalline organique non-centrosymétrique arbitraire comportant une surface cristalline optiquement régulière et de ladite couche monocristalline organique non-centrosymétrique formée sur ladite surface cristalline optiquement régulière formée par la croissance cristalline est une couche monocristalline organique non-centrosymétrique mixte isomorphe ayant un gradient d'indice de réfraction est essentiellement constitué d'une pluralité de composé choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**57.** Procédé pour la production d'un cristal optique non-linéaire organique multicouche selon la revendication 24 comprenant une étape consistant à graver l'une desdites couches monocristallines organiques non-centrosymétriques après formation d'un masque de gravure sur leurs surfaces.

**58.** Procédé pour la production d'un cristal optique non-linéaire organique multicouche selon la revendication 57, dans lequel ledit masque de gravure est formé par gravure en utilisant une onde électromagnétique active.

**59.** Procédé pour la production d'un cristal optique non-linéaire organique multicouche selon la revendication 57, dans lequel ledit masque de gravure est une couche de résine photosensible.

**60.** Procédé pour la production d'un cristal optique non-linéaire organique multicouche selon la revendication 57, dans lequel ladite étape de gravure est une attaque à l'acide utilisant un solvant qui dissout la couche monocristalline.

**61.** Procédé pour la production d'un cristal optique non-linéaire organique multicouche selon la revendication 57, dans lequel ladite gravure est une attaque à sec par laquelle la couche monocristalline organique non-centrosymétrique qui doit être gravée est éliminée sous forme de gaz volatile.

**62.** Procédé pour la production d'un cristal optique non-linéaire organique multicouche selon la revendication 61, dans lequel ladite gravure est une gravure par ions réactifs utilisant un gaz mixte contenant un hydrocarbure halogéné et/ou un halogénure de carbone et de l'oxygène.

**63.** Procédé pour la production d'un cristal optique non-linéaire organique multicouche selon la revendication 57, dans lequel ladite couche monocristalline organique non-centrosymétrique arbitraire comportant une surface cristalline optiquement régulière et ladite couche monocristalline organique non-centrosymétrique qui doit être gravée forment le même genre de monocristal organique non-centrosymétrique.

**64.** Procédé pour la production d'un cristal optique non-linéaire organique multicouche selon la revendication 57, dans lequel le composé constituant ladite couche monocristalline organique non-centrosymétrique arbitraire comportant une surface cristalline optiquement régulière et le composé constituant la couche monocristalline organique non-centrosymétrique qui doit être gravée sont choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**65.** Procédé pour la production d'un cristal optique non-linéaire organique multicouche selon la revendication 57, dans lequel le composé constituant ladite couche monocristalline organique non-centrosymétrique qui doit être gravée est une couche monocristalline organique non-centrosymétrique mixte isomorphe qui est essentiellement constituée d'une pluralité de composés qui forment le même genre de couche monocristalline organique non-centrosymétrique que ladite couche monocristalline organique non-centrosymétrique arbitraire présentant une surface cristalline optiquement régulière.

**66.** Procédé pour la production d'un cristal optique non-linéaire organique multicouche selon la revendication 57, dans lequel le composé constituant ladite couche monocristalline organique non-centrosymétrique qui doit être gravée est une couche monocristalline organique non-centrosymétrique isomorphe qui est essentiellement constituée d'une pluralité de composés choisis dans le groupe qui est constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**67.** Procédé pour la production d'un cristal optique non-linéaire organique multicouche selon la revendication 57, dans lequel ladite couche monocristalline organique non-centrosymétrique qui doit être gravée est une couche monocristalline organique non-centrosymétrique mixte isomorphe présentant un gradient d'indice de réfraction.

**68.** Procédé pour la production d'un cristal optique non-linéaire organique multicouche selon la revendication 57, dans lequel ladite couche monocristalline organique non-centrosymétrique qui doit être gravée est une couche monocristalline organique non-centrosymétrique mixte isomorphe présentant un gradient d'indice de réfraction qui est essentiellement constitué d'une pluralité de composés choisis dans le groupe constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**69.** Procédé pour la production d'un cristal optique non-linéaire organique multicouche selon la revendication 24, dans lequel la formation d'au moins une couche monocristalline organique non-centrosymétrique est effectuée par croissance cristalline simultanée d'une pluralité de composés formant un cristal mixte isomorphe.

**70.** Procédé pour la production d'un cristal optique non-linéaire organique multicouche selon la revendication 69, dans lequel ladite pluralité de composés formant ledit cristal mixte isomorphe sont choisis dans le groupe qui est constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 28 et des composés qui sont les mêmes que lesdits composés à l'exception qu'une partie au moins des atomes d'hydrogène est substituée par des atomes de deutérium.

**71.** Procédé pour la production d'un cristal optique non-linéaire organique multicouche selon la revendication 69, dans lequel la croissance cristalline simultanée est effectuée par un procédé dans lequel l'épaisseur du cristal pendant la croissance cristalline est surveillée.

**72.** Procédé pour la production d'un cristal optique non-linéaire organique multicouche selon la revendication 69, dans lequel ladite croissance cristalline simultanée est effectuée par un procédé en phase vapeur.

**73.** Procédé pour la production d'un cristal optique non-linéaire organique multicouche selon la revendication 69, dans lequel ladite pluralité de composés utilisés pour ladite croissance cristalline simultanée sont mis à évaporer individuellement à partir d'une source d'évaporation individuelle.

**74.** Procédé pour la production d'un cristal optique non-linéaire organique multicouche selon la revendication 73, dans

lequel les vitesses de dépôt de ladite pluralité de composés individuellement évaporés à partir de la source d'évaporation individuelle sont individuellement contrôlés.

**75.** Procédé pour la production d'un cristal optique non-linéaire organique multicouche selon la revendication 72, dans lequel au moins deux composés de ladite pluralité des composés utilisés pour ladite croissance cristalline simultanée sont évaporés à partir de la même source d'évaporation.

**76.** Procédé pour la production d'un cristal optique non-linéaire organique multicouche selon la revendication 69, dans lequel la formation d'au moins une couche monocristalline mixte isomorphe par la croissance cristalline simultanée de ladite pluralité des composés est effectuée après la formation d'un masque de gravure sur la surface cristalline sur laquelle ladite couche monocristalline est mise à croître.

**77.** Procédé pour la production d'un cristal optique non-linéaire organique multicouche selon la revendication 76, dans lequel ledit masque de gravure est formé par gravure utilisant une onde électromagnétique active.

**78.** Procédé pour la production d'un cristal optique non-linéaire organique multicouche selon la revendication 77, dans lequel ledit masque de gravure est une couche de résine photosensible.

**79.** Procédé pour la production d'un cristal optique non-linéaire organique multicouche selon la revendication 69, dans lequel ladite croissance cristalline simultanée est effectuée par un procédé de mise en solution.

**80.** Procédé pour la production d'un cristal optique non-linéaire organique multicouche selon la revendication 69, dans lequel ladite croissance cristalline simultanée est effectuée par un procédé de fusion.

**81.** Dispositif optique non-linéaire du second ordre comprenant un cristal optique non-linéaire organique multicouche selon l'une quelconque des revendications 1 à 63.

**82.** Dispositif optique non-linéaire du second ordre selon la revendication 81, dans lequel au moins une couche desdites au moins deux couches monocristallines organiques non-centrosymétriques se contactant optiquement l'une l'autre est une couche monocristalline organique non-centrosymétrique mixte isomorphe présentant un gradient d'indice de réfraction.

**83.** Dispositif optique non-linéaire du second ordre selon la revendication 81, dans lequel au moins une couche de ladite au moins une couche monocristalline organique non-centrosymétrique présentant une surface cristalline optiquement régulière est une couche monocristalline organique non-centrosymétrique mixte isomorphe présentant un gradient d'indice de réfraction.

**84.** Dispositif optique non-linéaire du second ordre selon la revendication 81, dans lequel au moins une couche desdites au moins deux couches monocristallines organiques non-centrosymétriques se contactant optiquement l'une l'autre est une couche monocristalline organique non-centrosymétrique mixte isomorphe présentant un gradient d'indice de réfraction, laquelle couche est essentiellement constituée d'une pluralité de composés choisis dans le groupe qui est constitué de la 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins des atomes d'hydrogène est substituée par des atomes de deutérium.

**85.** Dispositif optique non-linéaire du second ordre selon la revendication 81, dans lequel au moins une couche de ladite au moins une couche monocristalline organique non-centrosymétrique présentant une surface cristalline optiquement régulière est une couche monocristalline organique non-centrosymétrique mixte isomorphe présentant un gradient d'indice de réfraction, laquelle couche est constituée essentiellement d'une pluralité de composés choisis dans le groupe qui est constitué de 4'-nitrobenzilidène-3-acylamino-4-méthoxyaniline, la 4'-nitrobenzilidène-3-halogénoacylamino-4-méthoxianiline qui sont représentés par la formule telle que définie à la revendication 5 et des composés qui sont les mêmes que lesdits composés à l'exception qu'une partie au moins des atomes d'hydrogène est substituée par des atomes de deutérium.

**86.** Dispositif optique non-linéaire du second ordre selon la revendication 81, dans lequel ladite surface cristalline optiquement régulière de ladite au moins une couche monocristalline organique non-centrosymétrique dans lesdites couches monocristallines organiques non-centrosymétriques constituant ledit cristal optique non-linéaire organique multicouche est une surface pour injecter ou propager une lumière ayant une composante principale de l'onde optique avec une polarisation dans un plan ac d'au moins une couche monocristalline.

**87.** Dispositif optique non-linéaire du second ordre selon la revendication 81, dans lequel ladite surface cristalline optiquement régulière de ladite au moins une couche monocristalline organique non-centrosymétrique dans lesdites couches monocristallines organiques non-centrosymétriques constituant ledit cristal optique non-linéaire organique multicouche est une surface pour injecter ou propager une lumière ayant une composante principale de l'onde optique avec une polarisation suivant l'axe d'absorption dans la longueur d'onde la plus longue dans le plan ac d'au moins une seule couche monocristalline.

**88.** Dispositif optique non-linéaire du second ordre selon la revendication 81, dans lequel ladite surface cristalline optiquement régulière de ladite au moins une couche monocristalline organique non-centrosymétrique dans lesdites couches monocristallines organiques non-centrosymétriques constituant ledit cristal optique non-linéaire organique multicouche est une surface pour injecter ou propager une lumière ayant une composante principale de l'onde optique avec une polarisation suivant les directions décalées de 45° par rapport à l'axe d'absorption dans la longueur d'onde la plus longue dans un plan ac d'au moins une couche monocristalline.

**89.** Dispositif optique non-linéaire du second ordre selon la revendication 81, qui comporte au moins une paire d'électrodes pour appliquer un champ électrique ayant une composante importante dans un plan ac d'au moins une couche monocristalline organique non-centrosymétrique constituant ledit cristal optique non-linéaire organique multicouche.

**90.** Dispositif optique non-linéaire du second ordre selon la revendication 81, qui comporte au moins une paire d'électrodes pour appliquer un champ électrique présentant une composante importante suivant l'axe d'absorption dans la longueur d'onde la plus longue dans un plan ac d'au moins une couche monocristalline.

**91.** Dispositif optique non-linéaire du second ordre selon la revendication 81, qui comporte au moins une paire d'électrodes formées sur une surface cristalline pratiquement parallèle à un plan ac d'au moins une couche monocristalline organique non-centrosymétrique constituant ledit cristal optique non-linéaire organique multicouche.

**92.** Dispositif optique non-linéaire du second ordre selon la revendication 81, qui comporte au moins une paire d'électrodes formées sur une surface cristalline pratiquement perpendiculaire à l'axe d'absorption dans la longueur d'onde la plus longue dans un plan ac d'au moins une couche monocristalline constituant ledit cristal optique non-linéaire organique multicouche.

**93.** Dispositif optique non-linéaire du second ordre selon la revendication 81, qui comporte au moins une paire d'électrodes formées sur deux surfaces cristallines pratiquement perpendiculaires à l'axe d'absorption dans la longueur d'onde la plus longue dans un plan ac d'au moins une couche monocristalline constituant ledit cristal optique non-linéaire organique multicouche.

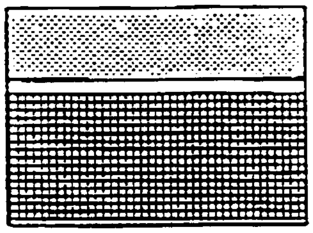

Fig.1 (a)

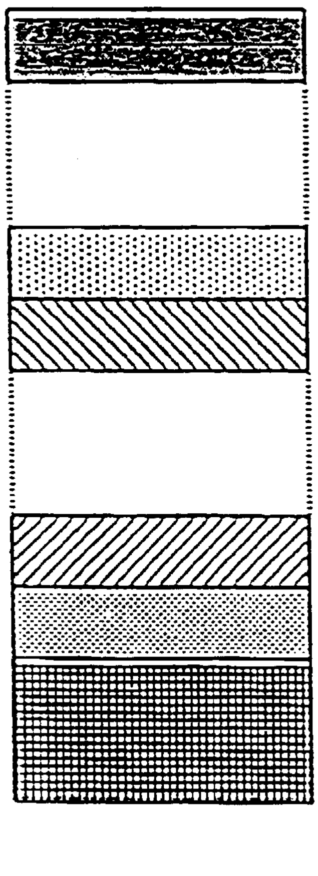

Fig.1 (b)

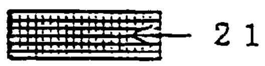

Fig.2

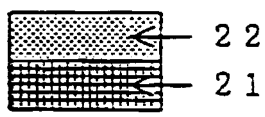

Fig.3

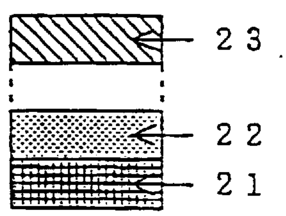

Fig.4

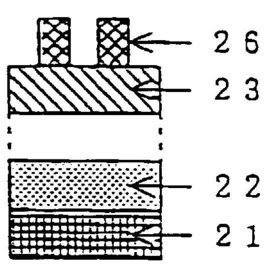

Fig.5

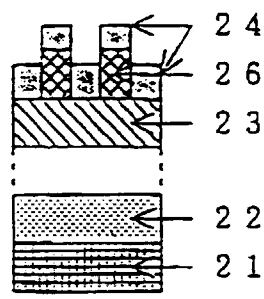

Fig.6

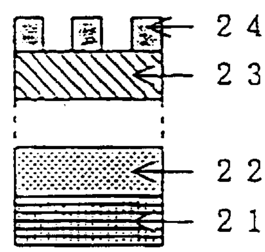

Fig.7

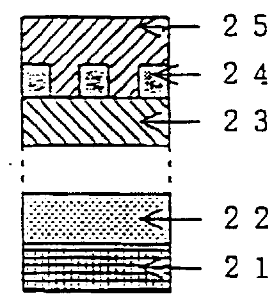

Fig.8

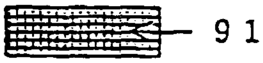


Fig.9

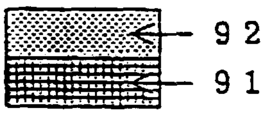


Fig.10

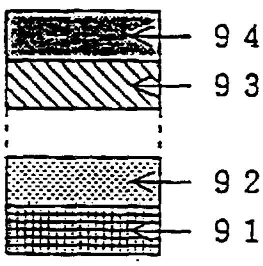


Fig.11

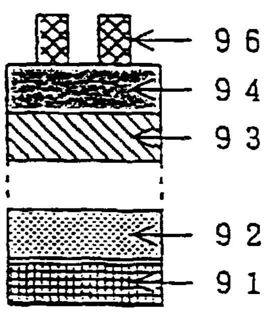


Fig.12

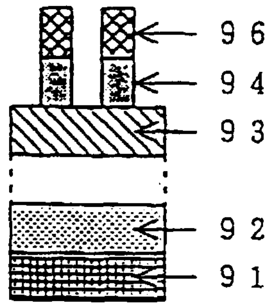


Fig.13

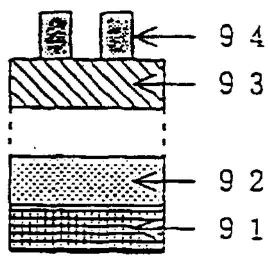


Fig.14

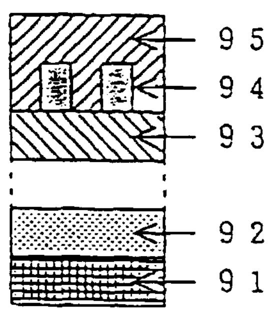


Fig.15

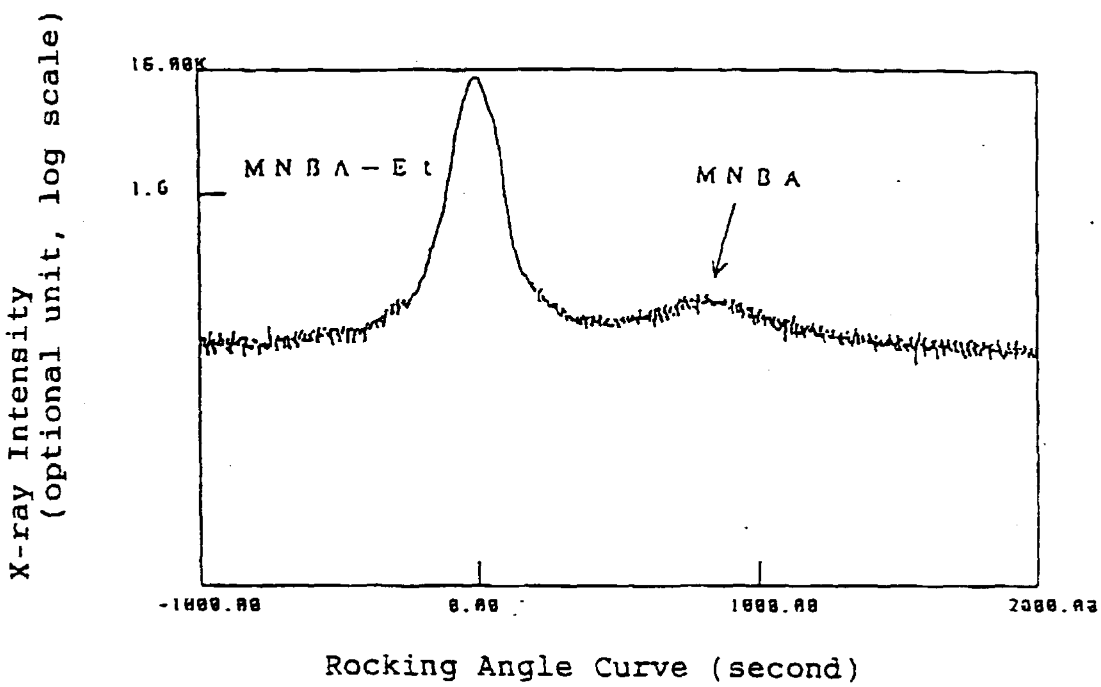

X-ray Intensity (optional unit, log scale)
16.00K
1.6
MNBA-Et
MNBA
-1000.00
0.00
1000.00
2000.00
Rocking Angle Curve (second)


Fig.16

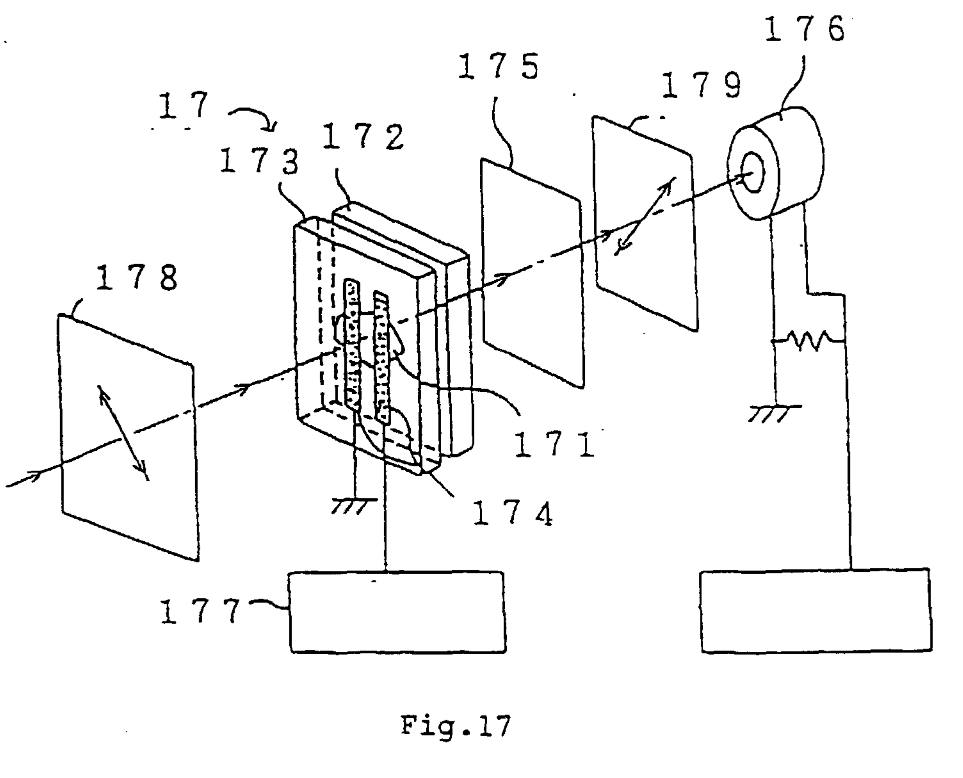

176
175
179
17
172
173
178
171
174
177


Fig.17

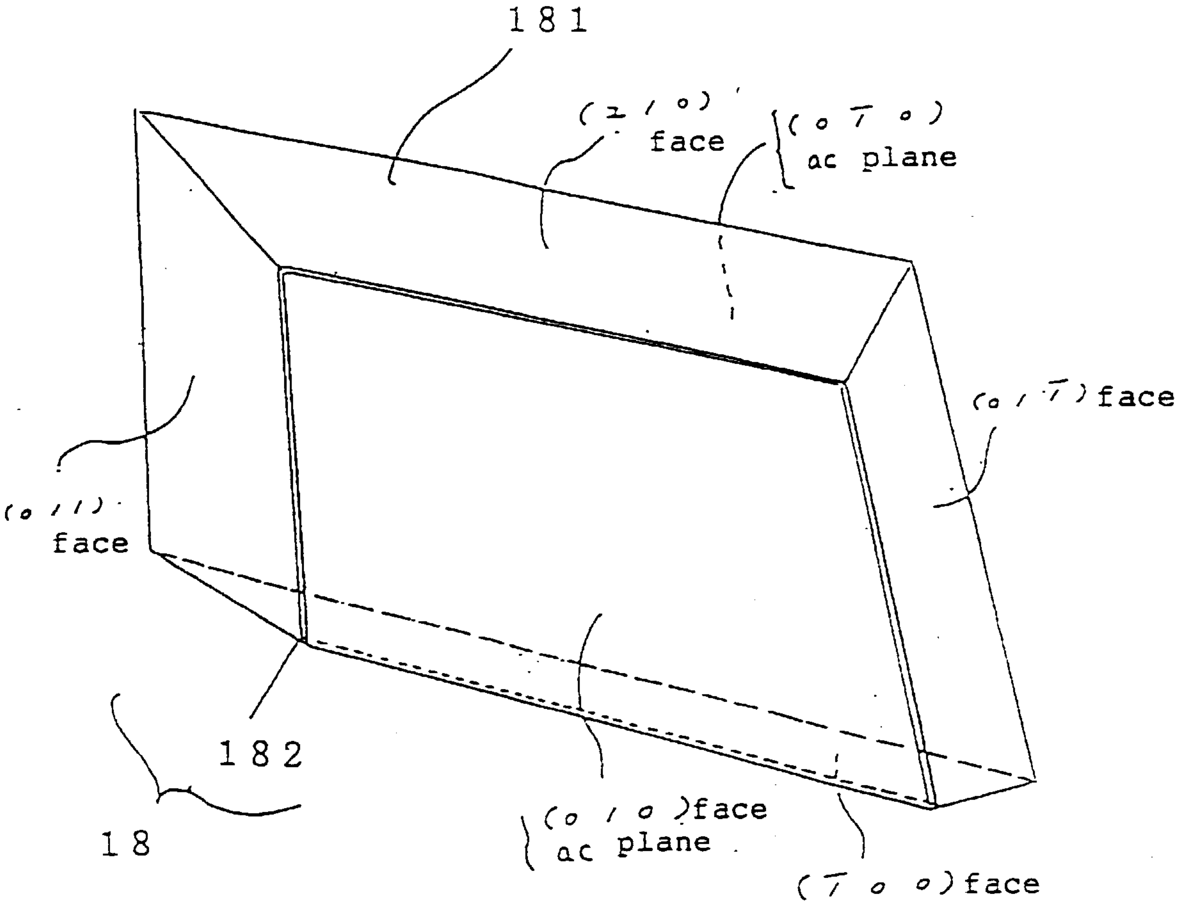

181
face
ac plane
(0 1 1̄) face
(0 1 1) face
182
18
(0 1 0) face
ac plane
(1̄ 0 0) face


Fig.18

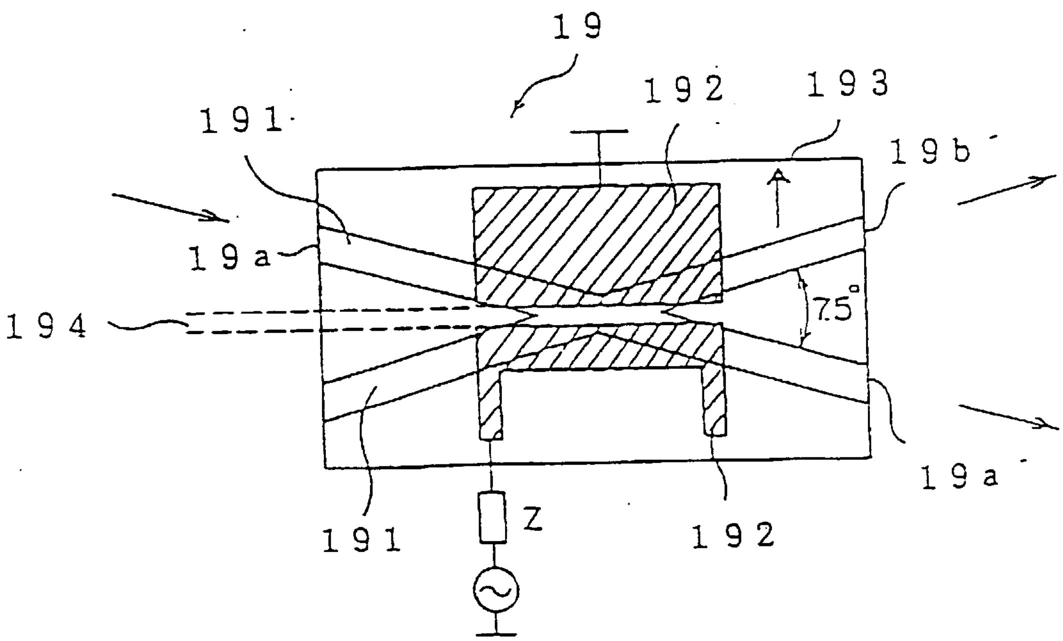

19
192
193
191
19b
19a
194
7.5°
191
Z
192
19a


Fig.19

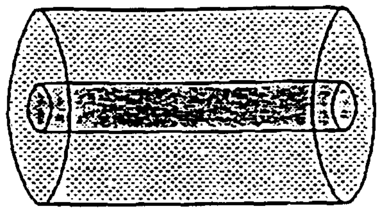

Fig.20

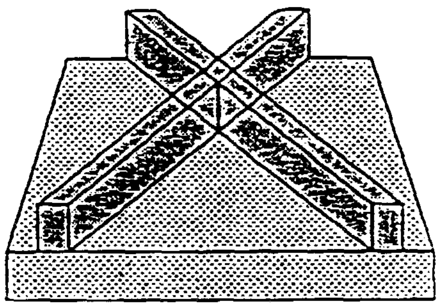

Fig.21

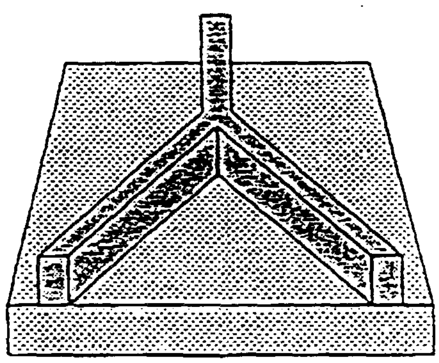

Fig.22